(19) Europäisches Patentamt
European Patent Office
Office européen des brevets

(11) EP 3 753 971 B1

(12) **EUROPÄISCHE PATENTSCHRIFT**

(45) Veröffentlichungstag und Bekanntmachung des Hinweises auf die Patenterteilung:
**27.11.2024 Patentblatt 2024/48**

(21) Anmeldenummer: **20177979.0**

(22) Anmeldetag: **03.06.2020**

(51) Internationale Patentklassifikation (IPC):
***C08G 69/30*** *(2006.01)* ***C11D 3/37*** *(2006.01)*

(52) Gemeinsame Patentklassifikation (CPC):
**C08G 69/30; C11D 3/3719**

(54) **POLYMERE FÜR DIE BEHANDLUNG VON OBERFLÄCHEN**

POLYMERS FOR THE TREATMENT OF SURFACES

POLYMÈRES DESTINÉS AU TRAITEMENT DES SURFACES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2019 DE 102019208832**

(43) Veröffentlichungstag der Anmeldung:
**23.12.2020 Patentblatt 2020/52**

(73) Patentinhaber: **Henkel AG & Co. KGaA**
**40589 Düsseldorf (DE)**

(72) Erfinder:
- **Wedler, Nils**
  **63322 Rödermark (DE)**
- **Kropf, Christian**
  **40724 Hilden (DE)**
- **Hartmann, Laura**
  **40597 Düsseldorf (DE)**
- **Schmidt, Stefan**
  **40597 Düsseldorf (DE)**
- **Fischer, Lukas**
  **40233 Düsseldorf (DE)**
- **Strzelczyk, Alexander**
  **40229 Düsseldorf (DE)**

(56) Entgegenhaltungen:
**DE-A1- 102016 223 586**

- **SAAD MOULAY: "Dopa/Catechol-Tethered Polymers: Bioadhesives and Biomimetic Adhesive Materials", POLYMER REVIEWS, VOL. 54, ISSUE 3, 5 May 2014 (2014-05-05), pages 436 - 513, XP055383975, Retrieved from the Internet <URL:http://www.tandfonline.com/doi/pdf/10.1080/15583724.2014.881373?needAccess=true> [retrieved on 20170622], DOI: 10.1080/15583724.2014.881373**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 753 971 B1

**Beschreibung**

Die Erfindung betrifft Polymere, die in ihrer Molekülstruktur mindestens eine Wiederholungseinheit mit Catecholfunktionalisierung und mindestens eine davon verschiedene Wiederholungseinheit mit $NH_2$- oder Ammoniumfunktionalisierung umfassen, wobei das Molverhältnis besagter Einheiten im Bereich von 0.5 zu 1 bis 4 zu 1, bevorzugt 1 zu 1 bis 2 zu 1, liegt. Diese Polymere eignen sich zur Einarbeitung in ein Oberflächenbehandlungsmittel, wie z.B. ein Wasch- oder Reinigungsmittel und führen zur Adhäsion an Oberflächen, insbesondere an Oberflächen von Textilien oder Oberflächen von Metall-, Glas-, Keramik- oder Kunststoffgegenständen.

Zur Gewährleitung von Sauberkeit und Hygiene müssen Oberflächen, insbesondere textile Oberflächen (wie Gewebe, Kleidung) oder Haushaltsoberflächen (wie Metall-, Glas-, Keramik- oder Kunststoffoberflächen) gereinigt werden. Der Reinigungsprozess muss effektiv sein und die gereinigte Oberfläche des Textils oder des Haushaltsgegenstandes nach der Reinigung ein makelloses Erscheinungsbild aufweisen.

Um die Reinigungsleistung eines Reinigungsprozesses zu erhöhen, sollte die während des Reinigungsvorganges mögliche Wiederanlagerung von Schmutz aus der Reinigungs- oder Waschflüssigkeit an die Oberfläche des zu reinigenden Substrates vermieden werden. Für ein makelloses Erscheinungsbild einer sauberen Oberfläche sollte auch die oft an harten Oberflächen nach der Trocknung beobachtete Fleck- oder Schlierenbildung verhindert oder reduziert werden. Daher war es eine Aufgabe der vorliegenden Erfindung, die Wiederanschmutzung der Oberfläche während des Waschvorgangs aber auch nach dem Waschvorgang bei üblichem Gebrauch des Textils oder des Haushaltsgegenstandes zu verringern.

Es war bereits vorher bekannt, dass beispielsweise die an Oberflächen auftretende Wiederanlagerung von Schmutz, sowie die Fleck- oder Schlierenbildung an harten Oberflächen durch den Einsatz spezieller Polymere reduziert werden kann. Der Artikel Dopa/Catechol-Tethered Polymers: Bioadhesives and Biomimetic Adhesive Materials in der Fachzeitschrift Polymer Reviews, vol. 54, issue 3, 5. Mai 2014 (2014-05-05), Seiten 436-513 bezieht sich beispielsweise auf Bioklebstoffe und biomimetische Haftstoffe enthaltend Dopa/Catechol-Einheiten sowie auf die Behandlung von Oberflächen.

Die herkömmlichen Polymere müssen für diesen Zweck in einer signifikanten Menge in die Wasch- oder Reinigungsmittel eingearbeitet werden, damit ein spürbarer Effekt auftritt. Effizientere Polymere sind wünschenswert, die bereits bei reduzierter Einsatzmenge gute Effekte zeigen.

Eine Aufgabe der vorliegenden Erfindung war es ebenso, Polymere bereitzustellen, welche die bei der Oberflächenreinigung auftretenden Nachteile effizienter verringern oder verhindern.

Es wurde nun gefunden, dass die nachfolgend definierten, erfindungsgemäßen Polymere die zuvor genannte Aufgabe lösen und zusätzlich in der Lage sind, in verbessertem Maße aus der wässrigen Reinigungs- bzw. Waschflotte an eine Substratoberfläche, insbesondere an textile Oberflächen oder Haushaltsoberflächen, zu adsorbieren. Dadurch wirken diese Polymere besonders effizient und die Einsatzmenge der Polymere kann niedrig gehalten werden.

Ein erster Gegenstand der Erfindung ist daher ein Polymer, enthaltend mindestens eine Wiederholungseinheit der Formel (I) und mindestens eine Wiederholungseinheit der Formel (II) und gegebenenfalls weitere Wiederholungseinheiten,

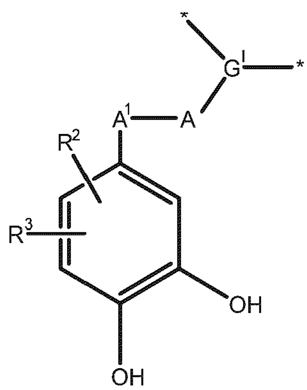
(I)

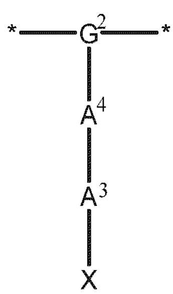
(II)

worin G1 und G2 unabhängig voneinander eine zum Polymerruckgrat beitragende Struktureinheit bedeuten,
$G^1$ die Formel *-(C=O)-Z-(C=O)-NR'-$CH_2CH_2$-(N-Rest)-$CH_2CH_2$-NR'-* aufweist, wobei jedes
R' unabhängig für H oder $C_1$-$C_4$-Alkyl, Z für eine $C_2$-$C_8$-Alkandiylgruppe, bevorzugt für Ethan-1,2-diyl, steht und "Rest" für den über A/A1 gebundenen Dihydroxyphenylrest gemäß Formel (I) steht, $G^2$ die Formel *-(C=O)-$Z^1$-(C=O)-NR'-$CH_2CH_2$-(N-Rest)-$CH_2CH_2$-NR'-* aufweist, wobei jedes
R' unabhängig für H oder $C_1$-$C_4$-Alkyl, Z für eine $C_2$-$C_8$-Alkandiylgruppe, bevorzugt für Ethan-1,2-diyl, steht und

"Rest" für-$A^4$-$A^3$-X steht,

A und $A^4$ unabhängig voneinander eine Spacergruppe einer Seitenkette des Polymers oder eine direkte Bindung bedeuten,

$A^1$ eine Anknüpfungsgruppe des Catecholrestes aus Formel (I) an die Spacergruppe A oder eine direkte Bindung bedeutet

$A^3$ eine Anknüpfungsgruppe der Gruppe X an die Spacergruppe $A^4$ oder eine direkte Bindung bedeutet,

$R^2$ und $R^3$ unabhängig voneinander stehen für ein Wasserstoffatom, eine $C_1$-$C_4$-Alkylgruppe, eine $C_2$-$C_4$-Hydroxyalkylgruppe, eine $C_1$-$C_4$-Alkoxygruppe, ein Halogenatom, eine Sulfonsäuregruppe, eine $C_1$-$C_{10}$-Alkylcarbonyloxy-Gruppe, eine $C_1$-$C_{10}$-Alkoxycarbonylgruppe, eine $C_6$-$C_{10}$-Aryloxycarbonyl-Gruppe, eine $C_6$-$C_{10}$-Arylcarbonyloxy-Gruppe, $C_2$-$C_{10}$-Alkenylcarbonyloxy-Gruppe, eine $C_2$-$C_{10}$-Alkenyloxycarbonylgruppe, eine Hydroxylgruppe, eine Aminogruppe, eine Ammoniumgruppe, X für eine Aminogruppe -N($R^5$)($R^6$) oder eine Ammonio-Gruppe -$N^+$($R^5$)($R^6$)($R^7$) 1/n $An^{n-}$ steht, worin $R^5$, $R^6$ und $R^7$ jeweils unabhängig voneinander für ein Wasserstoffatom, eine $C_1$-$C_4$-Alkylgruppe oder eine $C_2$-$C_4$-Hydroxyalkylgruppe stehen und 1/n $An^{n-}$ ein Äquivalent eines n-wertigen Anions, bevorzugt mit n = 1 bedeuten,

mit der Maßgabe, dass die Wiederholungseinheiten der Formel (II) von den Wiederholungseinheiten der Formel (I) verschieden sind und das Molverhältnis der Einheiten der Formel (I) zu den Einheiten der Formel (II) im Bereich von 0.5 zu 1 bis 4 zu 1, bevorzugt 1 zu 1 bis 2 zu 1, beträgt.

Es kann in verschiedenen Ausführungsformen bevorzugt sein, dass A und $A^1$ nicht beide eine direkte Bindung bedeuten. Ebenso kann es in verschiedenen Ausführungsformen bevorzugt sein, dass $A^4$ und $A^3$ nicht beide eine direkte Bindung bedeuten. Dies bedeutet, dass jeweils mindestens einer von A und $A^1$ bzw. einer von $A^4$ und $A^3$ einer Spacergruppe darstellen.

Eine in einer Strukturformel einer Wiederholungseinheit mit einem * gekennzeichnete chemische Bindung repräsentiert eine Valenz, die als kovalente Bindung ein Teil des Polymerrückgrats ist.

Die Wiederholungseinheiten der Formel (II) sind von den Wiederholungseinheiten der Formel (I) verschieden. Insbesondere enthalten die Wiederholungseinheiten der Formel (II) daher keine 1,2-Dihydroxyphenylgruppe, die am Phenylring zusätzlich substituiert sein kann.

Das Polymerrückgrat ist eine kontinuierliche Reihe kovalent gebundener Atome, die die eigentliche Molekülkette als "Rückgrat" eines Polymers bilden. Nicht zum Polymerrückgrat gehören die Molekülteile, die nicht diese eigentliche Kette bilden, sondern lediglich an diese gebunden sind.

In den Formeln (I) und (II) kennzeichnen die Reste $G^1$ und $G^2$ jeweils eine zum Polymerrückgrat beitragende Struktureinheit. Das bedeutet, dass die Reste $G^1$ und $G^2$ jeweils das für die entsprechende Wiederholungseinheit verantwortliche Strukturfragment repräsentieren, welches den kompletten Beitrag der Wiederholungseinheit zu den das Polymerrückgrat konstituierenden Atomen leistet und darüber hinaus weitere Reste tragen kann.

$G^1$ der Formel (I) enthält obiger Definition folgend selbstverständlich neben dem Beitrag der das Polymerrückgrat konstituierenden Atome weitere, daran gebundene Seitenketten oder Atome. Ausführungsformen von $G^1$ werden unten definiert.

$G^2$ der Formel (II) enthält obiger Definition folgend selbstverständlich neben dem Beitrag der das Polymerrückgrat konstituierenden Atome weitere, daran gebundene Seitenketten oder Atome. Ausführungsformen von $G^2$ werden unten definiert.

Eine Spacergruppe ist ein Strukturfragment einer Seitenkette eines Polymers, das die Endgruppe der Seitenkette (auch: Seitenketten-Terminus) mit dem Polymerrückgrat verbrückt.

Bevorzugt geeignet sind Polymere, die sich dadurch kennzeichnen, dass A gemäß Formel (I) für eine Carbonylgruppe, für eine Carbonyloxygruppe, für eine Carbonyliminogruppe, für eine Iminogruppe, für eine $C_1$-$C_4$-Alkylenoxygruppe, für eine $C_1$-$C_4$-Alkyleniminogruppe steht. In verschiedenen Ausführungsformen steht A gemäß Formel (I) für eine Carbonylgruppe.

Als Wiederholungseinheit der Formel (II) erwiesen sich solche als bevorzugt, in denen $A^4$ gemäß Formel (II) für eine Carbonylgruppe, für eine Carbonyloxygruppe, für eine Carbonyliminogruppe, für eine Iminogruppe, für eine $C_1$-$C_4$-Alkylenoxygruppe, für eine $C_1$-$C_4$-Alkyleniminogruppe, für eine $C_1$-$C_4$-Alkyleniminocarbonylgruppe, $C_2$-$C_6$-$\alpha,\omega$-(Dioxo)alkan- $\alpha,\omega$-diylgruppe steht. In verschiedenen Ausführungsformen steht $A^4$ gemäß Formel (II) für eine Carbonylgruppe.

Eine Anknüpfungsgruppe ist ein Strukturfragment, das in einer Seitenkette der Wiederholungseinheit eines Polymers eine Spacergruppe mit dem Seitenketten-Terminus (z.B. 1,2-Dihydroxyphenylrest der Formel (I) oder X der Formel (II)) verknüpft.

Bevorzugte erfindungsgemäße Polymere sind dadurch gekennzeichnet, dass $A^1$ gemäß Formel (I) für eine direkte Bindung, für eine $C_1$-$C_4$-Alkandiylgruppe, eine $C_1$-$C_4$-Alkylenoxycarbonylgruppe steht. Besonders bevorzugt ist $A^1$ gemäß Formel (I) eine $C_1$-$C_4$-Alkandiylgruppe, insbesondere wenn A eine Carbonylgruppe ist. Besonders bevorzugt enthalten diese Polymere die bevorzugte Spacergruppe A gemäß Formel (I).

Bevorzugte erfindungsgemäße Polymere sind dadurch gekennzeichnet, dass $A^3$ gemäß Formel (II) für eine direkte Bindung, eine $C_1$-$C_6$-Alkandiylgruppe, eine $C_2$-$C_6$-$\alpha,\omega$-(Dioxo)alkan- $\alpha,\omega$-diylgruppe steht. Besonders bevorzugt ist $A^3$ gemäß Formel (II) eine $C_1$-$C_6$-Alkandiylgruppe, insbesondere wenn $A^4$ eine Carbonylgruppe ist. Besonders bevorzugt enthalten diese Polymere die bevorzugte Spacerguppe $A^4$ gemäß Formel (II).

Unsymmetrische bivalente Gruppen, insbesondere solche der Reste A, $A^1$, $A^3$, $A^4$ und $A^5$, lassen sich in die erfindungsgemäßen Strukturen der Wiederholungseinheiten der Formeln (I) und (II) des erfindungsgemäßen Polymeres (sowie deren bevorzugten Ausführungsformen) entsprechend beider durch Rotation erhältlichen Möglichkeiten einfügen (z.B. Ethylenoxy als $-OCH_2CH_2-$ oder als -CHzCHzO-). Dabei ist es bevorzugt, wenn die kovalente Verknüpfung zweier Atome, die von Kohlenstoff verschieden sind, z.B. die Bildung einer Peroxygruppe (-O-O-), vermieden wird.

Eine Carbonyliminogruppe ist bekanntermaßen eine bivalente Gruppe

-C-NH-
||
O

Eine Iminogruppe ist bekanntermaßen eine bivalente Gruppe -NH-

Eine Carbonyloxygruppe ist bekanntermaßen eine bivalente Gruppe

-C-O-
||
O

Bevorzugte $C_1$-$C_4$-Alkylenoxygruppen werden ausgewählt aus Methylenoxy ($-OCH_2-$ oder $-CH_2O-$), Ethylenoxy ($-OCH_2CH_2-$ oder $-CH_2CH_2O-$), Propylenoxy ($-OCH_2CH_2CH_2-$ oder $-OCH_2CHMe-$ oder $-CH_2CH_2CH_2O-$ oder $-CMeHCH_2O-$), Butylenoxy ($-OCH_2CH_2CH_2CH_2-$ oder $-OCH_2CH_2CHMe-$ oder $-OCH_2CHEt-$ oder $-CH_2CH_2CH_2CH_2O-$ oder -CHMeCHzCHzO- oder -CHEt-CHzO-).

Bevorzugte $C_1$-$C_4$-Alkyleniminogruppen werden ausgewählt aus Methylenimino ($-NHCH_2-$ oder $-CH_2NH-$), Ethylenimino ($-NHCH_2CH_2-$ oder $-CH_2CH_2NH-$), Propylenimino ($-NHCH_2CH_2CH_2-$ oder $-NHCH_2CHMe-$ oder $-CH_2CH_2CH_2NH-$ oder $-CHMeCH_2NH-$), Butylenimino ($-NHCH_2CH_2CH_2CH_2-$ oder $-NHCH_2CH_2CHMe-$ oder $-NHCH_2CHEt-$ oder $-CH_2CH_2CH_2CH_2NH-$ oder $-CHMeCH_2CH_2NH-$ oder $-CHEtCH_2CH_2NH-$).

Bevorzugte $C_1$-$C_4$-Alkyleniminocarbonylgruppen werden ausgewählt aus Methyleniminocarbonyl ($-NHCH_2-$ oder $-CH_2NH-$), Ethyleniminocarbonyl ($-CONHCH_2CH_2-$ oder $-CH_2CH_2NHCO-$), Propyleniminocarbonyl ($-CONHCH_2CH_2CH_2-$ oder $-CONHCH_2CHMe-$ oder $-CH_2CH_2CH_2NHCO-$ oder $-CHMeCH_2NHCO-$), Butylenimino ($-CONHCH_2CH_2CH_2CH_2-$ oder $-CONHCH_2CH_2CHMe-$ oder $-CONHCH_2CHEt-$ oder $-CH_2CH_2CH_2CH_2NHCO-$ oder $-CHMeCH_2CH_2NHCO-$ oder $-CHEtCH_2CH_2NHCO-$).

Bevorzugte $C_1$-$C_4$-Alkylgruppen werden ausgewählt aus Methyl, Ethyl, n-Propyl, Isopropyl, n-Butyl, sec-Butyl, iso-Butyl, tert-butyl.

Bevorzugte $C_2$-$C_4$-Hydroxyalkylgruppen werden ausgewählt aus 2-Hydroxyethyl, 3-Hydroxypropyl, 2-Hydroxypropyl, 4-Hydroxybutyl, 3-Hydroxybutyl, 2-Hydroxybutyl.

Bevorzugte $C_1$-$C_4$-Alkoxygruppen werden ausgewählt aus Methoxy, Ethoxy, n-Propoxy, iso-Propoxy, n-Butoxy, sec-Butoxy, iso-Butoxy, tert-Butoxy.

Bevorzugte Halogenatome werden ausgewählt aus Chlor, Brom, Fluor.

Bevorzugte $C_1$-$C_{10}$-Alkylcarbonyloxy-Gruppen werden ausgewählt aus $CH_3$-CO-O-, $CH_3CH_2$CO-O-, $CH_3CH_2CH_2$CO-O-.

Bevorzugte $C_1$-$C_{10}$-Alkoxycarbonylgruppen werden ausgewählt aus Methoxycarbonyl, Ethoxycarbonyl, n-Propoxycarbonyl, iso-Propoxycarbonyl, n-Butoxycarbonyl, sec-Butoxycarbonyl, iso-Butoxycarbonyl, tert-Butoxycarbonyl, Hexyloxycarbonyl, 2-Ethylhexyloxycarbonyl, Octyloxycarbonyl.

Bevorzugte $C_6$-$C_{10}$-Aryloxycarbonyl-Gruppen werden ausgewählt aus Phenoxycarbonyl, 2-Methylphenoxycarbonyl, 3-Methylphenoxycarbonyl, 4-Methylphenoxycarbonyl.

Bevorzugte $C_6$-$C_{10}$-Arylcarbonyloxy-Gruppen werden ausgewählt aus Phenylcarbonyloxy (auch: Benzoyloxy), 2-Methylphenylcarbonyloxy, 3-Methylphenylcarbonyloxy, 4-Methylphenylcarbonyloxy.

Bevorzugte $C_2$-$C_{10}$-Alkenylcarbonyloxy-Gruppen werden ausgewählt aus $CH_2$=CH-$CH_2$-CO-O-, $CH_2$=CH-CO-O-, $CH_2$=CMe-CO-O-

Eine bevorzugte $C_2$-$C_{10}$-Alkenyloxycarbonylgruppe ist Allyloxycarbonyl oder Vinyloxycarbonyl.

Bevorzugte $C_1$-$C_4$-Alkandiylgruppen werden ausgewählt aus Methylen, Ethan-1,2-diyl, Propan-1,2-diyl, Propan-1,3-diyl, Butan-1,4-diyl, Butan-1,2-diyl, Butan-1,3-diyl.

$C_1$-$C_4$-Alkylenoxycarbonylgruppen sind bivalente Gruppen, die eine freie Valenz an der Alkylenstruktureinheit und eine freie Valenz an der Carbonylgruppe aufweisen. Bevorzugt $C_1$-$C_4$-Alkylenoxycarbonylgruppen werden ausge-

wählt aus Methylenoxycarbonyl (-CHz-O-CO- oder $-CO-O-CH_2-$), Ethylenoxycarbonyl ($-CH_2-CH_2-O-CO-$ oder $-O-CO-CH_2-CH_2-$), Propylenoxycarbonyl ($-CH_2-CH_2-CH_2-O-CO-$ oder $-CO-O-CH_2-CH_2-CH_2-$), Butylenoxycarbonyl (-CHz-CHz-CHz-CHz-O-CO- oder $-CO-O-CH_2-CH_2-CH_2-CH_2-$).

Eine $C_2$-$C_6$-α,ω-(Dioxo)alkan- α,ω-diylgruppe ist eine $C_2$-$C_6$-Alkandiylgruppe, die jeweils am Terminus eine Oxo-Gruppe trägt (i.e.

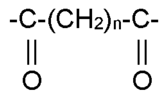

mit n=0 bis 4).

Bevorzugte $C_2$-$C_6$-α,ω-(Dioxo)alkan-α,ω-diylgruppen werden ausgewählt aus 1,3-Dioxopropan-1,3-diyl, 1,4-Dioxobutan-1,4-diyl, 1,5-Dioxopentan-1,5-diyl, 1,6-Dioxohexan-1,6-diyl.

Die erfindungsgemäßen Polymere lassen sich durch Polyreaktion aus entsprechend Catecholfunktionalisierten Monomeren bzw. entsprechend X-$A^3$-$A^4$-funktionalisierten Monomeren aufbauen, oder sind durch polymeranaloge Reaktion mit einem Polymer und einem Catechol-haltigem bzw. einem Gruppe X-haltigen Reagenz als Edukt erhältlich. Es ist erfindungsgemäß bevorzugt, wenn $G^1$ gemäß Formel (I) und $G^2$ gemäß Formel (II) zu einem Polymerrückgrat beitragen, das ausgewählt wird aus einem Polymerrückgrat, erhältlich durch Polyaddition, Polykondensation oder durch radikalische Polymerisation.

Als besonders erfolgreiche und daher bevorzugte Polymere stellten sich solche Polymere heraus, bei denen die Menge der Einheiten der Formel (I) und der Formel (II) mindestens 50 Mol-% in Bezug auf alle im Polymer enthaltenen Wiederholungseinheiten beträgt.

Erfindungsgemäße Polymere, die dadurch gekennzeichnet sind, dass sie ein mittleres Molgewicht (Mw) von 500 bis 500000 g/mol, bevorzugt von 2000 bis 200000 g/mol, aufweisen, sind bevorzugt. Bei den im Rahmen dieser Anmeldung für polymere Inhaltsstoffe angegebenen mittleren Molmassen handelt es sich - sofern nicht explizit anders gekennzeichnet - stets um gewichtsmittlere Molmassen $M_w$, die grundsätzlich mittels Gelpermeationschromatographie mit Hilfe eines RI-Detektors bestimmbar sind, wobei die Messung zweckmäßig gegen einen externen Standard erfolgt.

Werden im Rahmen der Anmeldung Zahlenbereiche von einer Zahl zu einer anderen Zahl definiert, so sind von dem Bereich die Grenzwerte mitumfasst.

Werden im Rahmen der Anmeldung Zahlenbereiche zwischen einer Zahl und einer anderen Zahl definiert, so sind von dem Bereich die Grenzwerte nicht mitumfasst.

Als Wiederholungseinheiten der Formel (I) mit besagtem 1,2-Dihydroxyphenyl-Seitenketten-Terminus eignen sich bevorzugt solche, in denen $R^2$ und $R^3$ in Formel (I) für ein Wasserstoffatom stehen.

Das Polymerrückgrat des erfindungsgemäßen Polymers leitet sich ab von Polyamid. Erfindungsgemäße Polymere auf Polyamidbasis lassen sich bevorzugt unter Anwendung gängiger Schutzgruppen-Chemie (für Aminogruppen z.B.: Triphenylmethyl (Trityl), (((9H-Fluoren-9-yl)methoxy)carbonyl (Fmoc); für phenolische OH z.B.: Methoxy, Ketal) darstellen.

Die Einführung und Entfernung der vorgenannten Schutzgruppen ist dem Fachmann bekannt, insbesondere für Trityl an Aminogruppen aus Hans-Dieter Jakubke, Hans Jeschkeit: Aminosäuren, Peptide, Proteine, Verlag Chemie, Weinheim, S. 130-131, 1982 (ISBN 3-527-25892-2), für Fmoc an Aminogruppen aus E. Atherton, C. Bury, R. C. Sheppard, and B. J. Williams, Tetrahedron Lett., 3041, (1979), für Methoxy an phenolischen Hydroxygruppen aus Kiso, Yoshiaki et al., "Deprotection of O-methyltyrosine by a 'push-pull'mechanism using the thioanisole-trifluoromethanesulphonic acid system. Application to the convenient synthesis of a potent N-methylenkephalin derivative" im Journal of the Chemical Society, Chemical Communications 21 (1979), 971-972, für Ketal and phenolischen Hydroxygruppen aus K. Ogura and G.-i. Tsuchihashi, Tetrahedron Lett., 3151 (1971). Auf die vorgenannten Druckschriften wird ausdrücklich und vollinhaltlich Bezug genommen.

Es hat sich als erfindungsgemäß bevorzugt erwiesen, wenn das erfindungsgemäße Polymer als Wiederholungseinheit der Formel (I) mindestens eine Wiederholungseinheit der Formel (I-a) enthält,

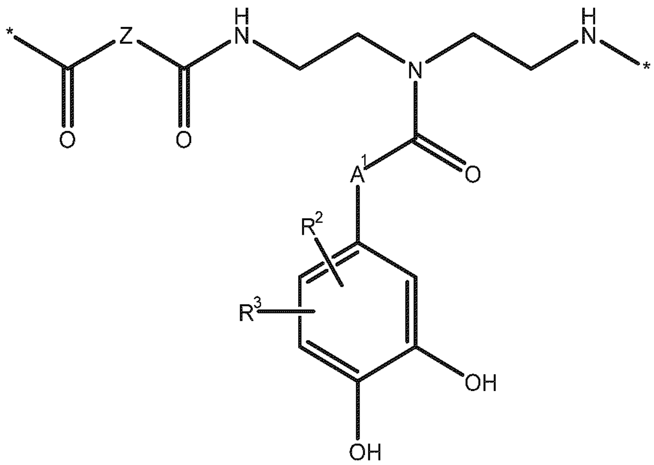

(I-a)

worin

$A^1$ für eine $C_1$-$C_4$-Alkandiylgruppe (bevorzugt für Ethan-1,2-diyl) steht,

Z für eine $C_2$-$C_8$-Alkandiylgruppe (bevorzugt für Ethan-1,2-diyl) steht,

$R^2$ und $R^3$ unabhängig voneinander stehen für ein Wasserstoffatom, eine $C_1$-$C_4$-Alkylgruppe, eine $C_2$-$C_4$-Hydroxyalkylgruppe, eine $C_1$-$C_4$-Alkoxygruppe, ein Halogenatom, eine Sulfonsäuregruppe (bevorzugt jeweils für ein Wasserstoffatom) stehen.

Entsprechende Wiederholungseinheiten der Formel (I-a) leiten sich von Formel (I) ab, in dem A gemäß Formel (I) eine Carbonylgruppe bedeutet, die an die Spacergruppe $A^1$ und an $G^1$ bindet.

In einer besonders bevorzugten Wiederholungseinheit der Formel (I-a) stehen in Formel (I-a) $R^2$ und $R^3$ für ein Wasserstoffatom, $A^1$ und Z für eine Ethan-1,2-diylgruppe. Diese spezielle Wiederholungseinheit wird nachfolgend mit *-(Cat)-* abgekürzt

Die zur Formel (I-a) korrespondierenden Monomere zur Synthese der erfindungsgemäßen Polymere lassen sich durch folgendes Syntheseverfahren herstellen:

(i) Schutz beider primären Aminogruppen eines Diethylentriamins mit Schutzgruppen $S^1$ und $S^2$ die gleich oder verschieden sein können, bevorzugt verschieden, insbesondere für Triphenylmethyl oder (((9H-Fluoren-9-yl)methoxy)carbonyl;

(ii) Funktionalisierung der sekundären Aminogruppe des geschützten Diethylentriamins aus (i) mit einer Verbindung der Formel (E1)

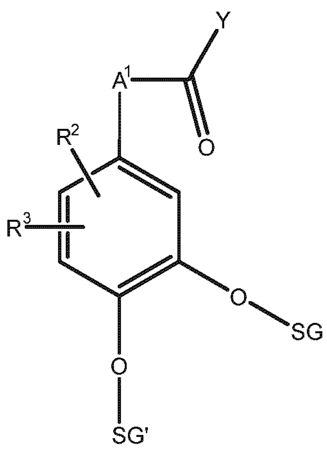

(E1)

worin

$A^1$, $R^2$ und $R^3$ wie in Formel (I-a) definiert sind,
Y steht für ein Chloratom, ein Bromatom, ein Iodatom, eine Hydroxylgruppe,
SG und SG' stehen für eine Schutzgruppe, bevorzugt für Methyl,
unter Erhalt des Umsetzungsproduktes der Formel (U1)

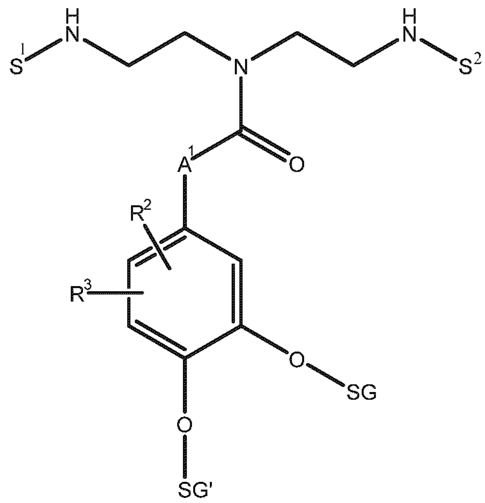

(U1)

worin
$A^1$, $R^2$ und $R^3$ wie in Formel (I-a) definiert sind,
SG und SG' wie in Formel (E1) definiert sind,
$S^1$ und $S^2$ unabhängig voneinander stehen jeweils für eine Schutzgruppe, die gleich oder verschieden sein können, bevorzugt verschieden, insbesondere für Triphenylmethyl oder (((9H-Fluoren-9-yl)methoxy)carbonyl;

(iii) Entfernung einer Schutzgruppe $S^1$ oder $S^2$ aus dem funktionalisierten Diethylentriamin der Formel (U1),

(iv) Umsetzung des entschützten Diethylentriamins aus (iii) mit einer Verbindung der Formel (E2) oder dessen Anhydrid,

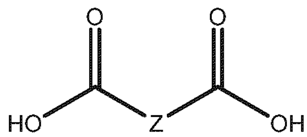

(E2)

worin Z wie in Formel (I-a) definiert ist,
unter Erhalt des Umsetzungsproduktes der Formel (U2)

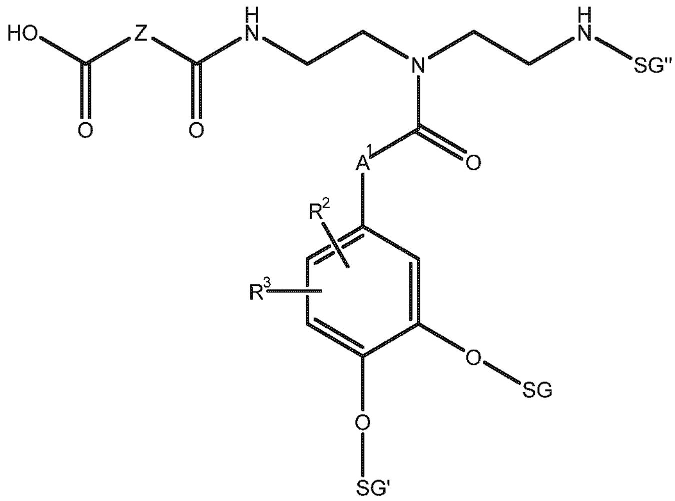

(U2),

worin
$A^1$, $R^2$, $R^3$ und Z wie in Formel (I-a) definiert ist,
SG und SG' wie in Formel (E1) definiert ist,
SG" wie $S^1$ oder $S^2$ gemäß Formel (U1) definiert ist,

(v) Entfernung der Schutzgruppe SG" aus dem Umsetzungsprodukt (U2) unter Erhalt der Verbindung (U3)

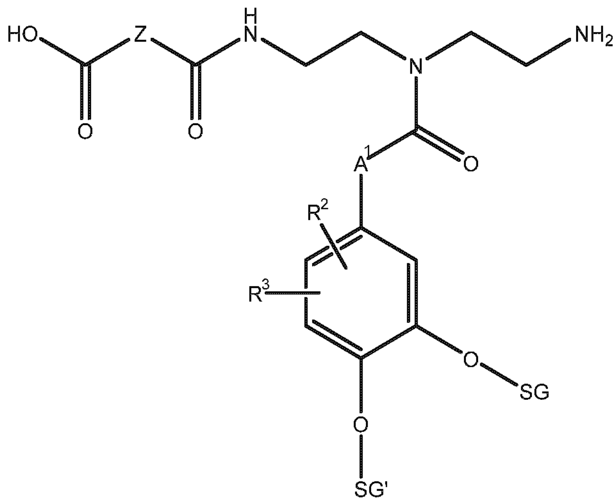

(U3)

worin

$A^1$, $R^2$, $R^3$ und Z wie in Formel (I-a) definiert ist,
SG und SG' wie in Formel (E1) definiert ist.

Sollte der Aufbau des Polymers an einer festen Phase stattfinden, ist es bevorzugt, Umsetzungsprodukt aus (iv) mit der festen Phase zu koppeln und dann Schritt (v) durchzuführen.

Ein Synthesebeispiel der vorgenannten Syntheseroute wird in Fig.1 illustriert und in der Beispielsektion detailliert beschrieben.

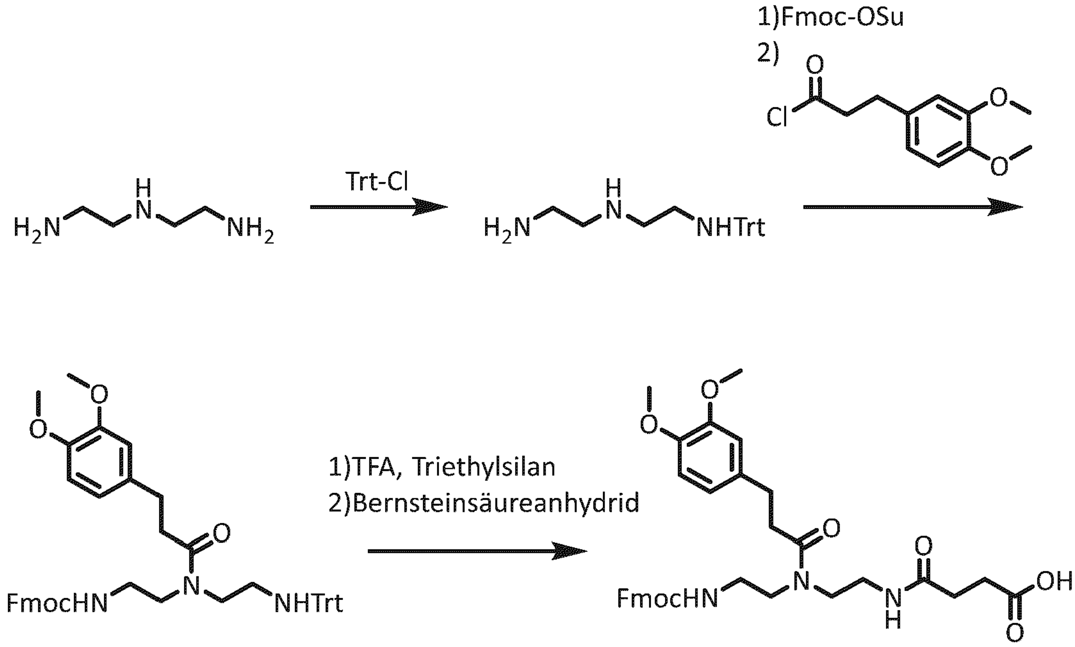

(Fig.1)

Falls während der Monomersynthese die Hydroxylgruppen am Catechol-Gerüst der Wiederholungseinheit der Formel (I) bzw. (I-a) mit Schutzgruppen versehen sind (z.B. Methyl), so werden diese Schutzgruppen bevorzugt nach erfolgter Polyreaktion wieder entfernt, unter Bildung der Polymere mit dem Catechol-Strukturfragment der Formel (I) bzw. der Formel (I-a).

Eine erfolgreiche Entfernung von Methyl-Schutzgruppen von direkt an Aromaten bindenden Hydroxylgruppen lässt sich gemäß Kiso, Yoshiaki et al., "Deprotection of O-methyltyrosine by a 'push-pull' mechanism using the thioanisole-trifluoromethanesulphonic acid system. Application to the convenient synthesis of a potent N-methylenkephalin derivative" im Journal of the Chemical Society, Chemical Communications 21 (1979), 971-972 durch Umsetzung (bevorzugt des zu entschützenden Polymers) mit Trifluormethansulfonsäure in Trifluoressigsäure (TFA) in Gegenwart von Thioanisol erreichen. Auf die vorgenannte Druckschrift wird ausdrücklich und vollinhaltlich Bezug genommen. Die zu entschützende Verbindung (bevorzugt das zu entschützende Polymer) wird bevorzugt in Anlehnung an die Reaktionsbedingungen von Kiso in einer Lösung aus Trifluormethansulfonsäure (18 Moläquivalente pro Catechol), Thioanisol (8 Moläquivalente pro Catechol) und Trifluoressigsäure (95 Vol.-% der gesamten Lösung) für 18 h geschüttelt. Anschließend wird die Reaktionslösung mit Diethylether versetzt, das Reaktionsprodukt gefällt und der isolierte Niederschlag unter Vakuum getrocknet.

Es ist erfindungsgemäß bevorzugt, wenn die erfindungsgemäßen Polymere als Wiederholungseinheit der Formel (II) mindestens eine Wiederholungseinheit der Formel (II-a) enthalten,

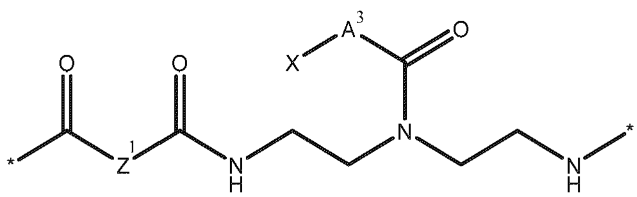
(II-a)

worin

$A^3$ eine $C_1$-$C_6$-Alkandiyl-Gruppe bedeutet,

$Z^1$ für eine $C_2$-$C_8$-Alkandiylgruppe (bevorzugt für Ethan-1 ,2-diyl) steht,

X für eine Aminogruppe $-N(R^5)(R^6)$ oder eine Ammonio-Gruppe $-N^+(R^5)(R^6)(R^7)$ 1/n $An^{n-}$ steht,

worin $R^5$, $R^6$ und $R^7$ jeweils unabhängig voneinander für ein Wasserstoffatom, eine $C_1$-$C_4$-Alkylgruppe oder eine $C_2$-$C_4$-Hydroxyalkylgruppe stehen und 1/n $An^{n-}$ ein Äquivalent eines n-wertigen Anions, bevorzugt mit n = 1 bedeuten.

Entsprechende Wiederholungseinheiten der Formel (II-a) leiten sich von Formel (II) ab, in dem die Spacergruppe $A^4$ gemäß Formel (II) eine Carbonylgruppe bedeutet, die an die Anknüpfungsgruppe $A^3$ und an $G^2$ bindet.

Die zur Formel (II-a) korrespondierenden Monomere zur Synthese der erfindungsgemäßen Polymere lassen sich durch folgendes Syntheseverfahren herstellen:

(i) Schutz beider primären Aminogruppen eines Diethylentriamins mit Schutzgruppen $S^1$ und $S^2$ die gleich oder verschieden sein können, bevorzugt verschieden, insbesondere Triphenylmethyl oder (((9H-Fluoren-9-yl)methoxy)carbonyl;

(ii) Funktionalisierung der sekundären Aminogruppe des geschützten Diethylentriamins aus (i) mit einer Verbindung der Formel (E3)

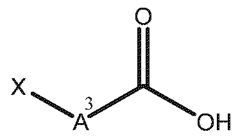 (E3)

worin

X und $A^3$ wie in Formel (II-a) definiert sind,
unter Erhalt des Umsetzungsproduktes der Formel (U4)

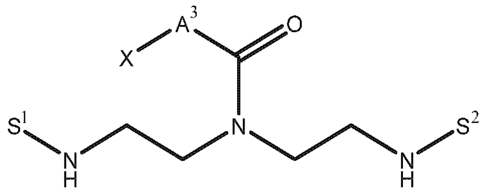 (U4)

worin
X und $A^3$ wie in Formel (II-a) definiert sind,
$S^1$ und $S^2$ unabhängig voneinander stehen jeweils für eine Schutzgruppe, die gleich oder verschieden sein können, bevorzugt verschieden, insbesondere für Triphenylmethyl oder (((9H-Fluoren-9-yl)methoxy)carbonyl;

(iii) Entfernung einer Schutzgruppe $S^1$ oder $S^2$ aus dem funktionalisierten Diethylentriamin der Formel (U4),

(iv) Umsetzung des entschützten Diethylentriamins aus (iii) mit einer Verbindung der Formel (E5) oder dessen Anhydrid,

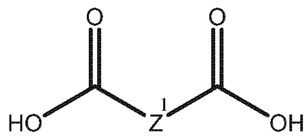 (E5)

worin $Z^1$ wie in Formel (II-a) definiert ist,
unter Erhalt des Umsetzungsproduktes der Formel (U5)

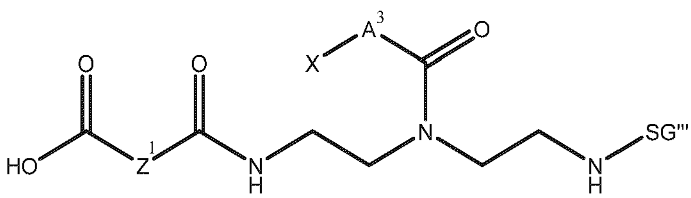 (U5),

worin
X, $Z^1$ und $A^3$ wie in Formel (II-a) definiert ist,
SG‴ wie $S^1$ oder $S^2$ gemäß Formel (U4) definiert ist,

(v) Entfernung der Schutzgruppe SG‴ aus dem Umsetzungsprodukt (U5) unter Erhalt der Verbindung (U6)

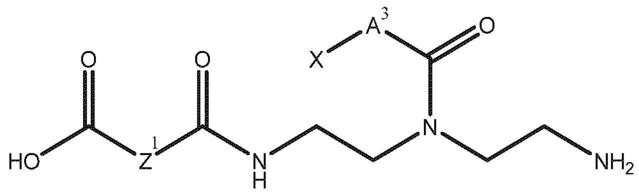
(U6)

worin
X, $A^3$ und $Z^1$ wie in Formel (II-a) definiert ist.

Sollte der Aufbau des Polymers an einer festen Phase stattfinden, ist es bevorzugt, Umsetzungsprodukt aus (iv) mit der festen Phase zu koppeln und dann Schritt (v) durchzuführen.
Ein Synthesebeispiel der vorgenannten Syntheseroute wird in der Beispielsektion detailliert beschrieben.
Weiter hat es sich erfindungsgemäß als bevorzugt erwiesen, wenn das erfindungsgemäße Polymer als Wiederholungseinheit der Formel (II) mindestens eine Wiederholungseinheit der Formel (II-b) enthält,

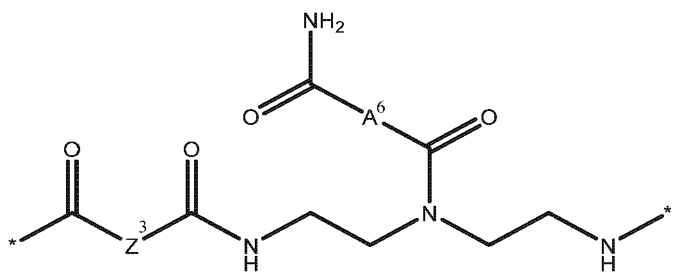
(II-b)

worin $A^6$ für eine ($C_2$ bis $C_6$)-Alkandiylgruppe steht, insbesondere für Ethan-1,2-diyl, Propan-1,3-diyl, Butan-1,4-diyl, Propan-1,2-diyl, Butan-1,2-diyl, Butan-1,3-diyl, Pentan-1,5-diyl oder Hexan-1,6-diyl,

$Z^3$ für eine $C_2$-$C_8$-Alkandiylgruppe (bevorzugt für Ethan-1,2-diyl) steht.

Die Wiederholungseinheit der Formel (II-b) leitet sich von der Wiederholungseinheit der Formel (II) ab, in dem die Anknüpfungsgruppe $A^3$ eine direkte Bindung und die Spacergruppe $A^4$ eine $C_2$-$C_6$-$\alpha,\omega$-(Dioxo)alkan- $\alpha,\omega$-diylgruppe und X eine Gruppe $NH_2$ ist.
Das Polymer kann als Wiederholungseinheit der Formel (II) die Wiederholungseinheit der Formel (II-b) allein, oder gemeinsam mit der Wiederholungseinheit der Formel (II-a) enthalten. Besonders bevorzugte erfindungsgemäße Polymere enthalten daher mindestens eine Wiederholungseinheit der Formel (I-a) und mindestens eine Wiederholungseinheit der Formel (II-a) und/oder der Formel (II-b).
Die zur Formel (II-b) korrespondierenden Monomere zur Synthese der erfindungsgemäßen Polymere lassen sich durch folgendes Syntheseverfahren herstellen:

(i) Schutz beider primären Aminogruppen eines Diethylentriamins mit Schutzgruppen $S^1$ und $S^2$ die gleich oder verschieden sein können, bevorzugt verschieden, insbesondere Triphenylmethyl oder (((9H-Fluoren-9-yl)methoxy)carbonyl;

(ii) Funktionalisierung der sekundären Aminogruppe des geschützten Diethylentriamins aus (i) Verbindung der Formel (E6) oder dessen Anhydrid,

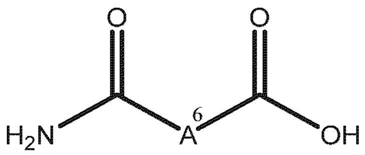

(E6)

worin $A^6$ wie in Formel (II-b) definiert ist, unter Erhalt des Umsetzungsproduktes der Formel (U7)

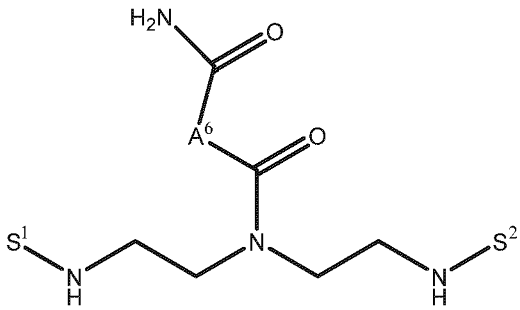

(U7)

worin

$A^6$ wie in Formel (II-b) definiert ist,
$S^1$ und $S^2$ unabhängig voneinander stehen jeweils für eine Schutzgruppe, die gleich oder verschieden sein können, bevorzugt verschieden, insbesondere für Triphenylmethyl oder (((9H-Fluoren-9-yl)methoxy)carbonyl;

(iii) Entfernung einer Schutzgruppe $S^1$ oder $S^2$ aus dem funktionalisierten Diethylentriamin der Formel (U7),

(iv) Umsetzung des entschützten Diethylentriamins aus (iii) mit einer Verbindung der Formel (E7), der Formel (E8) oder jeweils deren Säurehalogenid,

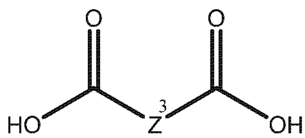

(E7)

worin $Z^4$ für eine $C_2$-$C_8$-Alkandiylgruppe (bevorzugt für Ethan-1 ,2-diyl) steht,
unter Erhalt des Umsetzungsproduktes der Formel (U8)

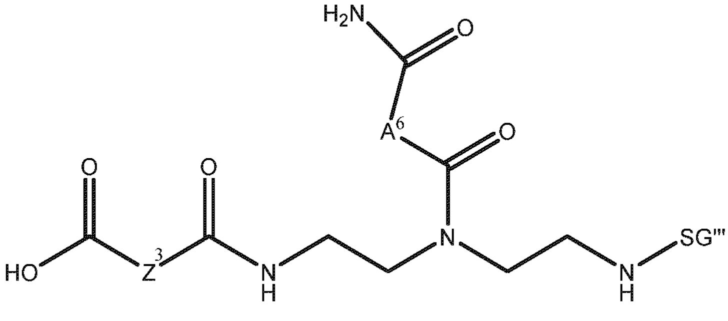

(U8),

worin
$Z^3$ wie in Formel (U7) definiert ist,
$Z^4$ wie in Formel (E7) definiert ist,
SG‴ wie $S^1$ oder $S^2$ gemäß Formel (U7) definiert ist, bevorzugt (((9H-Fluoren-9-yl)methoxy)carbonyl bedeutet,

(v) Entfernung der Schutzgruppe SG‴ aus dem Umsetzungsprodukt (U8) unter Erhalt der Verbindung (U9)

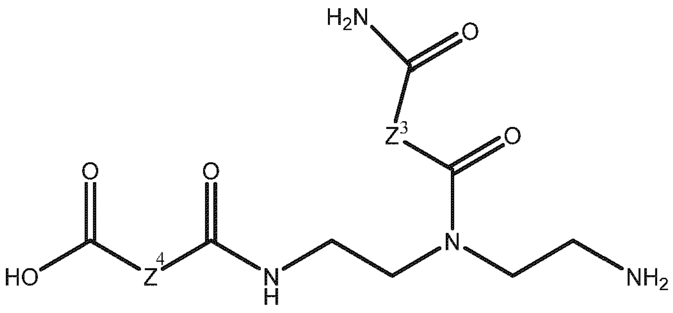
(U9)

worin
$Z^3$ und $Z^4$ wie in Formel (U8) definiert sind.

Sollte der Aufbau des Polymers an einer festen Phase stattfinden, ist es bevorzugt, Umsetzungsprodukt aus (U8) mit der festen Phase zu koppeln. Es ist auch denkbar, Umsetzungsprodukt (U2) mit der festen Phase zu koppeln und eine Polymerkette enthaltend mindestens eine geschützte primäre Aminogruppe (bevorzugt mindestens eine mit Triphenylmethylgeschützte primäre Aminogruppe) im Polymer zu erhalten, bei der vor oder nach Abspaltung von der festen Phase die geschützte primäre Aminogruppe in einem Schritt entschützt wird und die resultierende Gruppe mit einer Verbindung der Formel (E3) *(vide supra)* oder (E6) *(vide supra)* umgesetzt wird.

Ein Synthesebeispiel der vorgenannten Syntheseroute wird in der Beispielsektion detailliert beschrieben.

Es ist erfindungsgemäß bevorzugt, wenn die erfindungsgemäßen Polymere als Wiederholungseinheit der Formel (II) mindestens eine Wiederholungseinheit der Formel (II-c) enthalten,

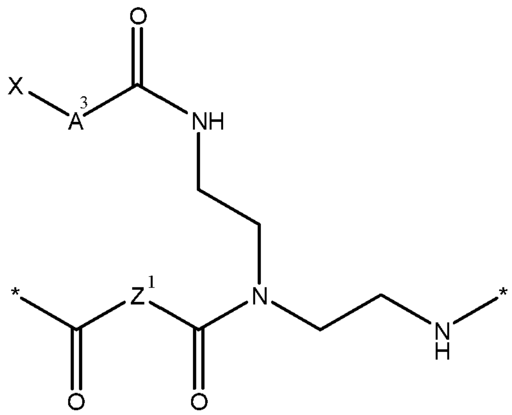
(II-c)

worin

$A^3$ eine $C_1$-$C_6$-Alkandiyl-Gruppe bedeutet,

$Z^1$ für eine $C_2$-$C_8$-Alkandiylgruppe (bevorzugt für Ethan-1 ,2-diyl) steht,

X für eine Aminogruppe -N($R^5$)($R^6$) oder eine Ammonio-Gruppe -$N^+$($R^5$)($R^6$)($R^7$) 1/n $An^{n-}$ steht,

worin $R^5$, $R^6$ und $R^7$ jeweils unabhängig voneinander für ein Wasserstoffatom, eine $C_1$-$C_4$-Alkylgruppe oder eine $C_2$-$C_4$-Hydroxyalkylgruppe stehen und 1/n $An^{n-}$ ein Äquivalent eines n-wertigen Anions, bevorzugt mit n = 1 bedeuten.

Entsprechende Wiederholungseinheiten der Formel (II-c) leiten sich von Formel (II) ab, in dem die Spacergruppe $A^4$ gemäß Formel (II) eine $C_2$-Alkylaminocarbonyl-Gruppe bedeutet, die an die Anknüpfungsgruppe $A^3$ und an $G^2$ bindet.

In einer bevorzugten Wiederholungseinheit der Formel (II-c) steht $Z^1$ für eine Ethan-1 ,2-diylgruppe, $A^3$ für eine Propan-1,3-diylgruppe und X für eine N,N-Dimethylaminogruppe. Diese spezielle bevorzugte Struktureinheit wird nachfolgend mit *-(IIc-Amin)-* abgekürzt.

Die zur Formel (II-c) korrespondierenden Monomere zur Synthese der erfindungsgemäßen Polymere lassen

sich durch folgendes Syntheseverfahren herstellen:

(i) Schutz beider primären Aminogruppen eines Diethylentriamins mit Schutzgruppen $S^1$ und $S^2$ die gleich oder verschieden sein können, bevorzugt verschieden, insbesondere Triphenylmethyl oder (((9H-Fluoren-9-yl)methoxy)carbonyl;

(ii) Funktionalisierung der sekundären Aminogruppe des geschützten Diethylentriamins aus (i) mit einer Verbindung der Formel (E8)

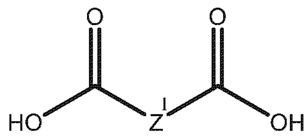
(E8)

worin
$Z^1$ wie in Formel (II-c) definiert sind,
unter Erhalt des Umsetzungsproduktes der Formel (U10)

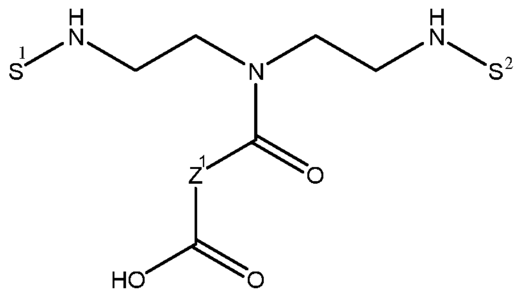
(U10)

worin

$Z^1$ wie in Formel (II-c) definiert sind,
$S^1$ und $S^2$ unabhängig voneinander stehen jeweils für eine Schutzgruppe, die gleich oder verschieden sein können, bevorzugt verschieden, insbesondere für Triphenylmethyl oder (((9H-Fluoren-9-yl)methoxy)carbonyl;

(iii) Entfernung einer Schutzgruppe $S^1$ oder $S^2$ aus dem funktionalisierten Diethylentriamin der Formel (U10),

(iv) Umsetzung des entschützten Diethylentriamins aus (iii) mit einer Verbindung der Formel (E9) oder dessen Anhydrid,

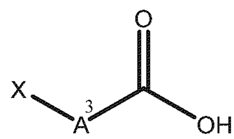
(E9)

X und $A^3$ wie in Formel (II-c) definiert ist,
unter Erhalt des Umsetzungsproduktes der Formel (U11)

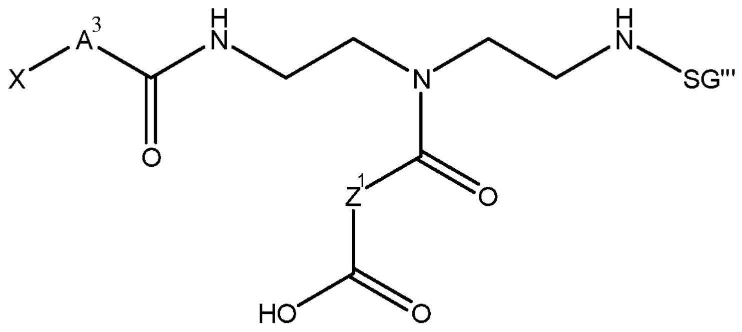

(U11),

worin
X, $Z^1$ und $A^3$ wie in Formel (II-c) definiert ist,
SG‴ wie $S^1$ oder $S^2$ gemäß Formel (U10) definiert ist,

(v) Entfernung der Schutzgruppe SG‴ aus dem Umsetzungsprodukt (U11) unter Erhalt der Verbindung (U12)

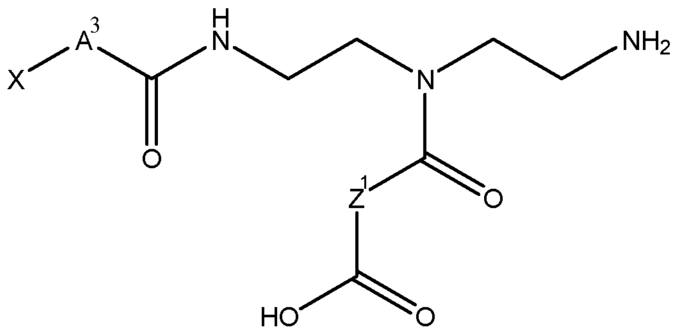

(U12)

worin
X, $A^3$ und $Z^1$ wie in Formel (II-c) definiert ist.

Sollte der Aufbau des Polymers an einer festen Phase stattfinden, ist es bevorzugt, bei der Polymersynthese Umsetzungsprodukt (U11) aus (iv) mit der festen Phase zu koppeln und dann den Schritt (v) zur Entschützung an der festen Phase durchzuführen.

Weiter hat es sich erfindungsgemäß als bevorzugt erwiesen, wenn das erfindungsgemäße Polymer als Wiederholungseinheit der Formel (II) mindestens eine Wiederholungseinheit der Formel (II-d) enthält,

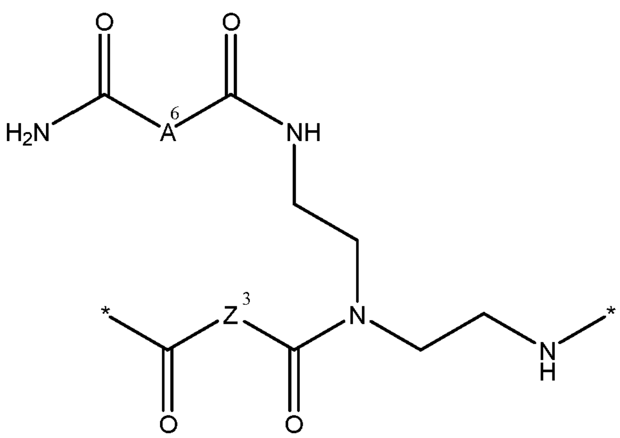

(II-d)

worin $A^6$ für eine ($C_2$ bis $C_6$)-Alkandiylgruppe steht, insbesondere für Ethan-1,2-diyl, Propan-1,3-diyl, Butan-1,4-diyl, Propan-1,2-diyl, Butan-1,2-diyl, Butan-1,3-diyl, Pentan-1,5-diyl oder Hexan-1,6-diyl,

$Z^3$ für eine $C_2$-$C_8$-Alkandiylgruppe (bevorzugt für Ethan-1,2-diyl) steht.

Die Wiederholungseinheit der Formel (II-d) leitet sich von der Wiederholungseinheit der Formel (II) ab, in dem die Anknüpfungsgruppe $A^3$ eine $C_2$-$C_6$-$\alpha,\omega$-(Dioxo)alkan- $\alpha,\omega$-diylgruppe und die Spacergruppe $A^4$ eine $C_2$-Alkylimin-Gruppe und X eine Gruppe $NH_2$ ist.

In einer bevorzugten Wiederholungseinheit der Formel (II-d) steht $Z^3$ für eine Ethan-1,2-diylgruppe und $A^6$ für eine Ethan-1,2-diylgruppe. Diese spezielle bevorzugte Struktureinheit wird nachfolgend mit *-(lld-Amid)-* abgekürzt.

Das Polymer kann als Wiederholungseinheit der Formel (II) die Wiederholungseinheit der Formel (II-d) allein, oder gemeinsam mit mindestens einer Wiederholungseinheit ausgewählt aus Formel (II-a), Formel (II-b), Formel (II-c) oder Mischungen daraus, enthalten.

Die zur Formel (II-d) korrespondierenden Monomere zur Synthese der erfindungsgemäßen Polymere lassen sich durch folgendes Syntheseverfahren herstellen:

(i) Schutz beider primären Aminogruppen eines Diethylentriamins mit Schutzgruppen $S^1$ und $S^2$ die gleich oder verschieden sein können, bevorzugt verschieden, insbesondere Triphenylmethyl oder (((9H-Fluoren-9-yl)methoxy)carbonyl;

(ii) Funktionalisierung der sekundären Aminogruppe des geschützten Diethylentriamins aus (i) Verbindung der Formel (E10) oder dessen Anhydrid,

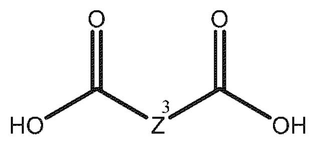
(E10)

worin $A^6$ wie in Formel (II-d) definiert ist, unter Erhalt des Umsetzungsproduktes der Formel (U13)

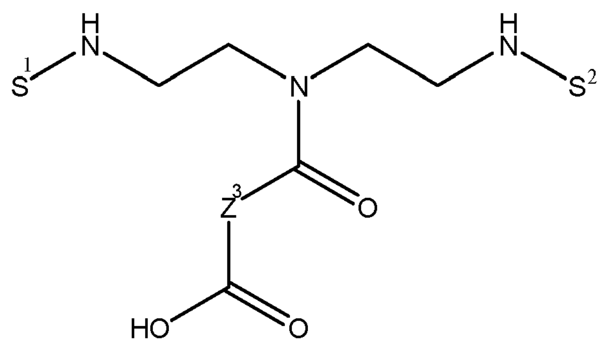
(U13)

worin

$Z^3$ wie in Formel (II-d) definiert ist,
$S^1$ und $S^2$ unabhängig voneinander stehen jeweils für eine Schutzgruppe, die gleich oder verschieden sein können, bevorzugt verschieden, insbesondere für Triphenylmethyl oder (((9H-Fluoren-9-yl)methoxy)carbonyl;

(iii) Entfernung einer Schutzgruppe $S^1$ oder $S^2$ aus dem funktionalisierten Diethylentriamin der Formel (U13),

(iv) Umsetzung des entschützten Diethylentriamins aus (iii) mit einer Verbindung der Formel (E11), der Formel (E8) oder jeweils deren Säurehalogenid oder Anhydrid

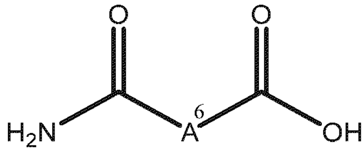
(E11)

worin $A^6$ für eine $C_2$-$C_8$-Alkandiylgruppe (bevorzugt für Ethan-1,2-diyl) steht, unter Erhalt des Umsetzungsproduktes der Formel (U14)

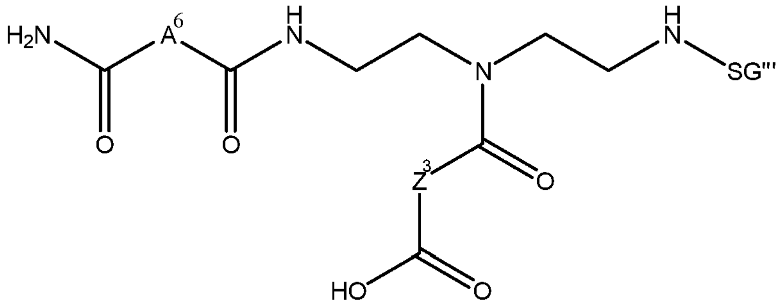

(U14),

worin
$Z^3$ wie in Formel (II-d) definiert ist,
$A^6$ wie in Formel (E11) definiert ist,
SG''' wie $S^1$ oder $S^2$ gemäß Formel (U13) definiert ist, bevorzugt (((9H-Fluoren-9-yl)methoxy)carbonyl bedeutet,

(v) Entfernung der Schutzgruppe SG''' aus dem Umsetzungsprodukt (U14) unter Erhalt der Verbindung (U15)

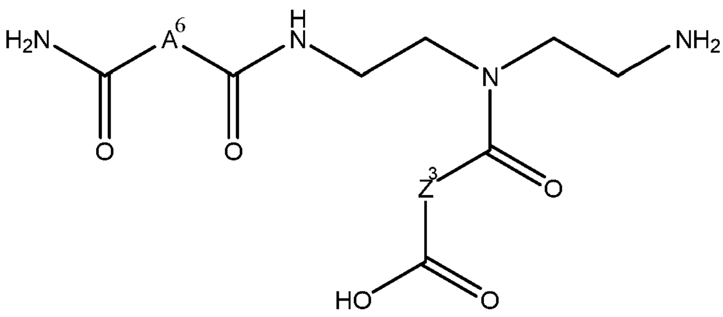

(U15)

worin
$Z^3$ und $A^6$ wie in Formel (U14) definiert sind.

Sollte der Aufbau des Polymers an einer festen Phase stattfinden, ist es bevorzugt, Umsetzungsprodukt aus (U14) mit der festen Phase zu koppeln. Es ist auch denkbar, Umsetzungsprodukt (U13) mit der festen Phase zu koppeln und eine Polymerkette enthaltend mindestens eine geschützte primäre Aminogruppe (bevorzugt mindestens eine mit Triphenylmethylgeschützte primäre Aminogruppe) im Polymer zu erhalten, bei der vor oder nach Abspaltung von der festen Phase die geschützte primäre Aminogruppe in einem Schritt entschützt wird und die resultierende Gruppe mit einer Verbindung der Formel (E9) *(vide supra)* oder (E11) *(vide supra)* umgesetzt wird.

Ein Synthesebeispiel der vorgenannten Syntheseroute wird in der Beispielsektion detailliert beschrieben.

Besonders bevorzugte erfindungsgemäße Polymere enthalten mindestens eine Wiederholungseinheit der Formel (I-a) kombiniert mit mindestens einer Wiederholungseinheit der Formel (II-a) und/oder der Formel (II-b) und/oder der Formel (II-c) und/oder der Formel (II-d). Dabei ist es besonders bevorzugt, wenn die erfindungsgemäßen Polymere mindestens eine Wiederholungseinheit der Formel (I-a) kombiniert mit mindestens einer Wiederholungseinheit der Formel (II-c) und/oder der Formel (II-d) enthalten.

Es hat sich mit Blick auf die Lösung der Aufgabe aber auch für eine verbesserte Einarbeitbarkeit des Polymers in wässrige Oberflächenbehandlungsmittel gezeigt, dass bevorzugte erfindungsgemäße Polymere dadurch gekennzeichnet sind, dass sie als (bevorzugt einzige) weitere Wiederholungseinheit mindestens eine Struktureinheit der Formel (III) enthalten,

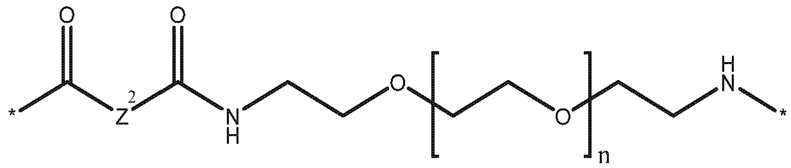

(III)

wobei n eine Zahl von 1 bis 10 bedeutet und $Z^2$ für eine $C_2$bis$C_8$-Alkandiylgruppe (bevorzugt für Ethan-1,2-diyl) steht. Dabei ist es wiederum bevorzugt, wenn das Polymer die Wiederholungseinheiten gemäß Formel (III) in einer Menge von weniger als 50 Mol% enthält.

In einer bevorzugten Wiederholungseinheit der Formel (III) stehen $Z^2$ für eine Ethan-1,2-diylgruppe und n steht für 1. Diese spezielle bevorzugte Wiederholungseinheit wird im Folgenden mit *-(EDS)-* abgekürzt.

Die zur Formel (III) korrespondierenden Monomere zur Synthese der bevorzugten erfindungsgemäßen Polymere wurden durch das in Ebbesen, M. F., et al. "Biodegradable poly(amidoamine)s with uniform degradation fragments via sequence-controlled macromonomers", Polymer Chemistry 7.46 (2016), Seiten 7086-7093 und das in "Sequence-defined glycopolymer segments presenting mannose: synthesis and lectin binding affinity." Biomacromolecules 13.6 (2012): 1845-1852 in den "Supporting Information" beschriebene Syntheseverfahren hergestellt. Auf vorgenannte Druckschriften wird ausdrücklich und vollinhaltlich Bezug genommen.

Ganz besonders bevorzugte erfindungsgemäße Polymere enthalten

(a) mindestens eine Wiederholungseinheit der Formel (I-a) und

(b) mindestens eine Wiederholungseinheit der Formel (II-a) und/oder der Formel (II-b) und/oder der Formel (II-c) und/oder der Formel (II-d) und

(c) mindestens eine Wiederholungseinheit der Formel (III).

Die von Polyamid-abgeleiteten Polymere lassen sich aus den Monomeren durch Polyreaktion, hier Polykondensation, in der dem Fachmann bekannten Weise darstellen. Zur Darstellung von Polymeren mit definierter Makrostruktur wie z.B. Blockcopolymeren oder sonstiger definierter Abfolge der erfindungsgemäßen Struktureinheiten, sowie zur gezielten Einstellung des erfindungsgemäßen Molverhältnisses der Wiederholungseinheiten werden die von Polyamid-abgeleiteten Polymere an der Festphase synthetisiert. Zu diesem Zweck wird in einer bevorzugten Synthesevariante eine feste Phase mit freien Aminogruppen bereitgestellt, die sequenziell zum Aufbau eines Polymers mit Monomeren oder Prepolymeren mit geschützten Aminogruppen, bevorzugt mit Fmoc-geschützen Aminogruppen, umgesetzt und die Schutzgruppe des gekoppelten Monomers vor der nächsten Umsetzung mit einem Monomer wieder unter Erhalt einer Aminogruppe entfernt wird. Ein entsprechendes Protokoll für eine bevorzugte Festphasen-Synthese wird in Gerke, Christoph, et al. "Sequence-controlled glycopolymers via step-growth polymerization of precision glycomacromolecules for lectin receptor clustering." Biomacromolecules 18.3 (2017), Seiten 787-796 beschrieben. Auf diese Druckschrift wird in diesem Zusammenhang ausdrücklich und vollinhaltlich Bezug genommen. Als einsetzbare Monomere eignen sich für die Festphasen-Synthese und insbesondere für eine Festphasen-Synthese gemäß vorgenanntem Protokoll bevorzugt als Monomer genutztes Umsetzungsprodukt der obigen Formel (U2), der obigen Formel (U5), der obigen Formel (U8), der obigen Formel (U11), der obigen Formel (U13), der obigen Formel (U14) oder Monomer zur Synthese der Wiederholungseinheit der obigen Formel (III).

Das Polymerrückgrat des erfindungsgemäßen Polymers leitet sich in einer ganz besonders bevorzugten Ausführungsform der erfindungsgemäßen Polymere ab von Acrylaten, Methacrylaten, Acrylamiden, Methacrylamiden, oder Copolymeren daraus. Entsprechende Polymere können durch radikalische Polyreaktion gebildet werden.

Bevorzugte erfindungsgemäße Polymere sind dadurch gekennzeichnet, dass sie als Wiederholungseinheit der Formel (I) mindestens eine Wiederholungseinheit der Formel (Ic) enthalten,

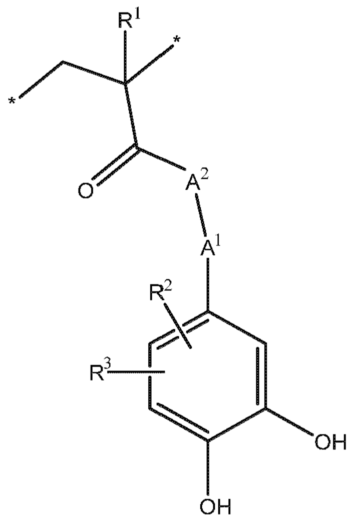

(I-c)

worin

$R^1$ für ein Wasserstoffatom oder eine Methylgruppe steht,
$A^2$ für ein Sauerstoffatom oder eine Gruppe -NH-, bevorzugt für eine Gruppe -NH-, steht
$R^2$, $R^3$, und $A^1$ wie in Formel (I) definiert ist.

Die zur Formel (I-c) korrespondierenden Monomere zur Synthese der erfindungsgemäßen Polymere sind literaturbekannt und lassen sich beispielsweise nach der Synthesevorschrift gemäß Druckschrift WO 2005/070866 A2 (hier u.a.: 2-(3,4-Dihydroxyphenyl)ethylacrylat, 2-(3,4-Dihydroxyphenyl)ethylmethacrylat, 2-(3,4-Dihydroxy-6-methylphenyl)ethylmethacrylamid) oder Patentschrift US 6,605,270 A oder nach Na Lin et al., Nucleic Acids Research, Volume 35, Issue 4, 2007, Seiten 1222-1229 (hier: N-[2-(3,4-Dihydroxy-phenyl)-ethyl]-acrylamid) herstellen. Auf diese Druckschriften wird ausdrücklich und vollinhaltlich Bezug genommen.

Erfindungsgemäß bevorzugte Polymere (insbesondere solche, die mindestens eine Wiederholungseinheit der Formel (I-c) enthalten) enthalten als Wiederholungseinheit der Formel (II) mindestens eine Wiederholungseinheit der Formel (II-e),

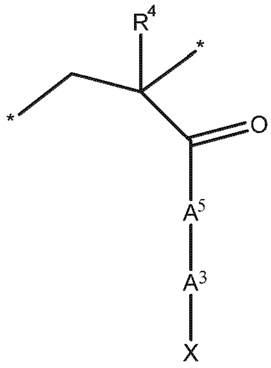

(II-e)

worin

$R^4$ für ein Wasserstoffatom oder eine Methylgruppe steht,
$A^5$ für ein Sauerstoffatom oder eine Gruppe -NH- steht,
$A^3$ für eine $C_2$-$C_6$-Alkandiylgruppe steht,
X für eine Aminogruppe $-N(R^5)(R^6)$ oder eine Ammonio-Gruppe $-N^+(R^5)(R^6)(R^7)$ 1/n $An^{n-}$ steht,
worin $R^5$, $R^6$ und $R^7$ jeweils unabhängig voneinander für ein Wasserstoffatom, eine $C_1$-$C_4$-Alkylgruppe oder eine $C_2$-$C_4$-Hydroxyalkylgruppe stehen und 1/n $An^{n-}$ ein Äquivalent eines n-wertigen Anions, bevorzugt mit n = 1 bedeuten.

Besonders bevorzugt sind solche Wiederholungseinheiten der Formel (II-e), bei denen die Reste $R^5$, $R^6$ und $R^7$ jeweils für eine Methylgruppe stehen.

Ganz besonders bevorzugte, erfindungsgemäße Polymere (insbesondere solche, die mindestens eine Wiederholungseinheit der Formel (I-c) enthalten) enthalten als Wiederholungseinheit der Formel (II) mindestens eine Wiederholungseinheit der Formel (II-f) oder deren Trimethylammonium-Salz oder mindestens eine Wiederholungseinheit der Formel (II-g) oder Mischungen daraus,

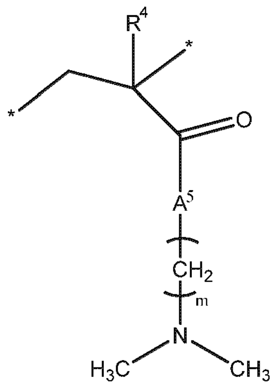
(II-f)

worin

$R^4$ für ein Wasserstoffatom oder eine Methylgruppe steht,

$A^5$ für ein Sauerstoffatom oder eine Gruppe -NH- steht,

m für 2 oder 3 steht;

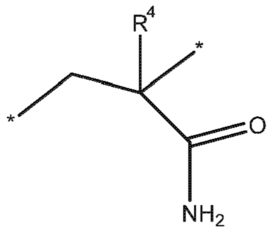
(II-g)

worin

$R^4$ für ein Wasserstoffatom oder eine Methylgruppe steht.

Es hat sich als bevorzugt erwiesen, wenn erfindungsgemäße Polymere (insbesondere solche, die mindestens eine Wiederholungseinheit der Formel (I-e) und mindestens eine Wiederholungseinheit der Formel (II), ausgewählt aus Formel (II-f), (II-g) oder Mischungen daraus, enthalten) dadurch gekennzeichnet sind, dass sie als (bevorzugt einzige) weitere Wiederholungseinheit mindestens eine Struktureinheit der Formel (IV) enthalten,

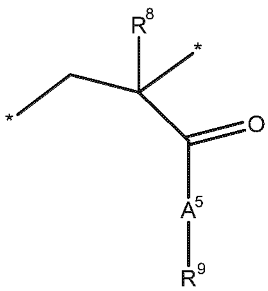
(IV)

worin

$R^8$ für ein Wasserstoffatom oder eine Methylgruppe steht,

$A^5$ für ein Sauerstoffatom oder eine Gruppe -NH- steht,

$R^9$ für eine Hydroxyterminierte Polyalkylenoxid-Gruppe, für eine $C_1$-$C_4$-Alkyl-terminierte Polyalkylenoxid-Gruppe, für eine $C_2$-$C_6$-Hydroxyalkylgruppe, für eine $C_3$-$C_6$-Polyhydroxyalkylgruppe, für eine $C_1$-$C_6$-Alkylgruppe, für eine $C_1$-$C_4$-Alkoxy-$C_2$-$C_4$-alkyl-Gruppe, für eine 2-Hydroxyethyl-Gruppe, für eine 2-Hydroxypropyl-Gruppe, für eine 2-Methyl-1-Propansulfansäure-Gruppe und deren Natriumsalz, für eine N-[Tris(hydroxymethyl)methyl]-Gruppe, für eine 2-Carboxyethyl-Gruppe und/oder für eine 3-Sulfopropyl-Gruppe.

Ein zweiter Gegenstand der Erfindung ist ein Mittel zur Behandlung von Oberflächen, insbesondere von harten Oberflächen oder von Textilien, dadurch gekennzeichnet, dass es mindestens ein erfindungsgemäßes Polymer des ersten Erfindungsgegenstandes und mindestens ein Tensid enthält.

Das erfindungsgemäße Mittel kann festförmig, insbesondere als Gelkörper oder als körniges Gemenge (wie z.B. Granulat oder Pulver oder Formkörper, z.B. Tablette) vorliegen oder flüssig sein. Im Rahmen eine bevorzugten Ausführungsform ist das erfindungsgemäße Mittel flüssig.

Ein Stoff (z.B. eine Zusammensetzung) ist gemäß Definition der Erfindung festförmig (auch: fest), wenn er bei 20°C und 1013 mbar im festen Aggregatzustand vorliegt.

Ein Stoff (z.B. eine Zusammensetzung) ist gemäß Definition der Erfindung flüssig, wenn er bei 20°C und 1013 mbar im flüssigen Aggregatzustand vorliegt.

Eine chemische Verbindung ist eine organische Verbindung, wenn das Molekül der chemischen Verbindung mindestens eine kovalente Bindung zwischen Kohlenstoff und Wasserstoff enthält. Diese Definition gilt unter anderem für "organische Bleichaktivatoren" als chemische Verbindung *mutatis mutandis.*

Eine chemische Verbindung ist im Umkehrschluss zur Definition der organischen Verbindung eine anorganische Verbindung, wenn das Molekül der chemischen Verbindung keine kovalente Bindung zwischen Kohlenstoff und Wasserstoff enthält.

Das erfindungsgemäße Mittel enthält neben dem Polymer als zwingenden Bestandteil mindestens ein Tensid. Als Tenside kommen erfindungsgemäß bevorzugt anionische Tenside, nichtionische Tenside, zwitterionische Tenside, amphotere Tenside oder kationische Tenside in Frage.

Das erfindungsgemäße Mittel enthält bezogen auf dessen Gesamtgewicht bevorzugt eine Gesamtmenge von 0,1 bis 70 Gew.-% Tensid.

Besonders bevorzugte erfindungsgemäße Mittel enthalten bezogen auf deren Gesamtgewicht eine Gesamtmenge von 0,1 bis 5,0 Gew.-% mindestens eines Tensids. Solche Mittel eignen sich zur erfindungsgemäßen Anwendung, insbesondere in einer Geschirrspülmaschine. Dabei ist es wiederum besonders bevorzugt, wenn das Mittel mindestens ein nichtionisches Tensid enthält.

Besonders bevorzugte erfindungsgemäße Mittel enthalten bezogen auf deren Gesamtgewicht eine Gesamtmenge von 5 bis 70 Gew.-%, mehr bevorzugt von 20 bis 65 Gew.-%, ganz besonders bevorzugt von 25 bis 60 Gew.-%, mindestens eines Tensids. Solche Mittel eignen sich zur erfindungsgemäßen Anwendung, insbesondere jedoch zur Anwendung in einer Waschmaschine für die Textilwäsche. Dabei ist es wiederum besonders bevorzugt, wenn das Mittel mindestens ein anionisches Tensid und gegebenenfalls zusätzlich mindestens ein nichtionisches Tensid enthält.

Ein erfindungsgemäß bevorzugtes Mittel ist dadurch gekennzeichnet, dass es mindestens ein anionisches Tensid enthält. Erfindungsgemäße Tensidzusammensetzungen mit anionischem Tensid können auf den besagten Anwendungsgebieten eingesetzt werden, eignen sich jedoch bevorzugt für die Wäsche von Textilien, besonders bevorzugt für eine Anwendung in einer Waschmaschine für die Textilwäsche.

Wenn das erfindungsgemäße Mittel anionisches Tensid enthält, ist es wiederum bevorzugt, dass bezogen auf das Gesamtgewicht der Zusammensetzung anionisches Tensid in einer Gesamtmenge von 8 bis 70 Gew.-%, insbesondere 25 bis 60 Gew.-%, weiter bevorzugt von 30 bis 40 Gew.-%, enthalten ist.

Als anionisches Tensid können vorzugsweise Sulfonate und/oder Sulfate eingesetzt werden.

Als Tenside vom Sulfonat-Typ kommen dabei vorzugsweise $C_{9-13}$-Alkylbenzolsulfonate, Olefinsulfonate, d.h. Gemische aus Alken- und Hydroxyalkansulfonaten sowie Disulfonaten, wie man sie beispielsweise aus $C_{12-18}$-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch $C_{12-18}$-Alkansulfonate und die Ester von $\alpha$-Sulfofettsäuren (Estersulfonate), zum Beispiel die $\alpha$-sulfonierten Methylester der hydrierten Kokos-, Palmkern- oder Talgfettsäuren.

Besonders bevorzugte erfindungsgemäße Mittel enthalten als anionisches Tensid mindestens eine Verbindung der Formel (T1),

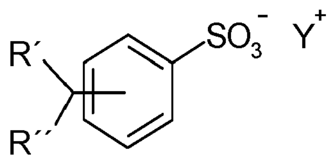

(T1),

in der

R' und R" unabhängig H oder Alkyl sind und zusammen 9 bis 19, vorzugsweise 9 bis 15 und insbesondere 9 bis 13 C-Atome enthalten, und $Y^+$ ein einwertiges Kation oder den n-ten Teil eines n-wertigen Kations (insbesondere $Na^+$) bedeuten.

Als Alk(en)ylsulfate werden die Alkali- und insbesondere die Natriumsalze der Schwefelsäurehalbester der $C_{12}$-$C_{18}$-Fettalkohole, beispielsweise aus Kokosfettalkohol, Talgfettalkohol, Lauryl-, Myristyl-, Cetyl- oder Stearylalkohol oder der $C_{10}$-$C_{20}$-Oxoalkohole und diejenigen Halbester sekundärer Alkohole dieser Kettenlängen bevorzugt. Aus waschtechnischem Interesse sind die $C_{12}$-$C_{16}$-Alkylsulfate und $C_{12}$-$C_{15}$-Alkylsulfate sowie $C_{14}$-$C_{15}$-Alkylsulfate bevorzugt. Auch 2,3-Alkylsulfate sind geeignete anionische Tenside.

Auch Fettalkoholethersulfate, wie die Schwefelsäuremonoester der mit 1 bis 6 Mol Ethylenoxid ethoxylierten geradkettigen oder verzweigten $C_{7-21}$-Alkohole, wie 2-Methyl-verzweigte $C_{9-11}$-Alkohole mit im Durchschnitt 3,5 Mol Ethylenoxid (EO) oder $C_{12-18}$-Fettalkohole mit 1 bis 4 EO, sind geeignet.

Weitere geeignete anionische Tenside sind Seifen. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside sowie die Seifen können in Form ihrer Natrium-, Kalium- oder Magnesium- oder Ammoniumsalze vorliegen. Vorzugsweise liegen die anionischen Tenside in Form ihrer Ammoniumsalze vor. Bevorzugte Gegenionen für die anionischen Tenside sind die protonierten Formen von Cholin, Triethylamin, Monoethanolamin, Triethanolamin oder Methylethylamin.

In einer ganz besonders bevorzugten Ausführungsform enthält das erfindungsgemäße Mittel eine mit Monoethanolamin neutralisierte Alkylbenzolsulfonsäure, insbesondere $C_{9-13}$-Alkylbenzolsulfonsäure, und/oder eine mit Monoethanolamin neutralisierte Fettsäure.

Ein bevorzugtes erfindungsgemäße Mittel enthält mindestens ein anionisches Tensid, ausgewählt aus der Gruppe bestehend aus $C_{8-18}$-Alkylbenzolsulfonaten, Olefinsulfonaten, $C_{12-18}$-Alkansulfonaten, Estersulfonaten, Alkylsulfaten, Alkenylsulfaten, Fettalkoholethersulfaten und Mischungen daraus.

Im Rahmen einer bevorzugten Ausführungsform enthält das erfindungsgemäße Mittel mindestens ein nichtionisches Tensid.

Das mindestens eine nichtionische Tensid kann jedes bekannte und für den erfindungsgemäßen Zweck geeignete nichtionische Tensid sein.

In einer bevorzugten Ausführungsform der Erfindung enthalten die hierin beschriebenen erfindungsgemäßen Mittel als nichtionisches Tensid mindestens ein Fettalkoholalkoxylat mit der nachstehenden Formel (T2),

$$R'\text{-}O\text{-}(XO)_m\text{-}H \qquad (T2)$$

wobei R' für einen linearen oder verzweigten $C_8$-$C_{18}$-Alkylrest, einen Arylrest oder Alkylarylrest steht, XO unabhängig voneinander eine Ethylenoxid- (EO) oder Propylenoxid- (PO) Gruppierung ist und m eine ganze Zahl von 1 bis 50 ist. In der vorstehenden Formel steht R' für einen linearen oder verzweigten, substituierten oder unsubstituierten Alkylrest. In einer bevorzugten Ausführungsform der vorliegenden Erfindung ist $R^I$ ein linearer oder verzweigter Alkylrest mit 5 bis 30 Kohlenstoffatomen, vorzugsweise mit 7 bis 25 Kohlenstoffatomen und insbesondere mit 10 bis 19 Kohlenstoffatomen. Bevorzugte Reste R' sind ausgewählt aus Decyl-, Undecyl-, Dodecyl-, Tridecyl-, Tetradecyl, Pentadecyl-, Hexadecyl-, Heptadecyl-, Octadecyl-, Nonadecylresten und deren Mischungen, wobei die Vertreter mit gerader Anzahl an Kohlenstoffatomen bevorzugt sind. Besonders bevorzugte Reste R' sind abgeleitet von Fettalkoholen mit 12 bis 19 Kohlenstoffatomen, beispielsweise von Kokosfettalkohol, Talgfettalkohol, Lauryl-, Myristyl-, Cetyl- oder Stearylalkohol oder von Oxoalkoholen mit 10 bis 19 Kohlenstoffatomen.

XO der Formel (T2) ist eine Ethylenoxid- (EO) oder Propylenoxid- (PO) Gruppierung, vorzugsweise eine Ethylenoxidgruppierung.

Der Index m der Formel (T2) ist eine ganze Zahl von 1 bis 50, vorzugsweise 2 bis 20 und bevorzugt 2 bis 10. Insbesondere ist m 3, 4, 5, 6 oder 7. Die erfindungsgemäße Tensidzusammensetzung kann Mischungen von nichtionischen Tensiden enthalten, die verschiedene Ethoxylierungsgrade aufweisen.

Zusammenfassend sind besonders bevorzugte Fettalkoholalkoxylate solche der Formel (T3)

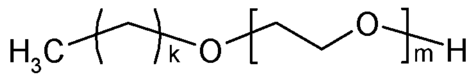

(T3)

mit k = 9 bis 17, m = 3, 4, 5, 6, oder 7. Ganz besonders bevorzugte Vertreter sind Fettalkohole mit 10 bis 18 Kohlenstoffatomen und mit 7 EO (k = 11 bis 17, m = 7).

Solche Fettalkoholethoxylate sind unter den Verkaufsbezeichnungen Dehydol® LT7 (BASF), Lutensol® AO7 (BASF), Lutensol® M7 (BASF) und Neodol® 45-7 (Shell Chemicals) erhältlich.

Mit besonderem Vorzug enthalten die erfindungsgemäßen Mittel nichtionische Tenside aus der Gruppe der alkoxylierten Alkohole. Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann beziehungsweise lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, zum Beispielaus Kokos-, Palm-, Talgfett- oder Oleylalkohol, und durchschnittlich 2 bis 8 Mol EO pro Mol Alkohol bevorzugt. Zu den bevorzugten ethoxylierten Alkoholen gehören beispielsweise $C_{12-14}$-Alkohole mit 3 EO oder 4 EO, $C_{8-11}$-Alkohol mit 7 EO, $C_{13-15}$-Alkohole mit 3 EO, 5 EO, 7 EO oder 8 EO, $C_{12-18}$-Alkohole mit 3 EO, 5 EO oder 7 EO und Mischungen aus diesen, wie Mischungen aus $C_{12-14}$-Alkohol mit 3 EO und $C_{12-18}$-Alkohol mit 5 EO.

Bevorzugte Alkoholethoxylate weisen eine eingeengte Homologenverteilung auf (narrow range ethoxylates, NRE). Zusätzlich zu diesen nichtionischen Tensiden können, insbesondere als Reinigungsmittel für das maschinelle Geschirrspülen, auch Fettalkohole mit mehr als 12 EO eingesetzt werden. Beispiele hierfür sind Talgfettalkohol mit 14 EO, 25 EO, 30 EO oder 40 EO.

Mit besonderem Vorzug werden ethoxylierte nichtionische Tenside, die aus $C_{6-20}$-Monohydroxyalkanolen oder $C_{6-20}$-Alkylphenolen oder $C_{16-20}$-Fettalkoholen und mehr als 12 Mol, vorzugsweise mehr als 15 Mol und insbesondere mehr als 20 Mol Ethylenoxid pro Mol Alkohol gewonnen wurden, eingesetzt. Ein besonders bevorzugtes nichtionisches Tensid wird aus einem geradkettigen Fettalkohol mit 16 bis 20 Kohlenstoffatomen ($C_{16-20}$-Alkohol), vorzugsweise einem $C_{18}$-Alkohol und mindestens 12 Mol, vorzugsweise mindestens 15 Mol und insbesondere mindestens 20 Mol Ethylenoxid gewonnen. Hierunter sind die sogenannten "narrow range ethoxylates" besonders bevorzugt.

Bevorzugt einzusetzende Tenside stammen aus den Gruppen der alkoxylierten nichtionischen Tenside, insbesondere der ethoxylierten primären Alkohole und Mischungen dieser Tenside mit strukturell komplizierter aufgebauten Tensiden wie Polyoxypropylen/Polyoxyethylen/Polyoxypropylen ((PO/EO/PO)-Tenside). Solche nichtionischen (PO/EO/PO)-Tenside zeichnen sich darüber hinaus durch gute Schaumkontrolle aus.

Als besonders bevorzugte nichtionische Tenside, insbesondere für Reinigungsmittel für das maschinelle Geschirrspülen, haben sich im Rahmen der vorliegenden Erfindung für die schwachschäumende Niotenside erwiesen, welche alternierende Ethylenoxid- und Alkylenoxideinheiten aufweisen. Unter diesen sind wiederum Tenside mit EO-AO-EO-AO-Blöcken bevorzugt, wobei jeweils eine bis zehn EO- beziehungsweise AO-Gruppen aneinander gebunden sind, bevor ein Block aus den jeweils anderen Gruppen folgt. Hier sind nichtionisches Tenside der allgemeinen Formel (T4)

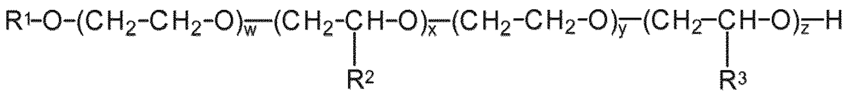

(T4)

bevorzugt, in der $R^1$ für einen geradkettigen oder verzweigten, gesättigten oder ein- beziehungsweise mehrfach ungesättigten $C_{6-24}$-Alkyl- oder-Alkenylrest steht; jede Gruppe $R^2$ beziehungsweise $R^3$ unabhängig voneinander ausgewählt ist aus $-CH_3$, $-CH_2CH_3$, $-CH_2CH_2-CH_3$, $-CH(CH_3)_2$ und die Indizes w, x, y, z unabhängig voneinander für ganze Zahlen von 1 bis 6 stehen.

Bevorzugte nichtionische Tenside der vorstehenden Formel lassen sich durch bekannte Methoden aus den entsprechenden Alkoholen $R^1$-OH und Ethylen- beziehungsweise Alkylenoxid herstellen. Der Rest $R^1$ in der vorstehenden Formel kann je nach Herkunft des Alkohols variieren. Werden native Quellen genutzt, weist der Rest $R^1$ eine gerade Anzahl von Kohlenstoffatomen auf und ist in der Regel unverzweigt, wobei die linearen Reste aus Alkoholen nativen Ursprungs mit 12 bis 18 C-Atomen, zum Beispielaus Kokos-, Palm-, Talgfett- oder Oleylalkohol, bevorzugt sind. Aus synthetischen Quellen zugängliche Alkohole sind beispielsweise die Guerbetalkohole oder in 2-Stellung methylverzweigte beziehungsweise lineare und methylverzweigte Reste im Gemisch, so wie sie üblicherweise in Oxoalkoholresten vorliegen. Unabhängig von der Art des zur Herstellung der in erfindungsgemäßen Mittel enthaltenen nichtionischen Tenside eingesetzten Alkohols sind nichtionische Tenside bevorzugt, bei denen $R^1$ in der vorstehenden Formel für einen

Alkylrest mit 6 bis 24, vorzugsweise 8 bis 20, besonders bevorzugt 9 bis 15 und insbesondere 9 bis 11 Kohlenstoffatomen steht.

Als Alkylenoxideinheit, die alternierend zur Ethylenoxideinheit in den bevorzugten nichtionischen Tensiden enthalten ist, kommt neben Propylenoxid insbesondere Butylenoxid in Betracht. Aber auch weitere Alkylenoxide, bei denen $R^2$ beziehungsweise $R^3$ unabhängig voneinander ausgewählt sind aus $-CH_2CH_2-CH_3$ beziehungsweise $-CH(CH_3)_2$ sind geeignet. Bevorzugt werden nichtionische Tenside der vorstehenden Formel eingesetzt, bei denen $R^2$ beziehungsweise $R^3$ für einen Rest $-CH_3$, w und x unabhängig voneinander für Werte von 3 oder 4 und y und z unabhängig voneinander für Werte von 1 oder 2 stehen.

Weitere bevorzugt eingesetzte nichtionische Tenside, insbesondere für Reinigungsmittel für das maschinelle Geschirrspülen, sind nichtionische Tenside der allgemeinen Formel (T5)

$$R^1O(AlkO)_xM(OAlk)_yOR^2 \qquad (T5)$$

wobei $R^1$ und $R^2$ unabhängig voneinander für einen verzweigten oder unverzweigten, gesättigten oder ungesättigten, gegebenenfalls hydroxylierten Alkylrest mit 4 bis 22 Kohlenstoffatomen stehen; Alk für einen verzweigten oder unverzweigten Alkylrest mit 2 bis 4 Kohlenstoffatomen steht; x und y unabhängig voneinander für Werte zwischen 1 und 70 stehen; und M für einen Alkylrest aus der Gruppe $CH_2$, $CHR^3$, $CR^3R^4$, $CH_2CHR^3$ und $CHR^3CHR^4$ steht, wobei $R^3$ und $R^4$ unabhängig voneinander für einen verzweigten oder unverzweigten, gesättigten oder ungesättigten Alkylrest mit 1 bis 18 Kohlenstoffatomen stehen.

Bevorzugt sind hierbei nichtionische Tenside der allgemeinen Formel (T6)

$$R^1\text{-}CH(OH)CH_2\text{-}O(CH_2CH_2O)_xCH_2CHR(OCH_2CH_2)_y\text{-}CH_2CH(OH)\text{-}R^2 \qquad (T6),$$

wobei R, $R^1$ und $R^2$ unabhängig voneinander für einen Alkylrest oder Alkenylrest mit 6 bis 22 Kohlenstoffatomen; x und y unabhängig voneinander für Werte zwischen 1 und 40 stehen.

Bevorzugt sind hierbei insbesondere Verbindungen der allgemeinen Formel (T7)

$$R^1\text{-}CH(OH)CH_2\text{-}O(CH_2CH_2O)_xCH_2CHR(OCH_2CH_2)_yO\text{-}CH_2CH(OH)\text{-}R^2 \qquad (T7)$$

in denen R für einen linearen, gesättigten Alkylrest mit 8 bis 16 Kohlenstoffatomen, vorzugsweise 10 bis 14 Kohlenstoffatomen steht und $R^1$ und $R^2$ unabhängig voneinander für einen Alkylrest oder Alkenylrest mit 6 bis 22 Kohlenstoffatomen stehen, und n und m unabhängig voneinander Werte von 20 bis 30 aufweisen. Entsprechende Verbindungen können beispielsweise durch Umsetzung von Alkyldiolen $HO\text{-}CHR\text{-}CH_2\text{-}OH$ mit Ethylenoxid erhalten werden, wobei im Anschluss eine Umsetzung mit einem Alkylepoxid zum Verschluss der freien OH-Funktionen unter Ausbildung eines Dihydroxyethers erfolgt.

Bevorzugte nichtionische Tenside sind hierbei, insbesondere für Reinigungsmittel für das maschinelle Geschirrspülen, solche der allgemeinen Formel (T8)

$$R^1\text{-}CH(OH)CH_2O\text{- }(AO)_w\text{-}(AO)_x\text{-}(A''O)_y\text{-}(A'''O)_z\text{-}R^2 \qquad (T8)$$

in der

- $R^1$ für einen geradkettigen oder verzweigten, gesättigten oder ein- bzw. mehrfach ungesättigten $C_{6\text{-}24}$-Alkyl- oder -Alkenylrest steht;
- $R^2$ für Wasserstoff oder einen linearen oder verzweigten Kohlenwasserstoffrest mit 2 bis 26 Kohlenstoffatomen steht;
- A, A', A" und A‴ unabhängig voneinander für einen Rest aus der Gruppe $-CH_2CH_2$, $-CH_2CH_2-CH_2$, $-CH_2-CH(CH_3)$, $-CH_2-CH_2-CH_2-CH_2$, $-CH_2-CH(CH_3)-CH_2-$, $-CH_2-CH(CH_2-CH_3)$ stehen,
- w, x, y und z für Werte zwischen 0,5 und 120 stehen, wobei x, y und/oder z auch 0 sein können.

Durch den Zusatz der vorgenannten nichtionischen Tenside der allgemeinen Formel (T8)

$$R^1\text{-}CH(OH)CH_2O\text{-}(AO)_w\text{-}(A'O)_x\text{-}(A''0)_y\text{-}(A'''O)_z\text{-}R^2 \qquad (T8)$$

nachfolgend auch als "Hydroxymischether" bezeichnet, kann überraschenderweise die Reinigungsleistung erfindungsgemäßer Zubereitungen deutlich verbessert werden und zwar im Vergleich zu Systemen, die alternative nichtionischen Tenside, beispielsweise aus der Gruppe der polyalkoxylierten Fettalkohole enthalten.

Durch den Einsatz dieser nichtionischen Tenside mit einer oder mehreren freien Hydroxylgruppen an einem oder beiden endständigen Alkylresten kann die Stabilität der gegebenenfalls zusätzlich in den erfindungsgemäßen

Mitteln enthaltenen Enzyme deutlich verbessert werden.

Bevorzugt sind, insbesondere für Reinigungsmittel für das maschinelle Geschirrspülen, solche endgruppenverschlossenen poly(oxyalkylierten) nichtionischen Tenside, die, gemäß der folgenden Formel (T10)

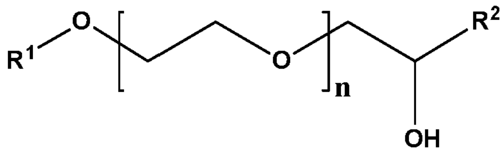

(T10)

neben einem Rest $R^1$, welcher für lineare oder verzweigte, gesättigte oder ungesättigte, aliphatische oder aromatische Kohlenwasserstoffreste mit 2 bis 30 Kohlenstoffatomen, vorzugsweise mit 4 bis 22 Kohlenstoffatomen steht, weiterhin einen linearen oder verzweigten, gesättigten oder ungesättigten, aliphatischen oder aromatischen Kohlenwasserstoffrest $R^2$ mit 1 bis 30 Kohlenstoffatomen aufweisen, wobei n für Werte zwischen 1 und 90, vorzugsweise für Werte zwischen 10 und 80 und insbesondere für Werte zwischen 20 und 60 steht. Insbesondere bevorzugt sind Tenside der vorstehenden Formel, in denen $R^1$ für $C_7$ bis $C_{13}$, n für eine ganze natürliche Zahl von 16 bis 28 und $R^2$für $C_8$ bis $C_{12}$ steht.

Besonders bevorzugt sind, insbesondere für Reinigungsmittel für das maschinelle Geschirrspülen, Tenside der Formel $R^1O[CH_2CH(CH_3)O]_x[CH_2CH_2O]_yCH_2CH(OH)R^2$,
in der $R^1$ für einen linearen oder verzweigten aliphatischen Kohlenwasserstoffrest mit 4 bis 18 Kohlenstoffatomen oder Mischungen hieraus steht, $R^2$einen linearen oder verzweigten Kohlenwasserstoffrest mit 2 bis 26 Kohlenstoffatomen oder Mischungen hieraus bezeichnet und x für Werte zwischen 0,5 und 1,5 sowie y für einen Wert von mindestens 15 steht. Zur Gruppe dieser nichtionischen Tenside zählen beispielsweise die $C_{2-26}$ Fettalkohol-$(PO)_1$-$(EO)_{15-40}$-2-hydroxyalkylether, insbesondere auch die $C_{8-10}$ Fettalkohol-$(PO)_1$-$(EO)_{22}$-2-hydroxydecylether.

Besonders bevorzugt sind weiterhin, insbesondere für Reinigungsmittel für das maschinelle Geschirrspülen, solche endgruppenverschlossenen poly(oxyalkylierten) Niotenside der Formel

$$R^1O[CH_2CH_2O]_x[CH_2CH(R^3)O]_yCH_2CH(OH)R^2,$$

in der $R^1$ und $R^2$ unabhängig voneinander für einen linearen oder verzweigten, gesättigten oder ein- bzw. mehrfach ungesättigten Kohlenwasserstoffrest mit 2 bis 26 Kohlenstoffatomen steht, $R^3$ unabhängig voneinander ausgewählt ist aus $-CH_3$, $-CH_2CH_3$, $-CH_2CH_2$-CH 3, $-CH(CH_3)_2$, vorzugsweise jedoch für $-CH_3$steht, und x und y unabhängig voneinander für Werte zwischen 1 und 32 stehen, wobei Niotenside mit $R^3$= $-CH_3$und Werten für x von 15 bis 32 und y von 0,5 und 1,5 ganz besonders bevorzugt sind.

Weitere bevorzugt einsetzbare nichtionischen Tenside, insbesondere für Reinigungsmittel für das maschinelle Geschirrspülen, sind die endgruppenverschlossenen poly(oxyalkylierten) nichtionischen Tenside der Formel $R^1O[CH_2CH(R^3)O]_x[CH_2]_kCH(OH)[CH_2]_jOR^2$,
in der $R^1$ und $R^2$ für lineare oder verzweigte, gesättigte oder ungesättigte, aliphatische oder aromatische Kohlenwasserstoffreste mit 1 bis 30 Kohlenstoffatomen stehen, $R^3$ für H oder einen Methyl-, Ethyl-, n-Propyl-, iso-Propyl-, n-Butyl-, 2-Butyl- oder 2-Methyl-2-Butylrest steht, x für Werte zwischen 1 und 30, k und j für Werte zwischen 1 und 12, vorzugsweise zwischen 1 und 5 stehen.

Wenn der Wert x > 2 ist, kann jedes $R^3$ in der oben stehenden Formel

$R^1O[CH_2CH(R^3)O]_x[CH_2]_kCH(OH)[CH_2]_jOR^2$ unterschiedlich sein. $R^1$ und $R^2$ sind vorzugsweise lineare oder verzweigte, gesättigte oder ungesättigte, aliphatische oder aromatische Kohlenwasserstoffreste mit 6 bis 22 Kohlenstoffatomen, wobei Reste mit 8 bis 18 C-Atomen besonders bevorzugt sind. Für den Rest $R^3$ sind H, $-CH_3$ oder $-CH_2CH_3$ besonders bevorzugt. Besonders bevorzugte Werte für x liegen im Bereich von 1 bis 20, insbesondere von 6 bis 15.

Wie vorstehend beschrieben, kann jedes $R^3$ in der oben stehenden Formel unterschiedlich sein, falls x > 2 ist. Hierdurch kann die Alkylenoxideinheit in der eckigen Klammer variiert werden. Steht x beispielsweise für 3, kann der Rest $R^3$ ausgewählt werden, um Ethylenoxid- ($R^3$= H) oder Propylenoxid- ($R^3$= $CH_3$) Einheiten zu bilden, die in jedweder Reihenfolge aneinandergefügt sein können, beispielsweise (EO)(PO)(EO), (EO)(EO)(PO), (EO)(EO)(EO), (PO)(EO)(PO), (PO)(PO)(EO) und (PO)(PO)(PO). Der Wert 3 für x ist hierbei beispielhaft gewählt worden und kann durchaus größer sein, wobei die Variationsbreite mit steigenden x-Werten zunimmt und beispielsweise eine große Anzahl (EO)-Gruppen, kombiniert mit einer geringen Anzahl (PO)- Gruppen einschließt, oder umgekehrt.

Besonders bevorzugte endgruppenverschlossene poly(oxyalkylierte) Alkohole der oben stehenden Formel weisen Werte von k = 1 und j = 1 auf, so dass sich die vorstehende Formel zu $R^1O[CH_2CH(R^3)O]_xCH_2CH(OH)CH_2OR^2$ vereinfacht. In der letztgenannten Formel sind $R^1$, $R^2$ und $R^3$ wie oben definiert und x steht für Zahlen von 1 bis 30, vorzugsweise von 1 bis 20 und insbesondere von 6 bis 18. Besonders bevorzugt sind Tenside, bei denen die Reste $R^1$ und $R^2$ 9 bis 14 C-Atome aufweisen, $R^3$ für H steht und x Werte von 6 bis 15 annimmt. Als besonders wirkungsvoll

haben sich schließlich die nichtionischen Tenside der allgemeine Formel $R^1$-CH(OH)$CH_2$O-(AO)$_w$-$R^2$ erwiesen, in der

- $R^1$ für einen geradkettigen oder verzweigten, gesättigten oder ein- bzw. mehrfach ungesättigten $C_{6-24}$-Alkyl- oder -Alkenylrest steht;
- $R^2$ für einen linearen oder verzweigten Kohlenwasserstoffrest mit 2 bis 26 Kohlenstoffatomen steht;
- A für einen Rest aus der Gruppe $CH_2CH_2$, $CH_2CH_2CH_2$, $CH_2CH(CH_3)$, vorzugsweise für $CH_2CH_2$ steht, und

- w für Werte zwischen 1 und 120, vorzugsweise 10 bis 80, insbesondere 20 bis 40 steht.

Zur Gruppe dieser nichtionischen Tenside zählen beispielsweise die $C_{4-22}$ Fettalkohol-$(EO)_{10-80}$-2-hydroxyalkylether, insbesondere auch die $C_{8-12}$ Fettalkohol-$(EO)_{22}$-2-hydroxydecylether und die $C_{4-22}$ Fettalkohol-$(EO)_{40-80}$-2-hydroxyalkylether.

Ferner kann das erfindungsgemäße Mittel als nichtionisches Tensid Aminoxid enthalten. Als Aminoxid sind prinzipiell alle im Stand der Technik für diese Zwecke etablierten Aminoxide also Verbindungen, die die Formel $R^1R^2R^3NO$ aufweisen, worin jedes $R^1$, $R^2$ und $R^3$ unabhängig von den anderen eine gegebenenfalls substituierte Kohlenwasserstoffkette mit 1 bis 30 Kohlenstoffatomen ist, einsetzbar. Besonders bevorzugt eingesetzte Aminoxide sind solche in denen $R^1$ Alkyl mit 12 bis 18 Kohlenstoffatomen und $R^2$ und $R^3$ jeweils unabhängig Alkyl mit 1 bis 4 Kohlenstoffatomen sind, insbesondere Alkyldimethylaminoxide mit 12 bis 18 Kohlenstoffatomen. Beispielhafte Vertreter geeigneter Aminoxide sind N-Kokosalkyl-N,N-dimethylaminoxid, N-Talgalkyl-N,N-dihydroxyethylaminoxid, Myristyl-/Cetyldimethylaminoxid oder Lauryldimethylaminoxid.

Als nichtionische Tenside eignen sich beispielsweise Alkylglykoside der allgemeinen Formel $RO(G)_x$ in der R einem primären geradkettigen oder methylverzweigten, insbesondere in 2-Stellung methylverzweigten aliphatischen Rest mit 8 bis 22, vorzugsweise 12 bis 18 C-Atomen entspricht und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette.

Weitere geeignete Tenside sind die als PHFA bekannten Polyhydroxyfettsäureamide.

Weitere einsetzbare, nichtionische Tenside können beispielsweise sein

- Polyolfettsäureester,
- alkoxylierte Triglyceride,
- alkoxylierte Fettsäurealkylester der Formel $R^3CO-(OCH_2CHR^4)_wOR^5$,
  in der $R^3CO$ für einen linearen oder verzweigten, gesättigten und/oder ungesättigten Acylrest mit 6 bis 22 Kohlenstoffatomen, $R^4$ für Wasserstoff oder Methyl und $R^5$ für lineare oder verzweigte Alkylreste mit 1 bis 4 Kohlenstoffatomen steht und w 1 bis 20 ist,
- Hydroxymischether,
- Sorbitanfettsäureester und Anlagerungeprodukte von Ethylenoxid an Sorbitanfettsäureester wie beispielsweise die Polysorbate,
- Zuckerfettsäureester und Anlagerungsprodukte von Ethylenoxid an Zuckerfettsäureester,
- Anlagerungsprodukte von Ethylenoxid an Fettsäurealkanolamide und Fettamine,
- Fettsäure-N-alkylglucamide.

Die hierin beschriebenen erfindungsgemäßen Tensidzusammensetzungen können auch mehrere der vorstehend beschriebenen nichtionischen Tenside enthalten.

Erfindungsgemäß besonders bevorzugte Mittel, insbesondere flüssige Mittel, enthalten jeweils bezogen auf das Gesamtgewicht des Mittels jeweils eine Gesamtmenge von

- 30 bis 40 Gew.-% mindestens eines anionischen Tensids und
- 18 bis 28 Gew.-% mindestens eines nichtionischen Tensids.

Erfindungsgemäß ganz besonders bevorzugte Mittel, insbesondere flüssige Mittel, enthalten zumindest eine Tensidkombination, wie sie nachfolgend für die Zusammensetzungen (A) bis (D) beschrieben ist:

(A) Mittel zur Behandlung von Oberflächen, insbesondere von Textilien, dadurch gekennzeichnet, dass es mindestens ein erfindungsgemäßes Polymer des ersten Erfindungsgegenstandes und als Tensid jeweils bezogen auf das

Gesamtgewicht der Zusammensetzung mindestens jeweils eine Gesamtmenge von

- 25 bis 60 Gew.-% mindestens eines anionischen Tensids, wobei als anionisches Tensid mindestens ein $C_{9-13}$-Alkylbenzolsulfonat enthalten ist, und

- 2 bis 35 Gew.-% mindestens eines nichtionischen Tensids, wobei als nichtionisches Tensid mindestens ein alkoxylierter Alkohol mit 8 bis 18 Kohlenstoffatomen und durchschnittlich 4 bis 12 Mol Ethylenoxid (EO) pro Mol Alkohol enthalten ist.

(B) Mittel zur Behandlung von Oberflächen, insbesondere von Textilien, dadurch gekennzeichnet, dass es mindestens ein erfindungsgemäßes Polymer des ersten Erfindungsgegenstandes und als Tensid jeweils bezogen auf das Gesamtgewicht der Zusammensetzung mindestens jeweils eine Gesamtmenge von

- 25 bis 60 Gew.-% mindestens eines anionischen Tensids, wobei als anionisches Tensid mindestens 25 bis 60 Gew.-% mindestens eines $C_{9-13}$-Alkylbenzolsulfonats enthalten ist, und

- 2 bis 35 Gew.-% mindestens eines nichtionischen Tensids, wobei als nichtionisches Tensid mindestens 2 bis 35 Gew.-% mindestens eines alkoxylierten Alkohols mit 8 bis 18 Kohlenstoffatomen und durchschnittlich 4 bis 12 Mol Ethylenoxid (EO) pro Mol Alkohol enthalten ist.

(C) Mittel zur Behandlung von Oberflächen, insbesondere von Textilien, dadurch gekennzeichnet, dass es mindestens ein erfindungsgemäßes Polymer des ersten Erfindungsgegenstandes und als Tensid jeweils bezogen auf das Gesamtgewicht der Zusammensetzung mindestens jeweils eine Gesamtmenge von

- 30 bis 40 Gew.-% mindestens eines anionischen Tensids, wobei als anionisches Tensid mindestens ein $C_{9-13}$-Alkylbenzolsulfonat enthalten ist, und

- 18 bis 28 Gew.-% mindestens eines nichtionischen Tensids, wobei als nichtionisches Tensid mindestens ein alkoxylierter Alkohol mit 8 bis 18 Kohlenstoffatomen und durchschnittlich 4 bis 12 Mol Ethylenoxid (EO) pro Mol Alkohol enthalten ist.

(D) Mittel zur Behandlung von Oberflächen, insbesondere von Textilien, dadurch gekennzeichnet, dass es mindestens ein erfindungsgemäßes Polymer des ersten Erfindungsgegenstandes und als Tensid jeweils bezogen auf das Gesamtgewicht der Zusammensetzung mindestens jeweils eine Gesamtmenge von

- 30 bis 40 Gew.-% mindestens eines anionischen Tensids, wobei als anionisches Tensid mindestens 30 bis 40 Gew.-% mindestens eines $C_{9-13}$-Alkylbenzolsulfonats enthalten ist, und

- 18 bis 28 Gew.-% mindestens eines nichtionischen Tensids, wobei als nichtionisches Tensid mindestens 18 bis 28 Gew.-% mindestens eines alkoxylierten Alkohols mit 8 bis 18 Kohlenstoffatomen und durchschnittlich 4 bis 12 Mol Ethylenoxid (EO) pro Mol Alkohol enthalten ist.

Das erfindungsgemäße Mittel enthält bevorzugt zusätzlich Wasser. Es ist wiederum bevorzugt, wenn in den erfindungsgemäßen Mitteln Wasser bezogen auf das Gesamtgewicht der Zusammensetzung bevorzugt in einer Gesamtmenge zwischen 0 und 70 Gew.-%, insbesondere zwischen 0 und 60 Gew.-%, bevorzugter zwischen 0 bis 40 Gew.-%, besonders bevorzugt zwischen 0 bis 25 Gew.-% enthalten ist. Der Anteil an Wasser in dem erfindungsgemäßen Mittel beträgt ganz besonders bevorzugt 20 Gew.-% oder weniger, wiederum bevorzugter 15 Gew.-% oder weniger, wiederum bevorzugter 12 Gew.-%, oder weniger, insbesondere zwischen 20 und 4 Gew.-%. Die Angaben in Gew.-% beziehen sich auf das Gesamtgewicht des Mittels.

Wenn die erfindungsgemäßen Mittel weniger als 35 Gew.-%, insbesondere weniger als 30 Gew.-%, bevorzugt weniger als 25 Gew.-%, besonders bevorzugt weniger als 20 Gew.-% Wasser enthalten ist es bevorzugt, die Mittel in Form einer Portion bereitzustellen, wobei die Portion mindestens eine Kammer mit Wandung aus wasserlöslichem Material umfasst, in der das erfindungsgemäße Mittel vorliegt.

Eine Portion ist eine eigenständige Dosiereinheit mit mindestens einer Kammer. Über alle Kammern aufsummiert ergeben die in Summe darin konfektionierten Zusammensetzungen das zu dosierende Gut der Portion. Eine Kammer ist ein durch Wandungen (z.B. durch eine Folie) abgegrenzter Raum, welcher auch ohne das zu dosierende Gut (ggf. unter Veränderung seiner Form) existieren kann. Eine Schicht einer Oberflächenbeschichtung fällt somit explizit nicht unter die Definition einer Wandung.

Das wasserlösliche Material bildet Wandungen der Kammer und umhüllt dadurch das erfindungsgemäße Mittel.

Die Wandung ist erfindungsgemäß aus einem wasserlöslichen Material. Die Wasserlöslichkeit des Materials kann mit Hilfe eines in einem quadratischen Rahmen (Kantenlänge auf der Innenseite: 20 mm) fixierten quadratischen Films des besagten Materials (Film: 22 × 22 mm mit einer Dicke von 76 μm) nach folgendem Messprotokoll bestimmt werden. Besagter gerahmter Film wird in 800 mL auf 20 °C temperiertes, destilliertes Wasser in einem 1 Liter Becherglas mit kreisförmiger Bodenfläche (Fa. Schott, Mainz, Becherglas 1000 mL, niedrige Form) eingetaucht, so dass die Fläche des eingespannten Films im rechten Winkel zur Bodenfläche des Becherglases angeordnet ist, die Oberkante des Rahmens 1 cm unter der Wasseroberfläche ist und die Unterkante des Rahmens parallel zur Bodenfläche des Becherglases derart ausgerichtet ist, dass die Unterkante des Rahmens entlang des Radius der Bodenfläche des Becherglases verläuft und die Mitte der Unterkante des Rahmens über der Mitte des Radius des Becherglasbodens angeordnet ist. Das Material sollte sich unter Rühren (Rührgeschwindigkeit Magnetrührer 300 rpm, Rührstab: 6,8 cm lang, Durchmesser 10 mm) innerhalb von 600 Sekunden derart auflösen, dass mit dem bloßen Auge keine einzelnen festförmigen Folienpartikel mehr sichtbar sind. Die Wandungen sind bevorzugt aus einer wasserlöslichen Folie. Diese Folie kann erfindungsgemäß bevorzugt eine Dicke von höchstens 150 μm (besonders bevorzugt von höchstens 120 μm) besitzen. Bevorzugten Wandungen sind demnach aus einer wasserlöslichen Folie gefertigt und weisen eine Dicke von höchstens 150 μm (besonders bevorzugt von höchstens 120 μm, ganz besonders bevorzugt von höchstens 90 μm) auf.

Solche wasserlöslichen Portionen können entweder durch Verfahren des vertikalen Formfüllversiegelns (VFFS) oder Warmformverfahren hergestellt werden. Besonders bevorzugt werden Wandungen mindestens einer Kammer durch Versiegeln mindestens eines Films aus wasserlöslichem Material, insbesondere durch Versiegeln im Rahmen eines Form-Fill-Seal-Verfahrens, erstellt.

Das Warmformverfahren schließt im Allgemeinen das Formen einer ersten Lage aus einem wasserlöslichen Folienmaterial zum Bilden von mindestens einer Ausbuchtung zum Aufnehmen jeweils mindestens einer Zusammensetzung darin, Einfüllen der Zusammensetzung in die jeweilige Ausbuchtung, Bedecken der mit der Zusammensetzung gefüllten Ausbuchtungen mit einer zweiten Lage aus einem wasserlöslichen Folienmaterial und Versiegeln der ersten und zweiten Lagen miteinander zumindest um die Ausbuchtungen herum ein.

Das wasserlösliche Material enthält bevorzugt mindestens ein wasserlösliches Polymer. Außerdem enthält das wasserlösliche Material vorzugsweise ein wasserlösliches Folienmaterial ausgewählt aus Polymeren oder Polymergemischen. Die Umhüllung kann aus einer oder aus zwei oder mehr Lagen aus dem wasserlöslichen Folienmaterial gebildet werden. Das wasserlösliche Folienmaterial der ersten Lage und der weiteren Lagen, falls vorhanden, kann gleich oder unterschiedlich sein.

Es ist bevorzugt, dass das wasserlösliche Material Polyvinylalkohol oder ein Polyvinylalkoholcopolymer enthält.

Geeignete wasserlösliche Folien als wasserlösliches Material basieren bevorzugt auf einem Polyvinylalkohol oder einem Polyvinylalkoholcopolymer, dessen Molekulargewicht jeweils im Bereich von 10.000 bis 1.000.000 $gmol^{-1}$, vorzugsweise von 20.000 bis 500.000 $gmol^{-1}$, besonders bevorzugt von 30.000 bis 100.000 $gmol^{-1}$ und insbesondere von 40.000 bis 80.000 $gmol^{-1}$ liegt.

Die Herstellung von Polyvinylalkohol geschieht üblicherweise durch Hydrolyse von Polyvinylacetat, da der direkte Syntheseweg nicht möglich ist. Ähnliches gilt für Polyvinylalkoholcopolymere, die aus entsprechend aus Polyvinylacetatcopolymeren hergestellt werden. Bevorzugt ist, wenn wenigstens eine Lage des wasserlöslichen Materials einen Polyvinylalkohol umfasst, dessen Hydrolysegrad 70 bis 100 Mol-%, vorzugsweise 80 bis 90 Mol-%, besonders bevorzugt 81 bis 89 Mol-% und insbesondere 82 bis 88 Mol-% ausmacht.

Dem als wasserlösliches Material geeigneten Folienmaterial kann zusätzlich Polymere, ausgewählt aus der Gruppe umfassend Acrylsäure-haltige Polymere, Polyacrylamide, Oxazolin-Polymere, Polystyrolsulfonate, Polyurethane, Polyester, Polyether Polymilchsäure, und/oder Mischungen der vorstehenden Polymere, zugesetzt sein.

Bevorzugte Polyvinylalkoholcopolymere umfassen neben Vinylalkohol Dicarbonsäuren als weitere Monomere. Geeignete Dicarbonsäure sind Itaconsäure, Malonsäure, Bernsteinsäure und Mischungen daraus, wobei Itaconsäure bevorzugt ist.

Ebenso bevorzugte Polyvinylalkoholcopolymere umfassen neben Vinylalkohol eine ethylenisch ungesättigte Carbonsäure, deren Salz oder deren Ester. Besonders bevorzugt enthalten solche Polyvinylalkoholcopolymere neben Vinylalkohol Acrylsäure, Methacrylsäure, Acrylsäureester, Methacrylsäureester oder Mischungen daraus.

Als wasserlösliches Material der Wandungen eingesetztes Folienmaterial weist eine bevorzugte Dicke in einem Bereich von 65 bis 180 μm, insbesondere von 70 bis 150 μm, weiter bevorzugt 75 bis 120 μm, auf.

In das besagte wasserlösliche Material der Wandungen der Portion wird zur Erhöhung der Produktsicherheit bevorzugt ein Bittermittel eingearbeitet. Entsprechende Ausführungsformen des wasserlöslichen Materials mit Bittermittel sind in den Druckschriften EP-B1-2 885 220 und EP-B1-2 885 221 beschrieben. Ein bevorzugtes Bittermittel ist Denatonium Benzoat.

Geeignete wasserlösliche Folien zum Einsatz als wasserlösliches Material der Wandung der wasserlöslichen Portion gemäß der Erfindung sind Folien, die unter der Bezeichnung Monosol M8630 von MonoSol LLC vertrieben werden. Andere geeignete Folien umfassen Folien mit der Bezeichnung Solublon® PT, Solublon® KA, Solublon® KC

oder Solublon® KL von der Aicello Chemical Europe GmbH oder die Folien VF-HP von Kuraray, oder HiSelon SH2312 der Firma Nippon Gohsei.

Es ganz besonders bevorzugt, wenn die erfindungsgemäßen Mittel (insbesondere neben Wasser) zusätzlich mindestens ein organisches Lösemittel enthalten.

Die Löslichkeit des besagten Mittels, sowie dessen Stabilität wird verbessert, wenn vorzugsweise das erfindungsgemäße Mittel zusätzlich mindestens ein organisches Lösemittel mit mindestens einer Hydroxylgruppe, ohne Aminogruppe und mit einem Molekulargewicht von höchstens 500 g/mol enthält.

Dieses besagte organische Lösemittel wird wiederum bevorzugt ausgewählt aus ($C_2$-$C_8$)-Alkanolen mit mindestens einer Hydroxylgruppe (besonders bevorzugt ausgewählt aus der Gruppe, Ethanol, Ethylenglycol,1,2-Propandiol, Glycerin, 1,3-Propandiol, n-Propanol, Isopropanol, 1,1,1-Trimethylolpropan, 2-Methyl-1,3-propandiol, 2-Hydroxymethyl-1,3-propandiol, oder Mischungen daraus), Triethylenglycol, Butyldiglycol, Polyethylenglycolen mit einer gewichtsmittleren Molmasse $M_w$ von höchstens 500 g/mol, Glycerincarbonat, Propylencarbonat, 1-Methoxy-2-propanol, 3-Methoxy-3-methyl-1-butanol, Butyllactat, 2-Isobutyl-2-methyl-4-hydroxymethyl-1,3-dioxolan, 2,2-Dimethyl-4-hydroxymethyl-1,3-dioxolan, Dipropylenglycol, oder Mischungen daraus.

Dabei ist es wiederum besonders bevorzugt, wenn besagtes organisches Lösemittel in einer Gesamtmenge von 5 bis 40 Gew.-%, insbesondere von 10 bis 35 Gew.-%, enthalten ist.

Die erfindungsgemäßen Mittel können zusätzlich mindestens ein Enzym enthalten. Prinzipiell sind diesbezüglich alle im Stand der Technik für die Reinigung von Substratoberflächen, insbesondere für die Textilbehandlung und die Reinigung harter Oberflächen, etablierten Enzyme einsetzbar. Vorzugsweise handelt es sich um eines oder mehrere Enzyme, die in einer tensidhaltigen Flotte eine katalytische Aktivität entfalten können, insbesondere eine Protease, Amylase, Lipase, Cellulase, Hemicellulase, Mannanase, Pektin-spaltendes Enzym, Tannase, Xylanase, Xanthanase, β-Glucosidase, Carrageenase, Perhydrolase, Oxidase, Oxidoreduktase sowie deren Gemische. Bevorzugt geeignete hydrolytische Enzyme umfassen insbesondere Proteasen, Amylasen, insbesondere α-Amylasen, Cellulasen, Lipasen, Hemicellulasen, insbesondere Pectinasen, Mannanasen, β-Glucanasen, sowie deren Gemische. Besonders bevorzugt sind Proteasen, Amylasen und/oder Lipasen sowie deren Gemische und ganz besonders bevorzugt sind Proteasen. Diese Enzyme sind im Prinzip natürlichen Ursprungs; ausgehend von den natürlichen Molekülen stehen für den Einsatz in Wasch- oder Reinigungsmitteln verbesserte Varianten zur Verfügung, die entsprechend bevorzugt eingesetzt werden.

Unter den Proteasen sind solche vom Subtilisin-Typ bevorzugt. Beispiele hierfür sind die Subtilisine BPN' und Carlsberg, die Protease PB92, die Subtilisine 147 und 309, die alkalische Protease aus Bacillus lentus, Subtilisin DY und die den Subtilasen, nicht mehr jedoch den Subtilisinen im engeren Sinne zuzuordnenden Enzyme Thermitase, Proteinase K und die Proteasen TW3 und TW7. Subtilisin Carlsberg ist in weiterentwickelter Form unter dem Handelsnamen Alcalase® von der Firma Novozymes A/S, Bagsvaerd, Dänemark, erhältlich. Die Subtilisine 147 und 309 werden unter den Handelsnamen Esperase®, beziehungsweise Savinase® von der Firma Novozymes vertrieben. Von der Protease aus Bacillus lentus DSM 5483 leiten sich die unter der Bezeichnung BLAP® geführten Protease-Varianten ab. Weitere brauchbare Proteasen sind beispielsweise die unter den Handelsnamen Durazym®, Relase®, Everlase®, Nafizym®, Natalase®, Kannase® und Ovozyme® von der Firma Novozymes, die unter den Handelsnamen, Purafect®, Purafect® OxP, Purafect® Prime, Excellase® und Properase® von der Firma Genencor, das unter dem Handelsnamen Protosol® von der Firma Advanced Biochemicals Ltd., Thane, Indien, das unter dem Handelsnamen Wuxi® von der Firma Wuxi Snyder Bioproducts Ltd., China, die unter den Handelsnamen Proleather® und Protease P® von der Firma Amano Pharmaceuticals Ltd., Nagoya, Japan, und das unter der Bezeichnung Proteinase K-16 von der Firma Kao Corp., Tokyo, Japan, erhältlichen Enzyme. Besonders bevorzugt eingesetzt werden auch die Proteasen aus Bacillus gibsonii und Bacillus pumilus.

Beispiele für erfindungsgemäß verwendbare Amylasen sind die α-Amylasen aus Bacillus licheniformis, aus B. amyloliquefaciens oder aus B. stearothermophilus sowie deren für den Einsatz in Wasch- oder Reinigungsmitteln verbesserte Weiterentwicklungen. Das Enzym aus B. licheniformis ist von der Firma Novozymes unter dem Namen Termamyl® und von der Firma Genencor unter dem Namen Purastar®ST erhältlich. Weiterentwicklungsprodukte dieser α-Amylase sind von der Firma Novozymes unter den Handelsnamen Duramyl® und Termamyl®ultra, von der Firma Genencor unter dem Namen Purastar®OxAm und von der Firma Daiwa Seiko Inc., Tokyo, Japan, als Keistase® erhältlich. Die α-Amylase von B. amyloliquefaciens wird von der Firma Novozymes unter dem Namen BAN® vertrieben, und abgeleitete Varianten von der α- Amylase aus B. stearothermophilus unter den Namen BSG® und Novamyl®, ebenfalls von der Firma Novozymes. Des Weiteren sind für diesen Zweck die α-Amylase aus Bacillus sp. A 7-7 (DSM 12368) und die Cyclodextrin-Glucanotransferase (CGTase) aus B. agaradherens (DSM 9948) hervorzuheben. Ebenso sind Fusionsprodukte aller genannten Moleküle einsetzbar. Darüber hinaus sind die unter den Handelsnamen Fungamyl® von dem Unternehmen Novozymes erhältlichen Weiterentwicklungen der α-Amylase aus Aspergillus niger und A. oryzae geeignet. Weitere vorteilhaft einsetzbare Handelsprodukte sind beispielsweise die Amylase-LT®, sowie Stainzyme® oder Stainzyme ultra® oder Stainzyme plus® oder Amplify Prime®, letztere ebenfalls von dem Unternehmen Novozymes. Auch durch Punktmutationen erhältliche Varianten dieser Enzyme können erfindungsgemäß eingesetzt werden.

Beispiele für erfindungsgemäß verwendbare Lipasen oder Cutinasen, die insbesondere wegen ihrer Triglycerid-spaltenden Aktivitäten enthalten sind, aber auch, um aus geeigneten Vorstufen in situ Persäuren zu erzeugen, sind die ursprünglich aus Humicola lanuginosa (Thermomyces lanuginosus) erhältlichen, beziehungsweise weiterentwickelten Lipasen, insbesondere solche mit dem Aminosäureaustausch D96L. Sie werden beispielsweise von der Firma Novozymes unter den Handelsnamen Lipolase®, Lipolase®Ultra, LipoPrime®, Lipozyme® und Lipex® vertrieben. Desweiteren sind beispielsweise die Cutinasen einsetzbar, die ursprünglich aus Fusarium solani pisi und Humicola insolens isoliert worden sind. Ebenso brauchbare Lipasen sind von der Firma Amano unter den Bezeichnungen Lipase CE®, Lipase P®, Lipase B®, beziehungsweise Lipase CES®, Lipase AKG®, Bacillus sp. Lipase®, Lipase AP®, Lipase M-AP® und Lipase AML® erhältlich. Von der Firma Genencor sind beispielsweise die Lipasen beziehungsweise Cutinasen einsetzbar, deren Ausgangsenzyme ursprünglich aus Pseudomonas mendocina und Fusarium solanii isoliert worden sind. Als weitere wichtige Handelsprodukte sind die ursprünglich von der Firma Gist-Brocades vertriebenen Präparationen M1 Lipase® und Lipomax® und die von der Firma Meito Sangyo KK, Japan, unter den Namen Lipase MY-30®, Lipase OF® und Lipase PL® vertriebenen Enzyme zu erwähnen, ferner das Produkt Lumafast® von der Firma Genencor.

Cellulasen können je nach Zweck als reine Enzyme, als Enzympräparationen oder in Form von Mischungen, in denen sich die einzelnen Komponenten vorteilhafterweise hinsichtlich ihrer verschiedenen Leistungsaspekte ergänzen, insbesondere in Mitteln für die Textilwäsche, vorhanden sein. Zu diesen Leistungsaspekten zählen insbesondere die Beiträge der Cellulase zur Primärwaschleistung des Mittels (Reinigungsleistung), zur Sekundärwaschleistung des Mittels (Antiredepositionswirkung oder Vergrauungsinhibition), zur Avivage (Gewebewirkung) oder zur Ausübung eines "stone washed"-Effekts. Eine brauchbare pilzliche, Endoglucanase(EG)-reiche Cellulase-Präparation, beziehungsweise deren Weiterentwicklungen wird von der Firma Novozymes unter dem Handelsnamen Celluzyme® angeboten. Die ebenfalls von der Firma Novozymes erhältlichen Produkte Endolase® und Carezyme® basieren auf der 50 kD-EG, beziehungsweise der 43 kD-EG aus H. insolens DSM 1800. Weitere einsetzbare Handelsprodukte dieser Firma sind Cellusoft®, Renozyme® und Celluclean®. Weiterhin einsetzbar sind beispielsweise die 20 kD-EG aus Melanocarpus, die von der Firma AB Enzymes, Finnland, unter den Handelsnamen Ecostone® und Biotouch® erhältlich sind. Weitere Handelsprodukte der Firma AB Enzymes sind Econase® und Ecopulp®. Weitere geeignete Cellulasen sind aus Bacillus sp. CBS 670.93 und CBS 669.93, wobei die aus Bacillus sp. CBS 670.93 von der Firma Genencor unter dem Handelsnamen Puradax® erhältlich ist. Weitere Handelsprodukte der Firma Genencor sind "Genencor detergent cellulase L" und IndiAge®Neutra. Auch durch Punktmutationen erhältliche Varianten dieser Enzyme können erfindungsgemäß eingesetzt werden. Besonders bevorzugte Cellulasen sind Thielavia terrestris Cellulasevarianten, Cellulasen aus Melanocarpus, insbesondere Melanocarpus albomyces, Cellulasen vom EGIII-Typ aus Trichoderma reesei oder hieraus erhältliche Varianten.

Ferner können insbesondere zur Entfernung bestimmter auf dem Substrat befindlicher Problemanschmutzungen weitere Enzyme eingesetzt sein, die unter dem Begriff Hemicellulasen zusammengefasst werden. Hierzu gehören beispielsweise Mannanasen, Xanthanlyasen, Xanthanasen, Xyloglucanasen, Xylanasen, Pullulanasen, Pektin-spaltende Enzyme und $\beta$-Glucanasen. Die aus Bacillus subtilis gewonnene $\beta$-Glucanase ist unter dem Namen Cereflo® von der Firma Novozymes erhältlich. Erfindungsgemäß besonders bevorzugte Hemicellulasen sind Mannanasen, welche beispielsweise unter den Handelsnamen Mannaway® von dem Unternehmen Novozymes oder Purabrite® von dem Unternehmen Genencor vertrieben werden. Zu den Pektinspaltenden Enzymen werden im Rahmen der vorliegenden Erfindung ebenfalls Enzyme gezählt mit den Bezeichnungen Pektinase, Pektatlyase, Pektinesterase, Pektindemethoxylase, Pektinmethoxylase, Pektinmethylesterase, Pektase, Pektinmethylesterase, Pektinoesterase, Pektinpektylhydrolase, Pektindepolymerase, Endopolygalacturonase, Pektolase, Pektinhydrolase, Pektin-Polygalacturonase, Endo-Polygalacturonase, Poly-$\alpha$-1,4-Galacturonid Glycanohydrolase, Endogalacturonase, Endo-D-galacturonase, Galacturan 1,4-$\alpha$-Galacturonidase, Exopolygalacturonase, Poly(galacturonat) Hydrolase, Exo-D-Galacturonase, Exo-D-Galacturonanase, Exopoly-D-Galacturonase, Exo-poly-$\alpha$-Galacturonosidase, Exopolygalacturonosidase oder Exopolygalacturanosidase. Beispiele für diesbezüglich geeignete Enzyme sind beispielsweise unter den Namen Gamanase®, Pektinex AR®, X-Pect® oder Pectaway® von dem Unternehmen Novozymes, unter dem Namen Rohapect UF®, Rohapect TPL®, Rohapect PTE100®, Rohapect MPE®, Rohapect MA plus HC, Rohapect DA12L®, Rohapect 10L®, Rohapect B1L® von dem Unternehmen AB Enzymes und unter dem Namen Pyrolase® von dem Unternehmen Diversa Corp., San Diego, CA, USA erhältlich.

Unter all diesen Enzymen sind solche besonders bevorzugt, die an sich gegenüber einer Oxidation vergleichsweise stabil oder beispielsweise über Punktmutagenese stabilisiert worden sind. Hierunter sind insbesondere die bereits erwähnten Handelsprodukte Everlase® und Purafect®OxP als Beispiele für solche Proteasen und Duramyl® als Beispiel für eine solche $\alpha$-Amylase anzuführen.

Das erfindungsgemäße Mittel enthält Enzyme vorzugsweise in Gesamtmengen von $1 \times 10^{-8}$ bis 5 Gewichts-Prozent bezogen auf aktives Protein. Bevorzugt sind die Enzyme in einer Gesamtmenge von 0,001 bis 2 Gew.-%, weiter bevorzugt von 0,01 bis 1,5 Gew.-%, noch weiter bevorzugt von 0,05 bis 1,25 Gew.-% und besonders bevorzugt von 0,01 bis 0,5 Gew.-% in dieser Portion enthalten.

Weiterhin können als zusätzliche Inhaltsstoffe Gerüststoffe, Komplexierungsmittel, optische Aufheller (bevorzugt in Portionen für die Textilwäsche), pH-Stellmittel, Parfum, Farbstoff, Farbübertragungssinhibitor (auch dye transfer

inhibitor) oder deren Gemische in den erfindungsgemäßen Mitteln enthalten sein.

Der Einsatz von Buildersubstanzen (Gerüststoffen) wie Silikaten, Aluminiumsilikaten (insbesondere Zeolithen), Salze organischer Di- und Polycarbonsäuren sowie Mischungen dieser Stoffe, vorzugsweise wasserlöslicher Buildersubstanzen, kann von Vorteil sein.

In einer erfindungsgemäß bevorzugten Ausführungsform, wird auf den Einsatz von Phosphaten (auch Polyphosphaten) weitgehend oder vollständig verzichtet. Die erfindungsgemäße Tensidzusammensetzung enthält in dieser Ausführungsform vorzugsweise weniger als 5 Gew.-%, besonders bevorzugt weniger als 3 Gew.-%, insbesondere weniger als 1 Gew.-% Phosphat(e). Besonders bevorzugt ist die erfindungsgemäße Tensidzusammensetzung in dieser Ausführungsform völlig phosphatfrei, d.h. die Zusammensetzungen enthalten weniger als 0,1 Gew.-% Phosphat(e).

Zu den Gerüststoffen zählen insbesondere Carbonate, Citrate, Phosphonate, organische Gerüststoffe und Silikate. Der Gewichtsanteil der gesamten Gerüststoffe am Gesamtgewicht erfindungsgemäßer Zusammensetzung beträgt vorzugsweise 15 bis 80 Gew.-% und insbesondere 20 bis 70 Gew.-%.

Erfindungsgemäß geeignete organische Gerüststoffe sind beispielsweise die in Form ihrer Natriumsalze einsetzbaren Polycarbonsäuren (Polycarboxylate), wobei unter Polycarbonsäuren solche Carbonsäuren verstanden werden, die mehr als eine, insbesondere zwei bis acht Säurefunktionen, bevorzugt zwei bis sechs, insbesondere zwei, drei, vier oder fünf Säurefunktionen im gesamten Molekül tragen. Bevorzugt sind als Polycarbonsäuren somit Dicarbonsäuren, Tricarbonsäuren Tetracarbonsäuren und Pentacarbonsäuren, insbesondere Di-, Tri- und Tetracarbonsäuren. Dabei können die Polycarbonsäuren noch weitere funktionelle Gruppen, wie beispielsweise Hydroxyl- oder Aminogruppen, tragen. Beispielsweise sind dies Citronensäure, Adipinsäure, Bernsteinsäure, Glutarsäure, Äpfelsäure, Weinsäure, Maleinsäure, Fumarsäure, Zuckersäuren (bevorzugt Aldarsäuren, beispielsweise Galactarsäure und Glucarsäure), Aminocarbonsäuren, insbesondere Aminodicarbonsäuren, Aminotricarbonsäuren, Aminotetracarbonsäuren wie beispielsweise Nitrilotriessigsäure (NTA), Glutamin-N,N-diessigsäure (auch als N,N-Bis(carboxymethyl)-L-glutaminsäure oder GLDA bezeichnet), Methylglycindiessigsäure (MGDA) und deren Derivate sowie Mischungen aus diesen. Bevorzugte Salze sind die Salze der Polycarbonsäuren wie Citronensäure, Adipinsäure, Bernsteinsäure, Glutarsäure, Weinsäure, GLDA, MGDA und Mischungen aus diesen.

Weiterhin geeignet als organische Gerüststoffe sind polymere Polycarboxylate (organische Polymere mit einer Vielzahl, an (insbesondere größer zehn) Carboxylatfunktionen im Makromolekül), Polyaspartate, Polyacetale und Dextrine.

Die freien Säuren besitzen neben ihrer Builderwirkung typischerweise auch die Eigenschaft einer Säuerungskomponente. Insbesondere sind hierbei Citronensäure, Bernsteinsäure, Glutarsäure, Adipinsäure, Gluconsäure und beliebige Mischungen aus diesen zu nennen.

Besonders bevorzugte erfindungsgemäße Tensidzusammensetzungen, insbesondere Geschirrspülmittel, bevorzugt maschinelle Geschirrspülmittel, enthalten als einen ihrer wesentlichen Gerüststoffe ein oder mehrere Salze der Citronensäure, also Citrate. Diese sind vorzugsweise in einem Anteil von 2 bis 40 Gew.-%, insbesondere von 5 bis 30 Gew.-%, besonders von 7 bis 28 Gew.-%, besonders bevorzugt 10 bis 25 Gew.-%, ganz besonders bevorzugt 15 bis 20 Gew.-% enthalten, jeweils bezogen auf das Gesamtgewicht der Zusammensetzung.

Besonders bevorzugt ist ebenfalls der Einsatz von Carbonat(en) und/oder Hydrogencarbonat(en), vorzugsweise Alkalicarbonat(en), besonders bevorzugt Natriumcarbonat (Soda), in Mengen von 2 bis 50 Gew.-%, vorzugsweise von 4 bis 40 Gew.-% und insbesondere von 10 bis 30 Gew.-%, ganz besonders bevorzugt 10 bis 24 Gew.-%, jeweils bezogen auf das Gewicht der Zusammensetzung.

Besonders bevorzugte erfindungsgemäße Tensidzusammensetzungen, insbesondere Geschirrspülmittel, bevorzugt maschinelle Geschirrspülmittel, sind dadurch gekennzeichnet, dass sie mindestens zwei Gerüststoffe aus der Gruppe der Silikate, Phosphonate, Carbonate, Aminocarbonsäuren und Citrate enthalten, wobei der Gewichtsanteil dieser Gerüststoffe, bezogen auf das Gesamtgewicht der erfindungsgemäßen Tensidzusammensetzung, bevorzugt 5 bis 70 Gew.-%, vorzugsweise 15 bis 60 Gew.- % und insbesondere 20 bis 50 Gew.-% beträgt. Die Kombination von zwei oder mehr Gerüststoffen aus der oben genannten Gruppe hat sich für die Reinigungs- und Klarspülleistung erfindungsgemäßer Wasch- oder Reinigungsmittel, insbesondere Geschirrspülmittel, bevorzugt maschinelle Geschirrspülmittel, als vorteilhaft erwiesen. Über die hier erwähnten Gerüststoffe hinaus können noch ein oder mehrere andere Gerüststoffe zusätzlich enthalten sein.

Bevorzugte erfindungsgemäße Tensidzusammensetzungen, insbesondere Geschirrspülmittel, bevorzugt maschinelle Geschirrspülmittel, sind durch eine Gerüststoffkombination aus Citrat und Carbonat und/oder Hydrogencarbonat gekennzeichnet. In einer erfindungsgemäß ganz besonders bevorzugten Ausführungsform wird eine Mischung aus Carbonat und Citrat eingesetzt, wobei die Menge an Carbonat vorzugsweise von 5 bis 40 Gew.-%, insbesondere 10 bis 35 Gew.-%, ganz besonders bevorzugt 15 bis 30 Gew.-% und die Menge an Citrat vorzugsweise von 5 bis 35 Gew.-%, insbesondere 10 bis 25 Gew.-%, ganz besonders bevorzugt 15 bis 20 Gew.-%, jeweils bezogen auf die Gesamtmenge des Reinigungsmittels, beträgt, wobei die Gesamtmenge dieser beiden Gerüststoffe vorzugsweise 20 bis 65 Gew.-%, insbesondere 25 bis 60 Gew.-%, bevorzugt 30 bis 50 Gew.-%, beträgt. Darüber hinaus können noch ein oder mehrere weitere Gerüststoffe zusätzlich enthalten sein.

Die erfindungsgemäßen Tensidzusammensetzungen, insbesondere Geschirrspülmittel, bevorzugt maschinelle Geschirrspülmittel, können als weiteren Gerüststoff insbesondere Phosphonate enthalten. Als Phosphonat-Verbindung wird vorzugsweise ein Hydroxyalkan- und/oder Aminoalkanphosphonat eingesetzt. Unter den Hydroxyalkanphosphonaten ist das 1- Hydroxyethan-1,1-diphosphonat (HEDP) von besonderer Bedeutung. Als Aminoalkanphosphonate kommen vorzugsweise Ethylendiamintetramethylenphosphonat (EDTMP), Diethylentriamin- pentamethylenphosphonat (DTPMP) sowie deren höhere Homologe in Frage. Phosphonate sind in erfindungsgemäßen Tenidzusammensetzungen vorzugsweise in Mengen von 0,1 bis 10 Gew.-%, insbesondere in Mengen von 0,5 bis 8 Gew.-%, ganz besonders bevorzugt von 2,5 bis 7,5 Gew.-%, jeweils bezogen auf das Gesamtgewicht der Zusammensetzung, enthalten.

Besonders bevorzugt ist der kombinierte Einsatz von Citrat, (Hydrogen-)Carbonat und Phosphonat. Diese können in den oben genannten Mengen eingesetzt werden. Insbesondere werden bei dieser Kombination Mengen von, jeweils bezogen auf das Gesamtgewicht des Mittels, 10 bis 25 Gew.-% Citrat, 10 bis 30 Gew.-% Carbonat (oder Hydrogencarbonat), sowie 2,5 bis 7,5 Gew.-% Phosphonat eingesetzt.

Weitere besonders bevorzugte, erfindungsgemäße Mittel, insbesondere Wasch- oder Reinigungsmittel, bevorzugt Geschirrspülmittel, weiter bevorzugt maschinelle Geschirrspülmittel, sind dadurch gekennzeichnet, dass sie neben Citrat und (Hydrogen-) Carbonat sowie ggf. Phosphonat mindestens einen weiteren phosphorfreien Gerüststoff enthalten. Insbesondere ist dieser ausgewählt aus den Aminocarbonsäuren, wobei der weitere phosphorfreie Gerüststoff vorzugsweise ausgewählt ist aus Methylglycindiessigsäure (MGDA), Glutaminsäurediacetat (GLDA), Asparaginsäurediacetat (ASDA), Hydroxyethyliminodiacetat (HEIDA), Iminodisuccinat (IDS) und Ethylendiamindisuccinat (EDDS), besonders bevorzugt aus MGDA oder GLDA. Eine besonders bevorzugte Kombination ist beispielsweise Citrat, (Hydrogen-)Carbonat und MGDA sowie ggf. Phosphonat.

Der Gew.-%-Anteil des weiteren phosphorfreien Gerüststoffs, insbesondere des MGDA und/oder GLDA, beträgt vorzugsweise 0 bis 40 Gew.-%, insbesondere 5 bis 30 Gew.-%, vor allem 7 bis 25 Gew.-%. Besonders bevorzugt ist der Einsatz von MGDA bzw. GLDA, insbesondere MGDA, als Granulat. Von Vorteil sind dabei solche MGDA-Granulate, die möglichst wenig Wasser enthalten und/oder eine im Vergleich zum nicht granulierten Pulver geringere Hygroskopizität (Wasseraufnahme bei 25 °C, Normaldruck) aufweisen. Die Kombination von mindestens drei, insbesondere mindestens vier Gerüststoffen aus der oben genannten Gruppe hat sich für die Reinigungs- und Klarspülleistung erfindungsgemäßer Mittel, insbesondere Geschirrspülmittel, bevorzugt maschinelle Geschirrspülmittel, als vorteilhaft erwiesen. Daneben können noch weitere Gerüststoffe enthalten sein.

Als organische Gerüststoffe sind weiterhin polymere Polycarboxylate geeignet, dies sind beispielsweise die Alkalimetallsalze der Polyacrylsäure oder der Polymethacrylsäure, beispielsweise solche mit einer relativen Molekülmasse von 500 bis 70000 g/mol. Geeignete Polymere sind insbesondere Polyacrylate, die bevorzugt eine Molekülmasse von 1000 bis 20000 g/mol aufweisen. Aufgrund ihrer überlegenen Löslichkeit können aus dieser Gruppe wiederum die kurzkettigen Polyacrylate, die Molmassen von 1100 bis 10000 g/mol, und besonders bevorzugt von 1200 bis 5000 g/mol, aufweisen, bevorzugt sein.

Der Gehalt der erfindungsgemäßen Mittel, insbesondere Geschirrspülmittel, bevorzugt maschinelle Geschirrspülmittel, an (homo)polymeren Polycarboxylaten beträgt vorzugsweise 0,5 bis 20 Gew.-%, bevorzugt 2 bis 15 Gew.-% und insbesondere 4 bis 10 Gew.-%.

Die erfindungsgemäßen Mittel, bevorzugt als Wasch- oder Reinigungsmittel, insbesondere Geschirrspülmittel, bevorzugt maschinelle Geschirrspülmittel, können als Gerüststoff weiterhin kristalline schichtförmige Silikate der allgemeinen Formel $NaMSi_xO_{2x+1} \cdot y\,H_2O$, worin M Natrium oder Wasserstoff darstellt, x eine Zahl von 1,9 bis 22, vorzugsweise von 1,9 bis 4, wobei besonders bevorzugte Werte für x 2, 3 oder 4 sind, und y für eine Zahl von 0 bis 33, vorzugsweise von 0 bis 20 steht. Einsetzbar sind auch amorphe Natriumsilikate mit einem Modul NazO : SiOz von 1:2 bis 1:3,3, vorzugsweise von 1:2 bis 1:2,8 und insbesondere von 1:2 bis 1:2,6, welche vorzugsweise löseverzögert sind und Sekundärwascheigenschaften aufweisen.

In bestimmten erfindungsgemäßen Mitteln, insbesondere Wasch-oder Reinigungsmitteln, bevorzugt Geschirrspülmitteln, weiter bevorzugt maschinellen Geschirrspülmitteln, wird der Gehalt an Silikaten, bezogen auf das Gesamtgewicht der Zusammensetzung, auf Mengen unterhalb 10 Gew.-%, vorzugsweise unterhalb 5 Gew.-% und insbesondere unterhalb 2 Gew.-% begrenzt.

Ein optischer Aufheller wird vorzugsweise aus den Substanzklassen der Distyrylbiphenyle, der Stilbene, der 4,4'-Diamino-2,2'-stilbendisulfonsäuren, der Cumarine, der Dihydrochinolinone, der 1,3-Diarylpyrazoline, der Naphthalsäureimide, der Benzoxazol-Systeme, der Benzisoxazol-Systeme, der Benzimidazol-Systeme, der durch Heterocyclen substituierten Pyrenderivate und Mischungen daraus ausgewählt.

Besonders bevorzugte optische Aufheller umfassen Dinatrium-4,4'-bis-(2-morpholino-4-anilino-s-triazin-6-ylamino)stilbendisulfonat (beispielsweise erhältlich als Tinopal® DMS von BASF SE), Dinatrium-2,2'-bis-(phenyl-styryl)disulfonat (beispielsweise erhältlich als Tinopal® CBS von BASF SE), 4,4'-Bis[(4-anilino-6-[bis(2-hydroxyethyl)amino]-1,3,5-triazin-2-yl)amino]stilben-2,2'-disulfonsäure (beispielsweise erhältlich als Tinopal® UNPA von BASF SE), Hexanatrium-2,2'-[vinylenbis[(3-sulphonato-4,1-phenylen)imino[6-(diethylamino)-1,3,5-triazin-4,2-diyl]imino]]bis-(benzol-1,4-disulfonat) (beispielsweise erhältlich als Tinopal® SFP von BASF SE), 2,2'-(2,5-Thiophendiyl)bis[5-1,1-dimethylethyl)-benzoxazol (beispielsweise erhältlich als Tinopal® SFP von BASF SE) und/oder 2,5-Bis(benzoxazol-2-yl)thiophen.

Es ist bevorzugt, dass der Farbübertragungsinhibitor ein Polymer oder Copolymer von cyclischen Aminen wie beispielsweise Vinylpyrrolidon und/oder Vinylimidazol ist. Als Farbübertragungsinhibitor geeignete Polymere umfassen Polyvinylpyrrolidon (PVP), Polyvinylimidazol (PVI), Copolymere von Vinylpyrrolidon und Vinylimidazol (PVP/PVI), Polyvinylpyridin-N-oxid, Poly-N-carboxymethyl-4-vinylpyridiumchlorid, Polyethylenglycol-modifizierte Copolymere von Vinylpyrrolidon und Vinylimidazol sowie Mischungen daraus. Besonders bevorzugt werden Polyvinylpyrrolidon (PVP), Polyvinylimidazol (PVI) oder Copolymere von Vinylpyrrolidon und Vinylimidazol (PVP/PVI) als Farbübertragungsinhibitor eingesetzt. Die eingesetzten Polyvinylpyrrolidone (PVP) besitzen bevorzugt ein mittleres Molekular gewicht von 2.500 bis 400.000 und sind kommerziell von ISP Chemicals als PVP K 15, PVP K 30, PVP K 60 oder PVP K 90 oder von der BASF als Sokalan® HP 50 oder Sokalan® HP 53 erhältlich. Die eingesetzten Copolymere von Vinylpyrrolidon und Vinylimidazol (PVP/PVI) weisen vorzugsweise ein Molekulargewicht im Bereich von 5.000 bis 100.000 auf. Kommerziell erhältlich ist ein PVP/PVI-Copolymer beispielsweise von der BASF unter der Bezeichnung Sokalan® HP 56. Ein weiterer äußerst bevorzugt einsetzbarer Farbübertragungsinhibitor sind Polyethylenglycol-modifizierte Copolymere von Vinylpyrrolidon und Vinylimidazol, welche beispielsweise unter der Bezeichnung Sokalan® HP 66 von der BASF erhältlich sind.

Die erfindungsgemäßen Mitteln, insbesondere Geschirrspülmittel enthalten in einer bevorzugten Ausführungsform als weiteren Bestandteil mindestens ein Zinksalz als Glaskorrosionsinhibitor. Bei dem Zinksalz kann es sich hierbei um ein anorganisches oder organisches Zinksalz handeln. Das erfindungsgemäß bevorzugt einzusetzende Zinksalz hat vorzugsweise in Wasser eine Löslichkeit oberhalb 100 mg/l, vorzugsweise oberhalb 500 mg/l, besonders bevorzugt oberhalb 1 g/l und insbesondere oberhalb 5 g/l (alle Löslichkeiten bei 20°C Wassertemperatur). Das anorganische Zinksalz ist vorzugsweise ausgewählt aus der Gruppe bestehend aus Zinkbromid, Zinkchlorid, Zinkiodid, Zinknitrat und Zinksulfat. Das organische Zinksalz ist vorzugsweise ausgewählt aus der Gruppe bestehend aus Zinksalzen monomerer oder polymerer organischer Säuren, insbesondere aus der Gruppe Zinkacetat, Zinkacetylacetonat, Zinkbenzoat, Zinkformiat, Zinklactat, Zinkgluconat, Zinkricinoleat, Zinkabietat, Zinkvalerat und Zink-p-toluolsulfonat. In einer erfindungsgemäß besonders bevorzugten Ausführungsform wird als Zinksalz Zinkacetat eingesetzt. Das Zinksalz ist in erfindungsgemäßen Mitteln vorzugsweise in einer Menge von 0,01 Gew.-% bis 5 Gew.-%, besonders bevorzugt in einer Menge von 0,05 Gew.-% bis 3 Gew.-%, insbesondere in einer Menge von 0,1 Gew.-% bis 2 Gew.-%, enthalten, bezogen auf das Gesamtgewicht des Mittels. Zusätzlich oder alternativ zu den o.g. Salzen (insbesondere den Zinksalzen) können Polyethylenimine, wie sie beispielsweise unter dem Namen Lupasol® (BASF) erhältlich sind, vorzugsweise in einer Menge von 0 bis 5 Gew.-%, insbesondere 0,01 bis 2 Gew.-%, als Glaskorrosionsinhibitoren eingesetzt werden.

Ein dritter Gegenstand der Erfindung ist ein Verfahren zur Behandlung von Substratoberflächen, insbesondere von harten Oberflächen oder textilen Oberflächen, worin mindestens ein erfindungsgemäßes Polymer des ersten Erfindungsgegenstandes auf die Oberfläche aufgebracht wird.

Als bevorzugte Substratoberflächen sind insbesondere Oberflächen von Textilien (textile Oberflächen wie z.B. Kleidung, Gardinen, Polsterüberzüge, Bettwäsche, Handtücher), Glas, Stein (wie z.B. Granit, Marmor), Keramik (wie z.B. Geschirr oder Fliesen), Emaille, Metall (wie z.B. Stahl, Edelstahl) oder Kunststoff zu nennen. Bei dem dem Fachmann bekannten Begriff der harten Oberfläche handelt es sich um nicht oder nur in geringem Maße kompressible Oberflächen, insbesondere um Oberflächen aus Glas, Stein, Keramik, Metall, Emaille oder Hartkunststoff. Bei den harten Oberflächen kann es sich insbesondere um typische, im Haushalt vorkommende Oberflächen (Haushaltsoberflächen) handeln, wie beispielsweise die Oberfläche von Fliesen, Fußböden, Armaturen, Waschbecken, Duschwannen, Badewannen, Toiletten, Duschkabinen, Möbeln wie Tischen, Stühlen, Schränken, Arbeitsflächen oder sonstigen Möbeln, Spiegeln, Fenstern, Geschirr, Besteck, Gläsern, Porzellangegenständen oder die Oberflächen von Haushaltsgeräten wie Waschmaschinen, Geschirrspülmaschinen, Herde oder Dunstabzugshauben. Vorzugsweise wird in dem erfindungsgemäßen Verfahren das erfindungsgemäße Polymer des ersten Erfindungsgegenstandes unter Anwendung eines Mittels des zweiten Erfindungsgegenstandes aufgebracht. Dabei umfasst das erfindungsgemäße Verfahren zur Substratbehandlung besonders bevorzugt die Verfahrensschritte

(a) Bereitstellen einer tensidhaltigen Flotte durch Mischen von 0,5 L bis 40,0 L Wasser mit einem Mittel des zweiten Erfindungsgegenstandes, und

(b) In Kontakt bringen eines Substrats, insbesondere eines Textils oder Geschirr, mit der gemäß (a) hergestellten tensidhaltigen Flotte.

Eine tensidhaltige Flotte ist im Sinne der Erfindung eine durch Einsatz eines tensidhaltigen Mittels unter Verdünnung mit mindestens einem Lösemittel (bevorzugt Wasser) erhältliche, flüssige Zubereitung für die Behandlung eines Substrats. Als Substrat kommen Gewebe oder Textilien (wie z.B. Kleidung) in Frage.

Bevorzugt werden die erfindungsgemäßen Mittel zur Bereitstellung einer tensidhaltigen Flotte im Rahmen maschineller Reinigungsverfahren verwendet, wie sie z.B. von einer Waschmaschine für Textilien oder einer Geschirrspülmaschine ausgeführt werden.

Ein vierter Gegenstand der Erfindung ist die Verwendung mindestens eines erfindungsgemäßen Polymers des

ersten Erfindungsgegenstandes zur Reduktion von Schmutzablagerung auf Oberflächen, insbesondere auf harten Oberflächen oder textilen Oberflächen.

**Beispiele**

Im Rahmen der Experimente wurden folgende Chemikalien eingesetzt:

| | |
|---|---|
| DCM | Dichlormethan |
| THF | Tetrahydrofuran |
| Fmoc-OSu | N-(9-Fluorenylmethoxycarbonyloxy)succinimid |
| DMF | Dimethylformamid |
| PEG | Polyethylenglykol |
| EDC | N-(3-Dimethylaminopropyl)-N'-ethylcarbodiimid |
| TBO | Toluidinblau O |

**1. Synthese von 4-((2-((((9H-Fluoren-9-yl)methoxy)carbonyl)amino)ethyl)(2-(tritylamino)ethyl)amino)-4-oxobutansäure (2)**

**1.1 Synthese von $N^1$-(2-Aminoethyl)-$N^2$-tritylethan-1,2-diamin (1)**

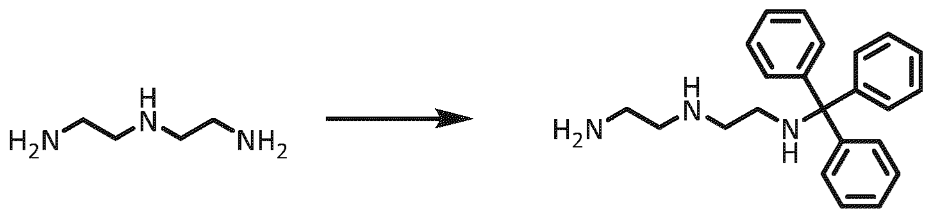

(1)

Zu einer Lösung aus Diethylentriamin (135 ml, 1.25 mol) in 1000 ml DCM wurde eine Lösung aus Tritylchlorid (70 g, 0.25 mol) in 250 ml DCM über einen Zeitraum von 2 Stunden bei 0°C zugetropft. Danach wurde die Reaktion 16 Stunden bei Raumtemperatur gerührt und anschließend die Reaktionslösung mit einer gesättigten NaHCOs-Lösung gewaschen. Die organische Phase wurde über Magnesiumsulfat getrocknet und das Lösungsmittel anschließend am Rotationsverdampfer unter vermindertem Druck entfernt. Das Produkt 1 wurde als braunes Öl mit einer Ausbeute von 87 g (0.25 mol, 100 %) gewonnen.

**1.2 Synthese von 4-((2-((((9H-Fluoren-9-yl)methoxy)carbonyl)amino)ethyl)(2-(tritylamino)ethyl)-amino)-4-oxobutansäure (2)**

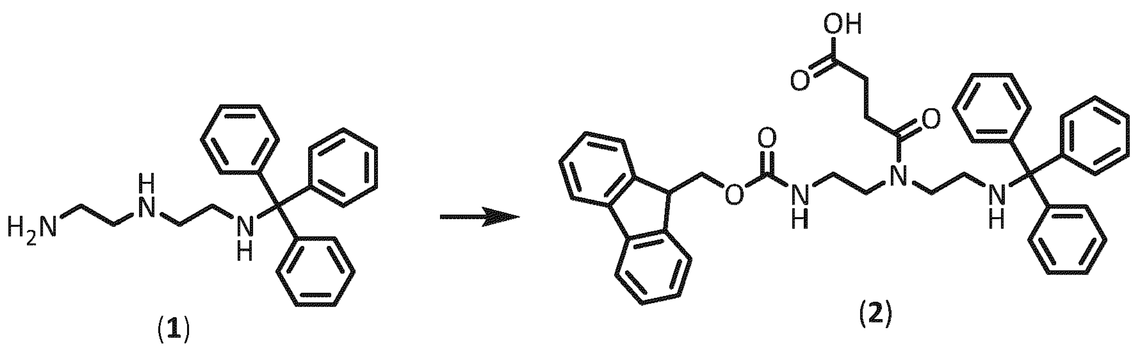

(1) (2)

$N^1$-(2-Aminoethyl)-$N^2$-tritylethan-1,2-diamin (1) (30 g, 87 mmol) wurde in 300 ml THF und 30 ml Triethylamin gelöst. Anschließend wurde bei -78°C eine Lösung aus Fmoc-OSu (29.3 g, 87 mmol) in 300 ml THF über einen Zeitraum von 2 Stunden zugetropft. Danach wurde Bernsteinsäureanhydrid (11.3 g, 113 mmol) hinzugegeben und die Reaktion

16 Stunden bei Raumtemperatur gerührt. Die Reaktionslösung wurde mit einer wässrigen Zitronensäure-Lösung gewaschen und die organische Phase über Magnesiumsulfat getrocknet. Das Lösungsmittel wurde unter vermindertem Druck am Rotationsverdampfer entfernt. Das Rohprodukt wurde in DCM umkristallisiert und das Produkt 2 als weißes Pulver mit einer Ausbeute von 35 g (52 mmol, 60 %) gewonnen.

**2. Synthese von 7-(3-(3,4-dimethoxyphenyl)propanoyl)-1-(9H-fluoren-9-y1)-3,11-dioxo-2-oxa-4,7,10-triazatetradecan-14-oic acid (6)**

**2.1 Synthese von N1-(2-Aminoethyl)-N2-tritylethan-1,2-diamin (1)**

Diese Synthese wird in Punkt 1.1 dieser Beispielsektion beschrieben (vide supra).

**2.2 Synthese von 3-(3,4-Dimethoxyphenyl)propionsäurechlorid (3)**

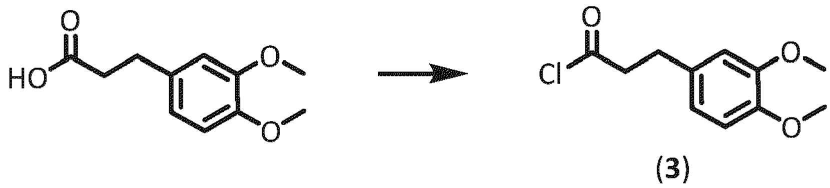

(3)

3-(3,4-Dimethoxyphenyl)-propionsäure (10 g, 48 mmol) wurde in 100 ml DCM und 2 ml DMF gelöst. Die Lösung wurde auf 0°C gekühlt und anschließend Oxalylchlorid (6 ml, 70 mmol) zugegeben. Die Reaktion wurde für 16 Stunden bei Raumtemperatur gerührt. Anschließend wurde das Lösungsmittel unter vermindertem Druck am Rotationsverdampfer abgezogen und das Produkt 3 als rotes Öl mit einer Ausbeute von 12 g (Rohprodukt) gewonnen.

**2.3 Synthese von (9H-Fluoren-9-yl)methyl(2-(3-(3,4-dimethoxyphenyl)-N-(2-(tritylamino)ethyl)propan-amido)ethyl)carbamate (4)**

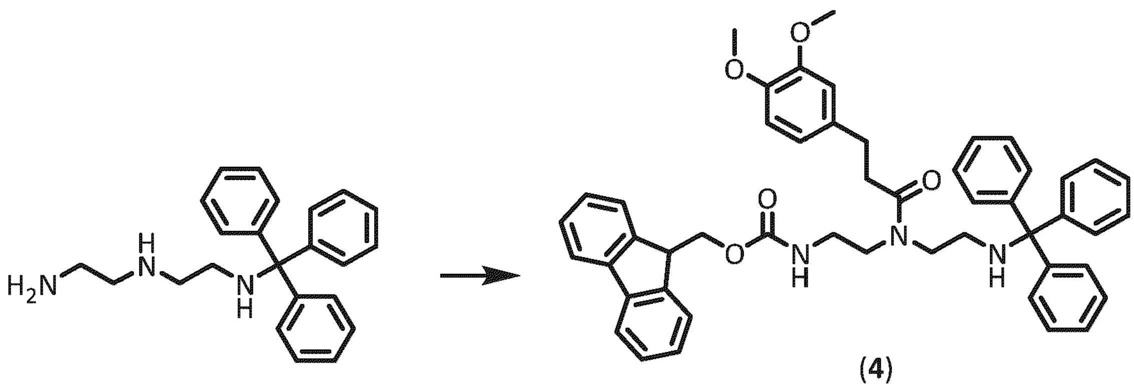

(4)

$N^1$-(2-Aminoethyl)-$N^2$-tritylethan-1,2-diamin (1) (14.8 g, 43 mmol) wurde in 150 ml THF und 15 ml Triethylamin gelöst. Anschließend wurde bei -78°C eine Lösung aus Fmoc-OSu (14.6 g, 43 mmol) in 150 ml THF über einen Zeitraum von 2 Stunden zugetropft. Danach wurde 3-(3,4-Dimethoxyphenyl)propionsäurechlorid (3) (12 g, Rohprodukt) hinzugegeben und die Reaktion 16 Stunden bei Raumtemperatur gerührt. Die Reaktionslösung wurde mit einer gesättigten NaHCOs-Lösung gewaschen und die organische Phase über Magnesiumsulfat getrocknet. Das Lösungsmittel wurde unter vermindertem Druck am Rotationsverdampfer entfernt um das Produkt 4 als braunes Öl mit einer Ausbeute von 40 g (Rohprodukt) zu erhalten.

**2.4 Synthese von (9H-Fluoren-9-yl)methyl(2-(N-(2-aminoethyl)-3-(3,4-dimethoxyphenyl)propan-amido)ethyl)carbamat (5)**

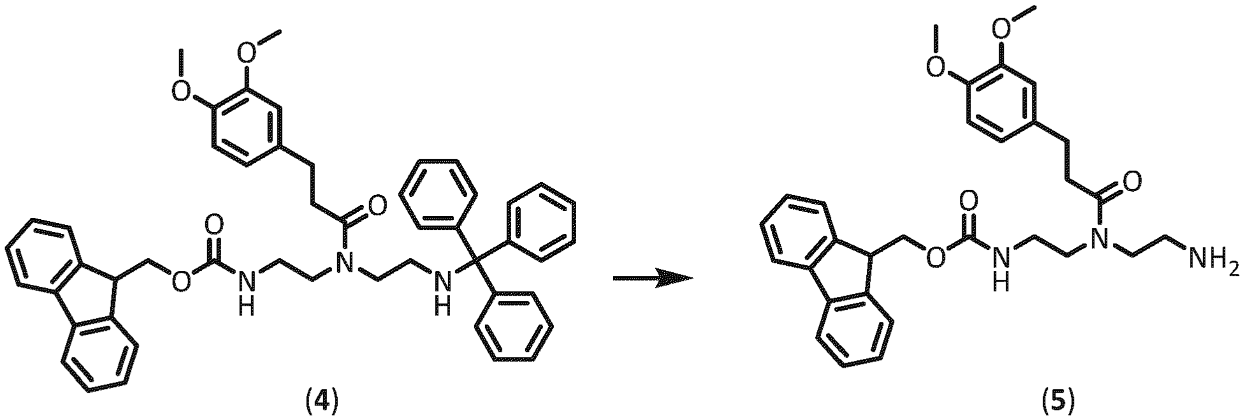

(4) (5)

(9H-Fluoren-9-yl)methyl(2-(3-(3,4-dimethoxyphenyl)-N-(2-(tritylamino)ethyl)propan-amido)ethyl)carbamat **(4)** (40 g, Rohprodukt) wurde in 600 ml DCM gelöst. Danach wurden 70 ml Trifluoressigsäure und 7 ml Triethylsilan zugegeben. Die Reaktion wurde 2 Stunden bei Raumtemperatur gerührt. Anschließend wurde die Reaktionslösung in Diethylether gefällt. Nach abdekantieren des Diethylethers wurde das Produkt **5** mit einer Ausbeute von 35 g (Rohprodukt) als braunes Öl gewonnen.

**2.5 Synthese von 7-(3-(3,4-dimethoxyphenyl)propanoyl)-1-(9H-fluoren-9-yl)-3,11-dioxo-2-oxa-4,7,10-triazatetradecan-14-oic acid (6)**

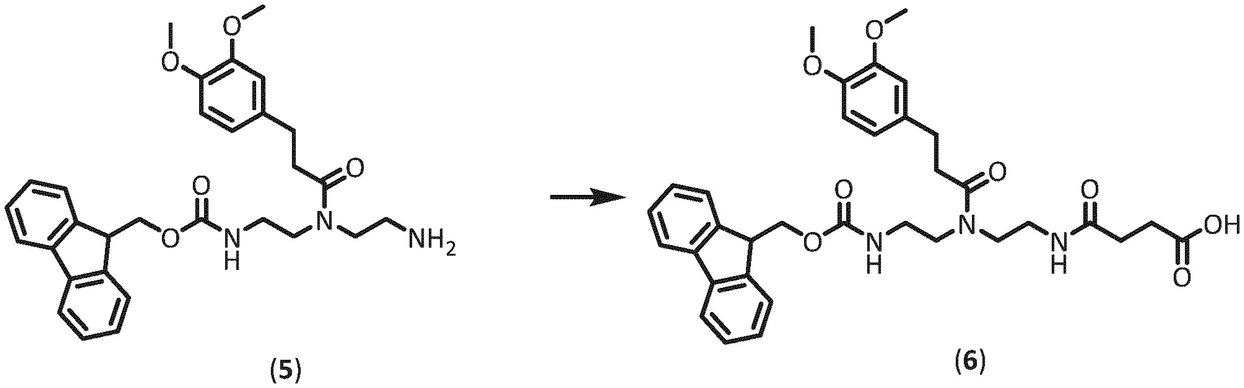

(5) (6)

(9H-Fluoren-9-yl)methyl(2-(N-(2-aminoethyl)-3-(3,4-dimethoxyphenyl)propanamido)ethyl)carbamat **(5)** (35 g, Rohprodukt) wurde in 500 ml DCM und 20 ml Triethylamin gelöst. Anschließend wurde Bernsteinsäureanhydrid (5.5 g, 55 mmol) hinzugegeben und die Reaktion 16 Stunden bei Raumtemperatur gerührt. Danach wurde die Reaktionslösung mit einer wässrigen Zitronensäure-Lösung gewaschen und die organische Phase über Magnesiumsulfat getrocknet. Das Lösungsmittel wurde unter vermindertem Druck am Rotationsverdampfer entfernt und das Rohprodukt in Aceton und Toluol in einem Verhältnis von 1:1 umkristallisiert. Das Produkt **6** wurde als weißes Pulver mit einer Ausbeute von 12 g (19.5 mmol, 45 %) erhalten.

**3. Polymersynthese an der Festphase**

Unter Einsatz der unter Punkt 1 und 2 dieser Beispielsektion synthetisierten Bausteine, wurden nach dem Protokoll aus Ponader, Daniela, et al. "Sequence-defined glycopolymer segments presenting mannose: synthesis and lectin binding affinity." Biomacromolecules 13.6 (2012): 1845-1852 (vgl. insbesondere S.1848, 2. Spalte vorletzter Absatz

und Scheme 1) an der Festphase (kommerziell erhältliches Tentagel S Ram Resin) zu Polymeren aufgebaut.

Falls die an die Festphase gebundene Polymere eine Trityl-Schutzgruppe enthielten, wurde der Trityl-Baustein vor der Abspaltung von der Festphase an der Festphase nach Palladino, Pasquale, and Dmitry A. Stetsenko. "New TFA-free cleavage and final deprotection in Fmoc solid-phase peptide synthesis: dilute Hel in fluoro alcohol." Organic letters 14.24 (2012): 6346-6349 selektiv entschützt. Nach dem Entschützen wurde das freie Amin mit folgenden Säuren umgesetzt um ein entsprechendes tertiäres Amin bzw. primäres Amid zu erhalten.

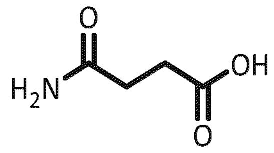

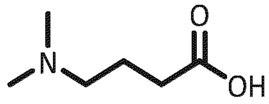

Dabei wurde analog zu Punkt 2.5 *(vide supra)* vorgegangen. Als letzten Schritt wurden die Methoxy-Schutzgruppen unter Freisetzung der Catechol-Hydroxygruppen nach bekannter Vorschrift *(vide supra)* entschützt.

Folgende Polymere wurden nach oben beschriebener Methode aus den Monomeren 4-((2-((((9H-Fluoren-9-yl)methoxy)carbonyl)amino)ethyl)(2-(tritylamino)ethyl)-amino)-4-oxobutansäure (2), 7-(3-(3,4-dimethoxyphenyl)propanoyl)-1-(9H-fluoren-9-yl)-3,11-dioxo-2-oxa-4,7,10-triazatetradecan-14-oic acid (6) und 1-(9H-Fluoren-9-yl)-3,14-dioxo-2,7,10-trioxa-4,13-diazaheptadecan-17-oic acid (Darstellung siehe: Biomacromolecules 13.6 (2012): 1845-1852 in den Supporting Information) synthetisiert:

| Polymer | Sequenz |
|---|---|
| VP1 | $H_2N$-CO-(Cat)-(EDS)-(EDS)-(EDS)-(EDS)-(EDS)-$NH_2$ |
| EP1 | $H_2N$-CO-(IIc-Amin)-(EDS)-(Cat)-(EDS)-(EDS)-(EDS)-$NH_2$ |
| EP2 | $H_2N$-CO-(Cat)-(EDS)-(IIc-Amin)-(EDS)-(Cat)-(EDS)-$NH_2$ |
| EP3 | $H_2N$-CO-(IId-Amid)-(EDS)-(Cat)-(EDS)-(EDS)-(EDS)-$NH_2$ |
| EP4 | $H_2N$-CO-(Cat)-(EDS)-(IId-Amid)-(EDS)-(Cat)-(EDS)-$NH_2$ |
| EP5 | $H_2N$-CO-(Cat)-(EDS)-(Cat)-(EDS)-(EDS)-(EDS)-$NH_2$ |

## 4. Bestimmung der Adhäsionsenergie des erfindungsgemäßen Polymers mittels Adhäsionssonde an Modelloberflächen

Um die Güte der Adhäsion der erfindungsgemäßen Polymere zu prüfen, können die für diesen Zweck dem Fachmann bekannten Kontaktwinkelbestimmungen durchgeführt werden (vgl. R.S. Hebbar, A.M. Isloor, A.F. Ismail in: "Membrane Charaterization" (Elsevier Verlag), ISBN 978-0-444-63776-5, Erschienen: 2017, Pages 219-255).

Es ist aber auch möglich durch die die Nutzung von mit den erfindungsgemäßen Polymeren versehenen Adhäsionssonden die Adhäsionsenergie über die Reflektions-Inteferenz-Kontrast-Mikroskopie (RICM) zu messen und die Adhäsionsenergien daraus mit dem Modell von Johnson, Kendall und Roberts (JKR) zu bestimmen. Diese ebenso dem Fachmann bekannte Methode wurde wie nachfolgend beschrieben an den erfindungsgemäßen Polymeren durchgeführt.

### 4.1 Erstellung von Adhäsionssonden mit erfindungsgemäßen Polymeren:

#### 4.1.1 Synthese von Poly(ethylenglykol)-diacrylamid Hydrogelpartikel

Poly(ethylenglykol) basierte, deformierbare Hydrogelpartikel wurden durch Dispersionspolymerisation hergestellt. Dazu wurde PEG-diacrylamid (Mn = 8000 g/mol) (50 mg) zunächst in 5 ml Wasser vollständig gelöst und dann 5 ml einer 2 M Natriumsulfatlösung hinzugegeben, um eine Dispersion der Konzentration 0.5 wt-% PEG zu erhalten. Das PEG-diacrylamid wurde zuvor nach einer bereits von Hartmann et al. publizierten Synthese dargestellt (Biomed. Mater. Res., Part B, 2011, 98B, 8-17). Als UV Photoinitiator wurde Irgacure 2959 verwendet und in einer Konzentration von 0.01 wt-% (1 mg) in die Dispersion gegeben, geschüttelt und im Anschluss unter UV-Bestrahlung (Hereaus HiLite) für 180 s photopolymerisiert.

#### 4.1.2 Funktionalisierung der Hydrogelpartikel mit Crotonsäure als Kupplungsgruppe

Wasser als kontinuierliche Phase der Poly(ethylenglykol)-diacrylamid Dispersion wurde durch Ethanol ersetzt

und Benzophenon (3 wt%, 250 mg) sowie Crotonsäure (19 wt%, 1.5 g) dazugegeben. Danach wurde die Dispersion 60 s mit Stickstoff gespült und anschließend für 90 s mit UV Licht bestrahlt. Dieser Vorgang wurde 10 mal wiederholt. Die Hydrogelpartikel wurden je dreimal mit Ethanol, Ethanol-Wasser im Volumenverhältnis 1:1 und mit Wasser gewaschen und in Wasser bei 4 °C gelagert (Abbildung 2).

4.1.3 Funktionalisierung der Hydrogelpartikel mit erfindungsgemäßen Polymeren oder Vergleichspolymeren

Zur Funktionalisierung der Crotonsäure-funktionalisierten Hydrogelpartikel wurde das Wasser gegen 2-(N-Morpholino)ethansulfonsäurepuffer (MES, pH 4.5, 0.1 M) durch mehrfaches Zentrifugieren/Waschen getauscht. Danach wurden die Hydrogelpartikel (0.02 g) in 2 mL MES-Puffer dispergiert. Das zu fixierende Polymer (33 mg) wurde in 5 mL des MES-Puffers gelöst und zur Hydrogelpartikeldispersion gegeben. Als Kupplungsreagenz zur Aktivierung der Crotonsäure wurde *N*-(3-Dimethylaminopropyl)-*N'*-ethylcarbodiimid (EDC) Hydrochlorid verwendet. EDC wurde zunächst in der Konzentration 10 wt-% (100 mg) in Reinstwasser gelöst und dann in die Dispersion gegeben. Die Reaktion wurde bei Raumtemperatur für 2 h unter Schütteln durchgeführt. Im Anschluss wurde die Reaktionslösung durch Zentrifugation entfernt und der Funktionalisierungsschritt ein zweites Mal wiederholt. Im Anschluss wurden die Partikel dreimal mit Wasser gewaschen und in Wasser bei 4 °C gelagert.

Der Funktionalisierungsgrad der mit (erfindungsgemäßem Polymer)-funktionalisierten Hydrogelpartikel wurde mittels Einfärbung mit dem Farbstoff Toluidinblau O bestimmt. Dieser kationische Farbstoff bindet an Carboxylgruppen und zeigt so über einen Vergleich der Einfärbung von Crotonsäurehydrogelpartikeln und mit (erfindungsgemäßem) Polymer-funktionalisierten Hydrogelpartikel den Polymer-Funktionalisierungsgrad. Hierzu wurden 0.2 mL der jeweiligen Partikel in 1.5 mL Eppendorf Tubes® (Eppendorf, Deutschland) gegeben und zentrifugiert. Der Überstand wurde entfernt und 0.2 mL einer 0.3125 M TBO-Lösung bei pH 10.5 (NaOH) zu den Partikeln gegeben. Die Eppendorf Tubes® wurden in Aluminiumfolie gewickelt und für 18 h geschüttelt. Im Anschluss wurden die Hydrogelpartikel zentrifugiert, der Überstand entfernt und mit 1 mL in Wasser bei pH 10.5 (NaOH) gewaschen. Zur Quantifizierung der Färbung wurde optische Mikroskopie (Olympus IX73, Olympus Europa SE & Co. KG) mit einer CMOS Kamera (DMK 23UX174, Imaging Source Europe GmbH) durchgeführt. Die Differenzen der Grauwerte der Crotonsäure- und mit (erfindungsgemäßem) Polymer-funktionalisierten Hydrogelpartikel ergeben die relativen Funktionalisierungsgrade. Der absolute Funktionalisierungsgrad der Crotonsäure-Hydrogelpartikel (Beispiel 1B) wurde zuvor kolorimetrisch mittels UV Titration mit TBO bestimmt. Mit der beschriebenen Prozedur zur Crotonsäurefunktionalisierung ergibt sich typischerweise ein Funktionalisierungsgrad 90 μmol/g.

Es wurden nach obiger Vorschrift Hydrogelpartikel mit folgenden Polymeren funktionalisiert:

| Hydrogelpartikel | Polymer | zur Funktionalisierung genutztes Polymer |
|---|---|---|
| H1 | Vergleichspolymer | VP1 |
| H2 | erfindungsgemäß | EP1 |
| H3 | erfindungsgemäß | EP2 |

**4.2 Bestimmung des Elastizitätsmoduls der Hydrogelpartikel**

Es wurden Kraft-Deformationskurven mit Hilfe von Colloidal-Probe AFM der mit erfindungsgemäßem Polymer funktionalisierten Hydrogelpartikel gemessen und mit dem Hertzmodell analysiert:

$$F = 4/3 \cdot R^{1/2} \cdot E \cdot D/(1-v^2)$$

wobei *F* die Kraft, D die Deformation, *v* das Poissonverhältnis ist. R, der effektive Radius berechnet sich aus den Radien des Hydrogelpartikels und der kolloidalen AFM Sonde. Die Hydrogelpartikel zeigen durchschnittliche Elastizitätsmodule von 100 ± 18 kPa. Die Messungen wurden mit einem Nanowizard II (JPK Instruments AG) und selbst angefertigten Colloidal Probe Cantilevern (CSC 38, Mikromash, Bulgarien) durchgeführt. Zur Herstellung der Colloidal Probe Cantilever wurden Mikropartikel (R = 4.8 μm, Microparticles GmbH) an die Cantilever mit Epoxidharz geklebt (UHU Plus Schnellfest, UHU GmbH & Co. KG).

### 4.3 Präparation von Modelloberflächen für Glas und Baumwolle

4.3.1 Präparation von Glasoberflächen

Als Glasoberfläche für die Adhäsionmessungen wurden μ-Slide 8 Well Glass Bottom (ibidi GmbH, Planegg/Martinsried Deutschland) verwendet. Zur Vorbereitung wurde ein μ-Slide 8 Well Glass Bottom in einem UV Ozone Cleaner UVC.1014 (NanoBioAnalytics, Deutschland) für 30 Minuten gereinigt.

4.3.2 Präparation von zelluloseimitierenden Oberflächen

Zur Präparation von zelluloseimitierenden Oberflächen wurde eine Glasoberfläche in eine Lösung aus Ethanol (200 mL), Wasser (10.5 mL), Essigsäure (0.2 mL) und (3-Glycidyloxypropyl)trimethoxysilan (2.1 mL) gegeben und für 2 h bei Raumtemperatur reagiert. Im Anschluss wurde die Oberfläche mit Ethanol gewaschen und bei 80 °C für 12 h in einem Trockenschrank getempert. Zur weiteren Funktionalisierung wurden 0.3 mL einer D-Cellobiose- oder Carboxymethylcelluloselösung (1 wt%) in Phosphatpuffer (10 mM, pH 8.0-8.5) in die Kammern der μ-Slides gegeben. Nach 2 h Reaktion bei Raumtemperatur wurde die Lösung entfernt und die Oberflächen dreimal mit Wasser gewaschen.

## 5. Adhäsionsenergie Bestimmung

### 5.1 Bestimmung der Adhäsionsenergie zwischen Adhäsionssonden und Oberflächen

Beispielhaft ist hier die Analyse der Adhäsion eines Polymers mit zwei Catecholeinheiten auf Glas (Abbildung 3 A) und auf D-Cellobiose (Abbildung 3 B) gezeigt. Als Messmedien wurde Phosphatpuffer (pH 8.0, 10 mM) für Glasoberflächen und verdünnte NaOH (pH 8.5) für Cellobioseoberflächen verwendet. Zur Bestimmung der Adhäsionsenergien wurde das entsprechende Polymer wie unter Punkt 4 beschrieben *(vide supra)* an Hydrogelpartikel gebunden und die Adhäsionsflächen der Hydrogele auf der jeweiligen Oberfläche mit Hilfe der Reflektions-Inteferenz-Kontrast-Mikroskopie (RICM) analysiert. Anschließend wurden die Adhäsionsenergien mit dem Modell von Johnson, Kendall und Roberts (JKR) ausgewertet:

$$a^3=6\pi*(W_{adh}/E_{eff})*R^2.$$

Hierbei ist a der Kontaktradius, $W_{adh}$ die Adhäsionsenergie, $R$ der Hydrogelpartikelradius und $E_{eff}$ das effektive Elastizitätsmodul $E_{eff}$=[4$E$/3(1-$v^2$)].

RICM wurde mit einem inversen Mikroskop Olympus IX73 (Olympus IX73, Olympus Europa SE & Co. KG) bei einer Wellenlänge von 533 nm (LED Beleuchtung, COP1-A Thorlabs GmbH) durchgeführt. Zur Erzeugung der Interferenzmuster wurde ein Filterwürfel mit einem semitransparenten Spiegel, einer Viertelwellenplatte und Polarisatoren (optische Bauteile Thorlabs GmbH) verwendet. Zur Aufnahme der RICM Interferenzmuster wurde ein Olympus UplanFL N 60x/0.90 Objektiv (Olympus Europa SE & Co. KG) und eine Imagingsource DMK 23UX174 (Imaging Source Europe GmbH) Kamera verwendet. Zur Durchführung der Berechnungen nach dem JKR-Modell wurden die Radien der Kontaktfläche und der Partikel gemessen (Abbildung 1). Dazu wurden Bilder der Interferenzmuster zunächst mit Mikromanager (v1.4.16, Open Imaging Inc.) aufgenommen und die Interferenzprofile mit einem selbstgeschriebenen Bilderkennungsprogramm automatisch generiert. Die Berechnung der Kontaktradien und Adhäsionsenergien wurde dann durch eine skriptbasierte Analyse mit dem Programm IgorPro (WaveMetrics, USA) durchgeführt. Für einen Datenpunkt wurden mindestens 10 Kontaktflächen und Partikelradien gemessen, gegeneinander aufgetragen und mit dem JKR-Modell gefittet (Abbildung 3 C). Die Polymer-funktionalisierten Hydrogelpartikel zeigen in etwa gleich große Adhäsionsenergien auf der Glas-, bzw. Cellobioseoberfläche.

Es wurde ebenso die Adhäsionsenergie in RICM der untersuchten Polymere gemäß obigem Protokoll aus einer Waschlauge (Persil Color® (Firma Henkel AG & Co. KGaA) verdünnt auf 4,1 g/L) auf die Cellobiosemodeloberfläche bestimmt. Nachfolgend wird dabei die bestimmte Adhäsionsenergie in RICM gegen das Verhältnis von Catechol zu Amin des jeweiligen Hydrogelpartikels (H1) bis (H3) angegeben

| Verhältnisse der Funktionalitäten Catechol/Amin | Hydrogelpartikel | Adhäsionsenergie [μmol/$m^2$) |
|---|---|---|
| 1/0 | (H1) | 0 |
| 1/1 | (H2) | 310 |

(fortgesetzt)

| Verhältnisse der Funktionalitäten Catechol/Amin | Hydrogelpartikel | Adhäsionsenergie [$\mu$mol/m²] |
|---|---|---|
| 2/1 | (H3) | 370 |

## Patentansprüche

1. Polymer, enthaltend mindestens eine Wiederholungseinheit der Formel (I) und mindestens eine Wiederholungseinheit der Formel (II) und gegebenenfalls weitere Wiederholungseinheiten,

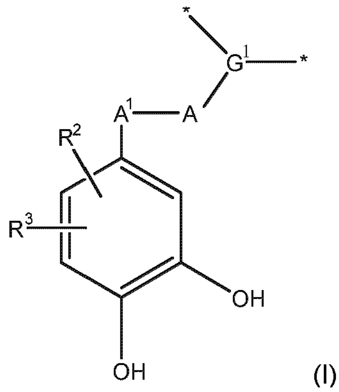
(I)

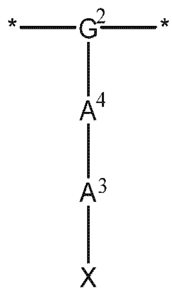
(II)

worin G1 und G2 unabhängig voneinander eine zum Polymerrückgrat beitragende Struktureinheit bedeuten,
$G^1$ die Formel *-(C=O)-Z-(C=O)-NR'-$CH_2CH_2$-(N-Rest)-$CH_2CH_2$-NR'-* aufweist, wobei jedes R' unabhängig für H oder $C_1$-$C_4$-Alkyl, Z für eine $C_2$-$C_8$-Alkandiylgruppe, bevorzugt für Ethan-1,2-diyl, steht und "Rest" für den über A/A1 gebundenen Dihydroxyphenylrest gemäß Formel (I) steht,
$G^2$ die Formel *-(C=O)-$Z^1$-(C=O)-NR'-$CH_2CH_2$-(N-Rest)-$CH_2CH_2$-NR'-* aufweist, wobei jedes R' unabhängig für H oder $C_1$-$C_4$-Alkyl, Z für eine $C_2$-$C_8$-Alkandiylgruppe, bevorzugt für Ethan-1,2-diyl, steht und "Rest" für -$A^4$-$A^3$-X steht,
A und $A^4$ unabhängig voneinander eine Spacergruppe einer Seitenkette des Polymers oder eine direkte Bindung bedeuten,
$A^1$ eine Anknüpfungsgruppe des Catecholrestes aus Formel (I) an die Spacergruppe A oder eine direkte Bindung bedeutet,
$A^3$ eine Anknüpfungsgruppe der Gruppe X an die Spacergruppe $A^4$ oder eine direkte Bindung bedeutet,
$R^2$ und $R^3$ unabhängig voneinander stehen für ein Wasserstoffatom, eine $C_1$-$C_4$-Alkylgruppe, eine $C_2$-$C_4$-Hydroxyalkylgruppe, eine $C_1$-$C_4$-Alkoxygruppe, ein Halogenatom, eine Sulfonsäuregruppe, eine $C_1$-$C_{10}$-Alkylcarbonyloxy-Gruppe, eine $C_1$-$C_{10}$-Alkoxycarbonylgruppe, eine $C_6$-$C_{10}$-Aryloxycarbonyl-Gruppe, eine $C_6$-$C_{10}$-Arylcarbonyloxy-Gruppe, $C_2$-$C_{10}$-Alkenylcarbonyloxy-Gruppe, eine $C_2$-$C_{10}$-Alkenyloxycarbonylgruppe, eine Hydroxylgruppe, eine Aminogruppe, eine Ammoniumgruppe,
X für eine Aminogruppe -N($R^5$)($R^6$) oder eine Ammonio-Gruppe -$N^+$($R^5$)($R^6$)($R^7$) 1/n $An^{n-}$ steht,
worin $R^5$, $R^6$ und $R^7$ jeweils unabhängig voneinander für ein Wasserstoffatom, eine $C_1$-$C_4$-Alkylgruppe oder eine $C_2$-$C_4$-Hydroxyalkylgruppe stehen und 1/n $An^{n-}$ ein Äquivalent eines n-wertigen Anions, bevorzugt mit n = 1 bedeuten,
mit der Maßgabe, dass die Wiederholungseinheiten der Formel (II) von den Wiederholungseinheiten der Formel (I) verschieden sind und das Molverhältnis der Einheiten der Formel (I) zu den Einheiten der Formel (II) im Bereich von 0.5 zu 1 bis 4 zu 1, bevorzugt 1 zu 1 bis 2 zu 1, beträgt.

2. Polymer gemäß Anspruch 1, **dadurch gekennzeichnet, dass** mindestens eines von A und $A^1$ und/oder mindestens eines von $A^3$ und $A^4$ für eine Spacergruppe steht.

3. Polymer gemäß Anspruch 1 oder 2, **dadurch gekennzeichnet, dass**

(1) A gemäß Formel (I) für eine Carbonylgruppe, für eine Carbonyloxygruppe, für eine Carbonyliminogruppe,

für eine Iminogruppe, für eine $C_1$-$C_4$-Alkylenoxygruppe, für eine $C_1$-$C_4$-Alkyleniminogruppe, vorzugsweise eine Carbonylgruppe, steht; und/oder
(2) $A^4$ gemäß Formel (II) für eine Carbonylgruppe, für eine Carbonyloxygruppe, für eine Carbonyliminogruppe, für eine Iminogruppe, für eine $C_1$-$C_4$-Alkylenoxygruppe, für eine $C_2$-$C_6$-$\alpha,\omega$-(Dioxo)alkan- $\alpha,\omega$-diytgruppe, für eine $C_1$-$C_4$-Alkyleniminogruppe, für eine $C_1$-$C_4$-Alkyleniminocarbonylgruppe, vorzugsweise für eine Carbonylgruppe, steht.

**4.** Polymer gemäß einem der vorangehenden Ansprüche, **dadurch gekennzeichnet, dass**

(1) $A^1$ gemäß Formel (I) für eine direkte Bindung, für eine $C_1$-$C_4$-Alkandiylgruppe, eine $C_1$-$C_4$-Alkylenoxycarbonylgruppe, vorzugsweise für eine $C_1$-$C_4$-Alkandiylgruppe, steht; und/oder
(2) $A^3$ gemäß Formel (II) für eine direkte Bindung, eine $C_1$-$C_6$-Alkandiylgruppe, eine $C_2$-$C_6$-$\alpha,\omega$-(Dioxo)alkan-$\alpha,\omega$-diylgruppe, vorzugsweise für eine $C_1$-$C_6$-Alkandiylgruppe, steht.

**5.** Polymer gemäß einem der vorangehenden Ansprüche, **dadurch gekennzeichnet, dass** es als Wiederholungseinheit der Formel (I) mindestens eine Wiederholungseinheit der Formel (I-a) enthält,

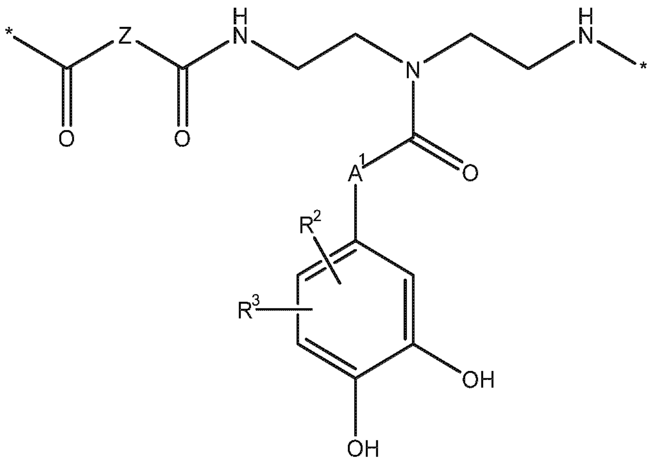
(I-a)

worin

$A^1$ für eine $C_1$-$C_4$-Alkandiylgruppe (bevorzugt für Ethan-1,2-diyl) steht,
Z für eine $C_2$-$C_8$-Alkandiylgruppe (bevorzugt für Ethan-1,2-diyl) steht,
$R^2$ und $R^3$ unabhängig voneinander stehen für ein Wasserstoffatom, eine $C_1$-$C_4$-Alkylgruppe, eine $C_2$-$C_4$-Hydroxyalkylgruppe, eine $C_1$-$C_4$-Alkoxygruppe, ein Halogenatom, eine Sulfonsäuregruppe (bevorzugt jeweils für ein Wasserstoffatom) stehen.

**6.** Polymer gemäß einem der vorangehenden Ansprüche, **dadurch gekennzeichnet, dass** es als Wiederholungseinheit der Formel (II)

(1) mindestens eine Wiederholungseinheit der Formel (II-a) enthält,

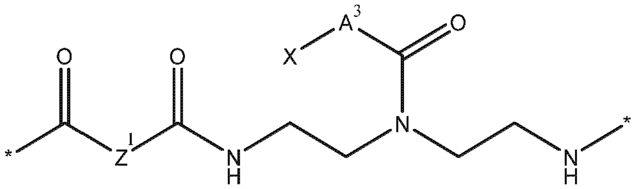
(II-a)

worin

$A^3$ eine $C_1$-$C_6$-Alkandiyl-Gruppe bedeutet,
$Z^1$ für eine $C_2$-$C_8$-Alkandiylgruppe (bevorzugt für Ethan-1 ,2-diyl) steht,

X für eine Aminogruppe $-N(R^5)(R^6)$ oder eine Ammonio-Gruppe $-N^+(R^5)(R^6)(R^7)$ 1/n $An^{n-}$ steht, worin $R^5$, $R^6$ und $R^7$ jeweils unabhängig voneinander für ein Wasserstoffatom, eine $C_1$-$C_4$-Alkylgruppe oder eine $C_2$-$C_4$-Hydroxyalkylgruppe stehen und 1/n $An^{n-}$ ein Äquivalent eines n-wertigen Anions, bevorzugt mit n = 1 bedeuten; und/oder

(2) mindestens eine Wiederholungseinheit der Formel (II-b) enthält,

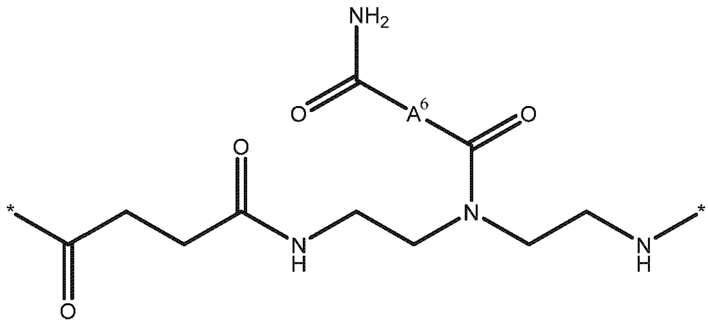

(II-b)

worin $A^6$ für eine ($C_2$ bis $C_6$)-Alkandiylgruppe steht; und/oder
(3) mindestens eine Wiederholungseinheit der Formel (II-c) enthält,

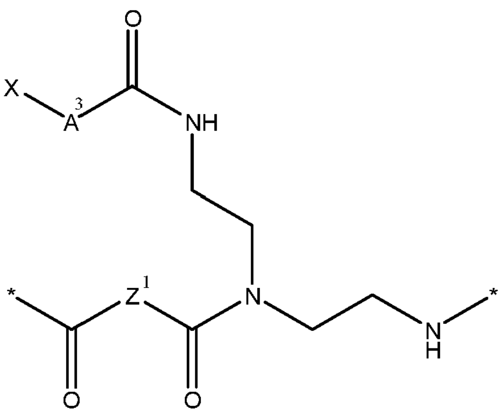

(II-c)

worin

$A^3$ eine $C_1$-$C_6$-Alkandiyl-Gruppe bedeutet,
$Z^1$ für eine $C_2$-$C_8$-Alkandiylgruppe (bevorzugt für Ethan-1 ,2-diyl) steht,
X für eine Aminogruppe $-N(R^5)(R^6)$ oder eine Ammonio-Gruppe $-N^+(R^5)(R^6)(R^7)$ 1/n $An^{n-}$ steht, worin $R^5$, $R^6$ und $R^7$ jeweils unabhängig voneinander für ein Wasserstoffatom, eine $C_1$-$C_4$-Alkylgruppe oder eine $C_2$-$C_4$-Hydroxyalkylgruppe stehen und 1/n $An^{n-}$ ein Äquivalent eines n-wertigen Anions, bevorzugt mit n = 1 bedeuten; und/oder

(4) mindestens eine Wiederholungseinheit der Formel (II-d) enthält,

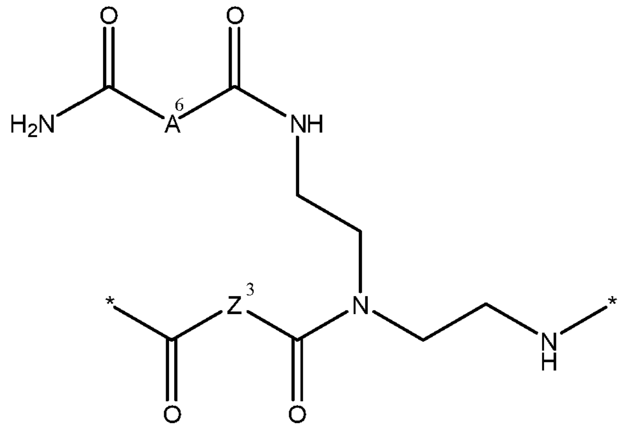

(II-d)

worin $A^6$ für eine ($C_2$ bis $C_6$)-Alkandiylgruppe steht, insbesondere für Ethan-1,2-diyl, Propan-1,3-diyl, Butan-1,4-diyl, Propan-1,2-diyl, Butan-1,2-diyl, Butan-1,3-diyl, Pentan-1,5-diyl oder Hexan-1,6-diyl,
$Z^3$ für eine $C_2$-$C_8$-Alkandiylgruppe (bevorzugt für Ethan-1 ,2-diyl) steht.

**7.** Polymer nach einem der Ansprüche 1 bis 6, **dadurch gekennzeichnet, dass** es als, bevorzugt einzige, weitere Wiederholungseinheit mindestens eine Struktureinheit der Formel (III) enthält,

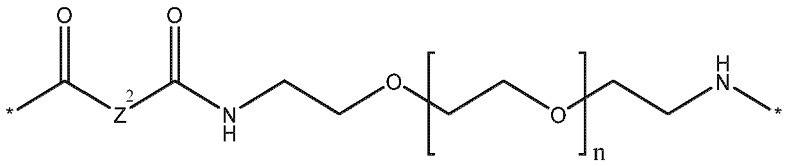

(III)

wobei n eine Zahl von 1 bis 10 bedeutet und $Z^2$ für eine $C_2$-$C_8$-Alkandiylgruppe, bevorzugt für Ethan-1,2-diyl, steht.

**8.** Mittel zur Behandlung von Oberflächen, insbesondere von harten Oberflächen oder Textilien, **dadurch gekennzeichnet, dass** es mindestens ein Polymer nach einem der Ansprüche 1 bis 7 und mindestens ein Tensid enthält.

**9.** Verfahren zur Behandlung von Substratoberflächen, insbesondere von harten Oberflächen oder textilen Oberflächen, worin mindestens Polymer gemäß einem der Ansprüche 1 bis 7 oder mindestens ein Mittel gemäß Anspruch 8 auf die Oberfläche aufgebracht wird.

**10.** Verwendung mindestens eines Polymers nach einem der Ansprüche 1 bis 7 oder eines Mittels nach Anspruch 8 zur Reduktion von Schmutzablagerung auf Oberflächen, insbesondere auf harten Oberflächen oder textilen Oberflächen.

### Claims

**1.** A polymer containing at least one repeating unit of formula (I) and at least one repeating unit of formula (II) and optionally further repeating units,

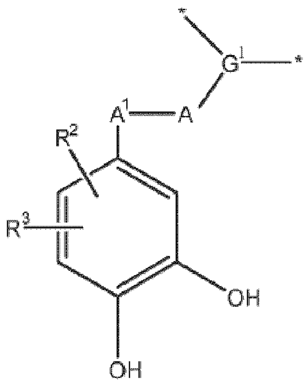

(I)

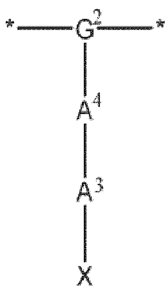

(II)

where G1 and G2, independently of one another, denote a structural unit which contributes to the polymer backbone,
$G^1$ has the formula -(C=O)-Z-(C=O)-NR'-$CH_2CH_2$-(N-functional group)-$CH_2CH_2$-NR'-*, where each R' independently represents H or $C_1$-$C_4$ alkyl, Z represents a $C_2$-$C_8$ alkanediyl group, preferably ethane-1,2-diyl, and "functional group" represents the dihydroxyphenyl functional group according to formula (I) that is bonded via A/A1,
$G^2$ has the formula *-(C=O)-Z'-(C=O)-NR'-$CH_2CH_2$-(N-functional group)-$CH_2CH_2$-NR'-*, where each R' independently represents H or $C_1$-$C_4$ alkyl, Z represents a $C_2$-$C_8$ alkanediyl group, preferably ethane-1,2-diyl, and "functional group" represents -$A^4$-$A^3$-X,
A and $A^4$, independently of one another, denote a spacer group of a side chain of the polymer or a direct bond,
$A^1$ denotes a linking group of the catechol functional group from formula (I) to the spacer group A or a direct bond,
$A^3$ denotes a linking group of the group X to the spacer group $A^4$ or a direct bond,
$R^2$ and $R^3$, independently of one another, represent a hydrogen atom, a $C_1$-$C_4$ alkyl group, a $C_2$-$C_4$ hydroxyalkyl group, a $C_1$-$C_4$ alkoxy group, a halogen atom, a sulfonic acid group, a $C_1$-$C_{10}$ alkylcarbonyloxy group, a $C_1$-$C_{10}$ alkoxycarbonyl group, a $C_6$-$C_{10}$ aryloxycarbonyl group, a $C_6$-$C_{10}$ arylcarbonyloxy group, $C_2$-$C_{10}$ alkenylcarbonyloxy group, a $C_2$-$C_{10}$ alkenyloxycarbonyl group, a hydroxyl group, an amino group, an ammonium group,
X represents an amino group -N($R^5$)($R^6$) or an ammonio group - $N^+$($R^5$)($R^6$)($R^7$) 1/n An"-,
where $R^5$, $R^6$ and $R^7$ each, independently of one another, represent a hydrogen atom, a $C_1$-$C_4$ alkyl group or a $C_2$-$C_4$ hydroxyalkyl group and 1/n $An^n$-represents an equivalent of an n-valent anion, preferably with n = 1,
with the proviso that the repeating units of formula (II) are different from the repeating units of formula (I) and the molar ratio of the units of formula (I) to the units of formula (II) is in the range of from 0.5 to 1 to 4 to 1, preferably 1 to 1 to 2 to 1.

2. The polymer according to claim 1, **characterized in that** at least one of A and $A^1$ and/or at least one of $A^3$ and $A^4$ represents a spacer group.

3. The polymer according to claim 1 or 2, **characterized in that**

(1) A according to formula (I) represents a carbonyl group, a carbonyloxy group, a carbonylimino group, an imino group, a $C_1$-$C_4$ alkyleneoxy group or a $C_1$-$C_4$ alkyleneimino group, preferably a carbonyl group; and/or
(2) $A^4$ according to formula (II) represents a carbonyl group, a carbonyloxy group, a carbonylimino group, an imino group, a $C_1$-$C_4$ alkyleneoxy group, a $C_2$-$C_6$-$\alpha,\omega$-(dioxo)alkane-$\alpha,\omega$-diyl group, a $C_1$-$C_4$ alkyleneimino group or a $C_1$-$C_4$ alkyleneiminocarbonyl group, preferably a carbonyl group.

4. The polymer according to one of the preceding claims, **characterized in that**

(1) $A^1$ according to formula (I) represents a direct bond, a $C_1$-$C_4$ alkanediyl group, a $C_1$-$C_4$ alkyleneoxycarbonyl group, preferably a $C_1$-$C_4$ alkanediyl group; and/or
(2) $A^3$ according to formula (II) represents a direct bond, a $C_1$-$C_6$ alkanediyl group, a $C_2$-$C_6$-$\alpha,\omega$-(dioxo)alkane-$\alpha,\omega$-diyl group, preferably a $C_1$-$C_6$ alkanediyl group.

5. The polymer according to one of the preceding claims, **characterized in that** it contains at least one repeating unit of formula (I-a) as the repeating unit of formula (I),

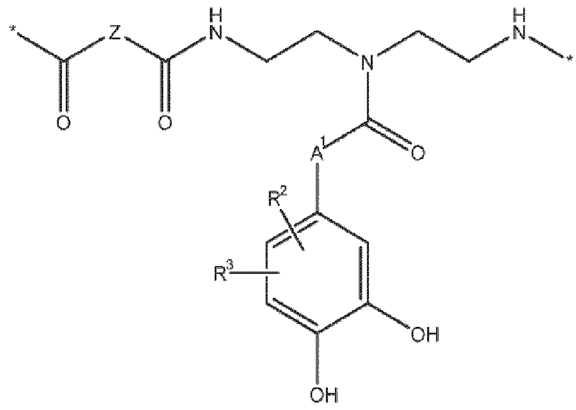

(I-a)

where

A¹ represents a $C_1$-$C_4$ alkanediyl group (preferably ethane-1,2-diyl),
Z represents a $C_2$-$C_8$ alkanediyl group (preferably ethane-1,2-diyl),
$R^2$ and $R^3$, independently of one another, represent a hydrogen atom, a $C_1$-$C_4$ alkyl group, a $C_2$-$C_4$ hydroxyalkyl group, a $C_1$-$C_4$ alkoxy group, a halogen atom, a sulfonic acid group (preferably in each case a hydrogen atom).

**6.** The polymer according to one of the preceding claims, **characterized in that,** as a repeating unit of formula (II), it

(1) contains at least one repeating unit of formula (II-a),

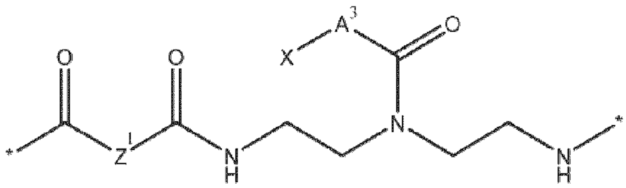

(II-a)

where

$A^3$ represents a $C_1$-$C_6$ alkanediyl group,
$Z^1$ represents a $C_2$-$C_8$ alkanediyl group (preferably ethane-1,2-diyl),
X represents an amino group $-N(R^5)(R^6)$ or an ammonio group - $N^+(R^5)(R^6)(R^7)$ 1/n An"-,
where $R^5$, $R^6$ and $R^7$ each, independently of one another, represent a hydrogen atom, a $C_1$-$C_4$ alkyl group or a $C_2$-$C_4$ hydroxyalkyl group and 1/n $An^{n-}$ represents an equivalent of an n-valent anion, preferably with n = 1; and/or

(2) contains at least one repeating unit of formula (II-b),

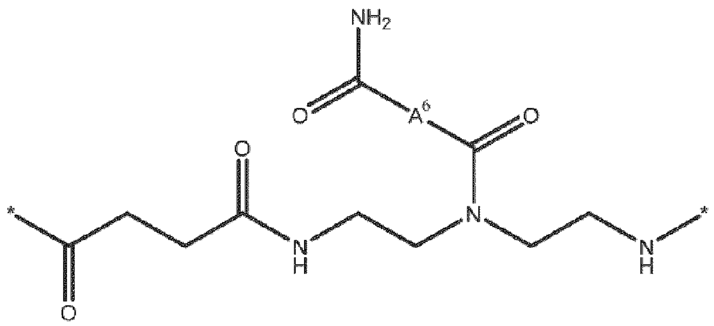

(II-b)

where $A^6$ represents a ($C_2$ to $C_6$) alkanediyl group; and/or
(3) contains at least one repeating unit of formula (II-c),

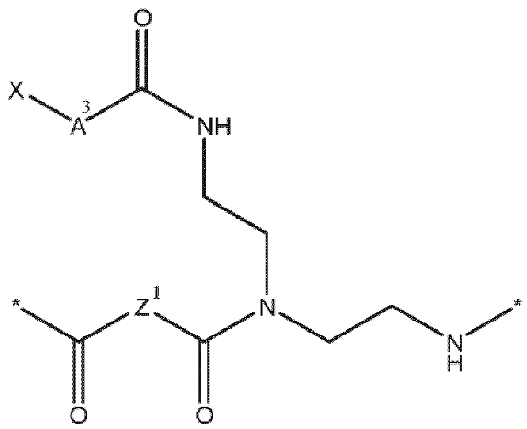

(II-c)

where

$A^3$ represents a $C_1$-$C_6$ alkanediyl group,
$Z^1$ represents a $C_2$-$C_8$ alkanediyl group (preferably ethane-1,2-diyl),
X represents an amino group $-N(R^5)(R^6)$ or an ammonio group - $N^+(R^5)(R^6)(R^7)$ 1/n An"-,
where $R^5$, $R^6$ and $R^7$ each, independently of one another, represent a hydrogen atom, a $C_1$-$C_4$ alkyl group or a $C_2$-$C_4$ hydroxyalkyl group and 1/n $An^{n-}$ represents an equivalent of an n-valent anion, preferably with n = 1; and/or

(4) contains at least one repeating unit of formula (II-d),

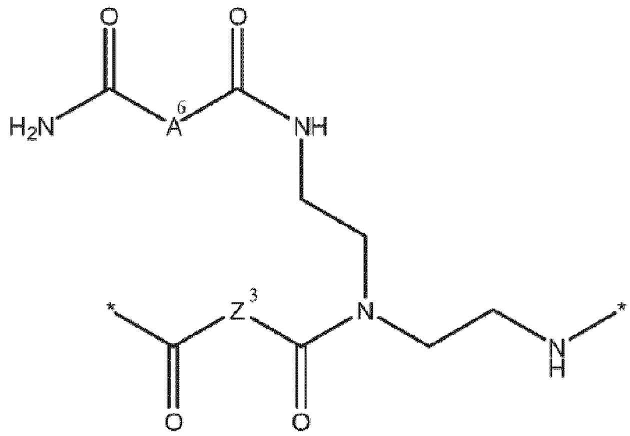

(II-d)

where $A^6$ represents a ($C_2$ to $C_6$) alkanediyl group, in particular ethane-1,2-diyl, propane-1,3-diyl, butane-1,4-diyl, propane-1,2-diyl, butane-1,2-diyl, butane-1,3-diyl, pentane-1,5-diyl or hexane-1,6-diyl,
$Z^3$ represents a $C_2$-$C_8$ alkanediyl group (preferably ethane-1,2-diyl).

**7.** The polymer according to one of claims 1 to 6, **characterized in that** it contains at least one structural unit of formula (III) as a further, preferably only further, repeating unit,

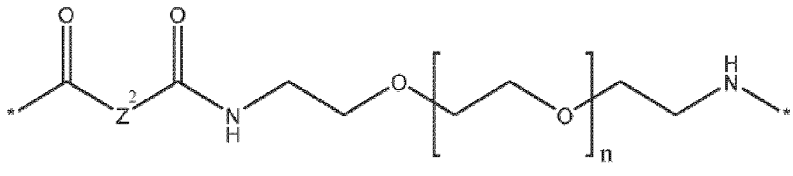

(III)

where n denotes a number from 1 to 10 and $Z^2$ denotes a $C_2$-$C_8$ alkanediyl group, preferably ethane-1,2-diyl.

8. An agent for the treatment of surfaces, in particular hard surfaces or textiles, **characterized in that** it contains at least one polymer according to one of claims 1 to 7 and at least one surfactant.

9. A method for the treatment of substrate surfaces, in particular hard surfaces or textile surfaces, wherein at least one polymer according to one of claims 1 to 7 or at least one agent according to claim 8 is applied to the surface.

10. A use of at least one polymer according to one of claims 1 to 7 or an agent according to claim 8 for reducing dirt deposits on surfaces, in particular on hard surfaces or textile surfaces.

## Revendications

1. Polymère, contenant au moins un motif de répétition de formule (I) et au moins un motif de répétition de formule (II) et éventuellement d'autres motifs de répétition,

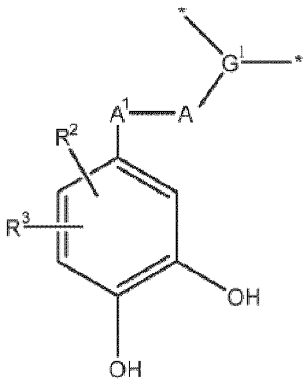

(I)

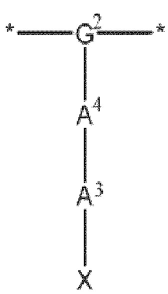

(II)

où G1 et G2 représentent indépendamment l'un de l'autre un motif structural contribuant au squelette du polymère,

$G^1$ présente la formule *-(C=O)-Z-(C=O)-NR'-$CH_2CH_2$-(N-radical)-$CH_2CH_2$-NR'-*, où chaque R' représente indépendamment H ou un groupe alkyle en $C_1$-$C_4$, Z représente un groupe alcanediyle en $C_2$-$C_8$, de préférence éthane-1,2-diyle, et « radical » représente le radical dihydroxyphényle lié par l'intermédiaire de A/A1 selon la formule (I),

$G^2$ présente la formule *-(C=O)-$Z^1$-(C=O)-NR'-$CH_2CH_2$-(N-radical)-$CH_2CH_2$-NR'-*, où chaque R' représente indépendamment H ou un groupe alkyle en $C_1$-$C_4$, Z représente un groupe alcanediyle en $C_2$-$C_8$, de préférence éthane-1,2-diyle, et « radical » représente -$A^4$-$A^3$-X,

A et $A^4$ représentent indépendamment l'un de l'autre un groupe espaceur d'une chaîne latérale du polymère ou une liaison directe,

$A^1$ représente un groupe de rattachement du radical catéchol de formule (I) au groupe espaceur A ou une liaison directe,

$A^3$ représente un groupe de rattachement du groupe X au groupe espaceur $A^4$ ou une liaison directe,

$R^2$ et $R^3$ représentent indépendamment l'un de l'autre un atome d'hydrogène, un groupe alkyle en $C_1$-$C_4$, un groupe hydroxyalkyle en $C_2$-$C_4$, un groupe alcoxy en $C_1$-$C_4$, un atome d'halogène, un groupe acide sulfonique, un groupe alkylcarbonyloxy en $C_1$-$C_{10}$, un groupe alcoxycarbonyle en $C_1$-$C_{10}$, un groupe aryloxycarbonyle en $C_6$-$C_{10}$, un groupe arylcarbonyloxy en $C_6$-$C_{10}$, un groupe alcénylcarbonyloxy en $C_2$-$C_{10}$, un groupe alcényloxycarbonyle en $C_2$-$C_{10}$, un groupe hydroxyle, un groupe amino, un groupe ammonium,

X représente un groupe amino -N($R^5$)($R^6$) ou un groupe ammonio - $N^+$($R^5$)($R^6$)($R^7$) 1/n An"-,

où $R^5$, $R^6$ et $R^7$ représentent respectivement indépendamment les uns des autres un atome d'hydrogène, un groupe alkyle en $C_1$-$C_4$ ou un groupe hydroxyalkyle en $C_2$-$C_4$, et 1/n $An^{n-}$ représente un équivalent d'un anion de valence n, de préférence avec n = 1,
à condition que les motifs de répétition de formule (II) soient différents des motifs de répétition de formule (I) et que le rapport molaire des motifs de formule (I) aux motifs de formule (II) se situe dans la plage allant de 0,5 à 1 à 4 à 1, de préférence de 1 à 1 à 2 à 1.

2. Polymère selon la revendication 1, **caractérisé en ce qu'**au moins l'un parmi A et $A^1$ et/ou au moins l'un parmi $A^3$ et $A^4$ représentent un groupe espaceur.

3. Polymère selon la revendication 1 ou 2, **caractérisé en ce que**

(1) A selon la formule (I) représente un groupe carbonyle, un groupe carbonyloxy, un groupe carbonylimino, un groupe imino, un groupe alkylèneoxy en $C_1$-$C_4$, un groupe alkylèneimino en $C_1$-$C_4$, de préférence un groupe carbonyle ; et/ou
(2) $A^4$ selon la formule (II) représente un groupe carbonyle, un groupe carbonyloxy, un groupe carbonylimino, un groupe imino, un groupe alkylèneoxy en $C_1$-$C_4$, un groupe $\alpha,\omega$-(dioxo)alcane-$\alpha,\omega$-diyle en $C_2$-$C_6$, un groupe alkylèneimino en $C_1$-$C_4$, un groupe alkylèneiminocarbonyle en $C_1$-$C_4$, de préférence un groupe carbonyle.

4. Polymère selon l'une des revendications précédentes,
**caractérisé en ce que**

(1) $A^1$ selon la formule (I) représente une liaison directe, un groupe alcanediyle en $C_1$-$C_4$, un groupe alkylèneoxycarbonyle en $C_1$-$C_4$, de préférence un groupe alcanediyle en $C_1$-$C_4$ ; et/ou
(2) $A^3$ selon la formule (II) représente une liaison directe, un groupe alcanediyle en $C_1$-$C_6$, un groupe $\alpha,\omega$-(dioxo)alcane-$\alpha,\omega$-diyle en $C_2$-$C_6$, de préférence un groupe alcanediyle en $C_1$-$C_6$.

5. Polymère selon l'une des revendications précédentes,
**caractérisé en ce qu'il** contient, en tant que motif de répétition de formule (I), au moins un motif de répétition de formule (I-a),

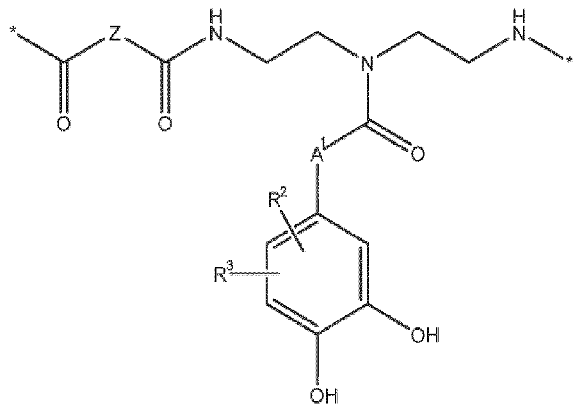

(I-a)

où

$A^1$ représente un groupe alcanediyle en $C_1$-$C_4$ (de préférence éthane-1,2-diyle),
Z représente un groupe alcanediyle en $C_2$-$C_8$ (de préférence éthane-1,2-diyle),
$R^2$ et $R^3$ représentent indépendamment l'un de l'autre un atome d'hydrogène, un groupe alkyle en $C_1$-$C_4$, un groupe hydroxyalkyle en $C_2$-$C_4$, un groupe alcoxy en $C_1$-$C_4$, un atome d'halogène, un groupe acide sulfonique (de préférence représentent respectivement un atome d'hydrogène).

6. Polymère selon l'une des revendications précédentes,
**caractérisé en ce qu'**il contient, en tant que motif de répétition de formule (II),

(1) au moins un motif de répétition de formule (II-a),

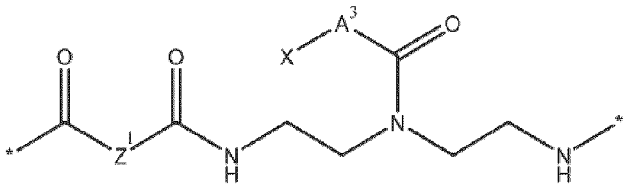
(II-a)

où

$A^3$ représente un groupe alcanediyle en $C_1$-$C_6$,
$Z^1$ représente un groupe alcanediyle en $C_2$-$C_8$ (de préférence éthane-1,2-diyle),
X représente un groupe amino -N($R^5$)($R^6$) ou un groupe ammonio - $N^+$($R^5$)($R^6$)($R^7$) 1/n An"-,
où $R^5$, $R^6$ et $R^7$ représentent respectivement indépendamment les uns des autres un atome d'hydrogène, un groupe alkyle en $C_1$-$C_4$ ou un groupe hydroxyalkyle en $C_2$-$C_4$, et 1/n $An^{n-}$ représente un équivalent d'un anion de valence n, de préférence avec n = 1 ; et/ou

(2) au moins un motif de répétition de formule (II-b),

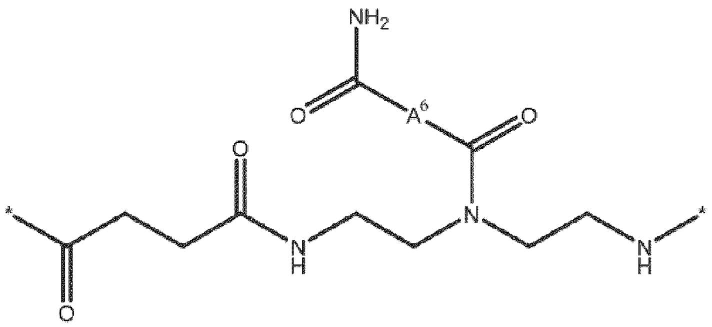
(II-b)

où $A^6$ représente un groupe alcanediyle (en $C_2$-$C_6$) ; et/ou
(3) au moins un motif de répétition de formule (II-c),

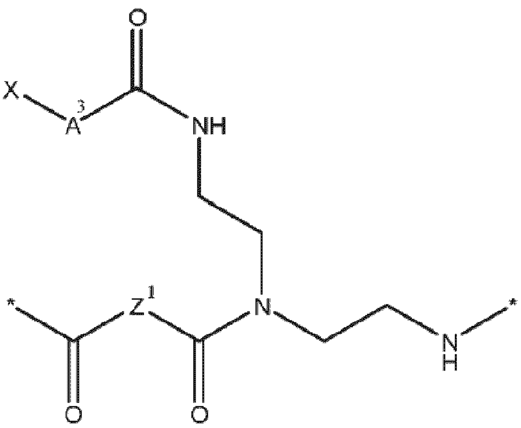
(II-c)

où

$A^3$ représente un groupe alcanediyle en $C_1$-$C_6$,
$Z^1$ représente un groupe alcanediyle en $C_2$-$C_8$ (de préférence éthane-1,2-diyle),
X représente un groupe amino -N($R^5$)($R^6$) ou un groupe ammonio - $N^+$($R^5$)($R^6$)($R^7$) 1/n An"-,
où $R^5$, $R^6$ et $R^7$ représentent respectivement indépendamment les uns des autres un atome d'hydrogène, un groupe alkyle en $C_1$-$C_4$ ou un groupe hydroxyalkyle en $C_2$-$C_4$, et 1/n $An^{n-}$ représente un équivalent d'un anion de valence n, de préférence avec n = 1 ; et/ou

(4) au moins un motif de répétition de formule (II-d),

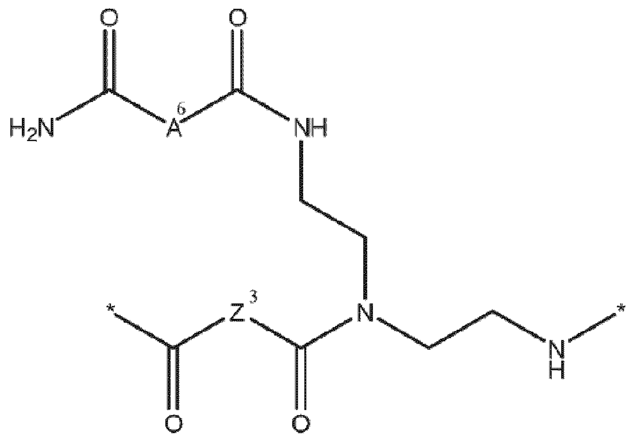

(II-d)

où $A^6$ représente un groupe alcanediyle (en $C_2$-$C_6$), en particulier éthane-1,2-diyle, propane-1,3-diyle, butane-1,4-diyle, propane-1,2-diyle, butane-1,2-diyle, butane-1,3-diyle, pentane-1,5-diyle ou hexane-1,6-diyle,
$Z^3$ représente un groupe alcanediyle en $C_2$-$C_8$ (de préférence éthane-1,2-diyle).

7. Polymère selon l'une des revendications 1 à 6, **caractérisé en ce qu'**il contient, en tant que motif de répétition supplémentaire, de préférence unique, au moins un motif structural de formule (III),

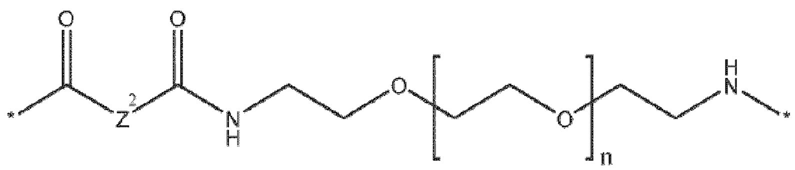

(III)

où n représente un nombre allant de 1 à 10 et $Z^2$ représente un groupe alcanediyle en $C_2$-$C_8$, de préférence éthane-1,2-diyle.

8. Agent pour le traitement de surfaces, en particulier de surfaces dures ou de textiles, **caractérisé en ce qu'**il contient au moins un polymère selon l'une des revendications 1 à 7 et au moins un tensioactif.

9. Procédé pour le traitement de surfaces de substrats, en particulier de surfaces dures ou de surfaces textiles, dans lequel au moins un polymère selon l'une des revendications 1 à 7 ou au moins un agent selon la revendication 8 est appliqué sur la surface.

10. Utilisation d'au moins un polymère selon l'une des revendications 1 à 7 ou d'un agent selon la revendication 8 pour la réduction du dépôt de salissures sur des surfaces, en particulier sur des surfaces dures ou des surfaces textiles.

## Abbildung 1

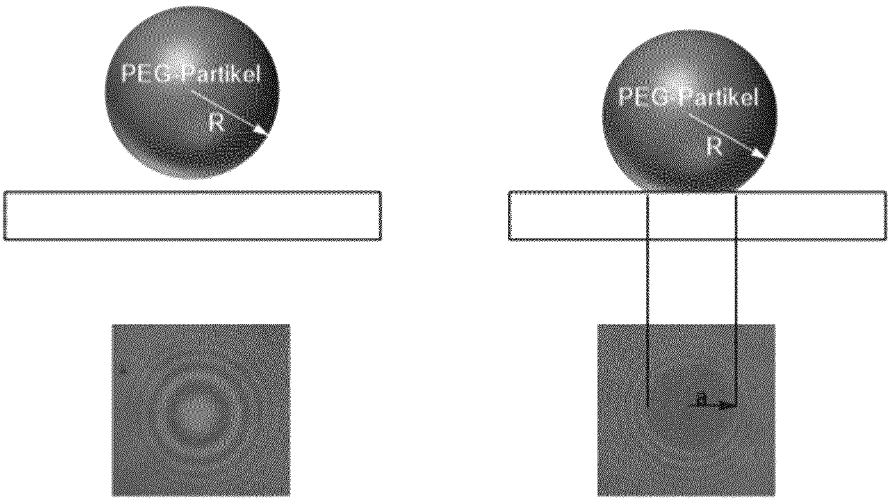


## Abbildung 2

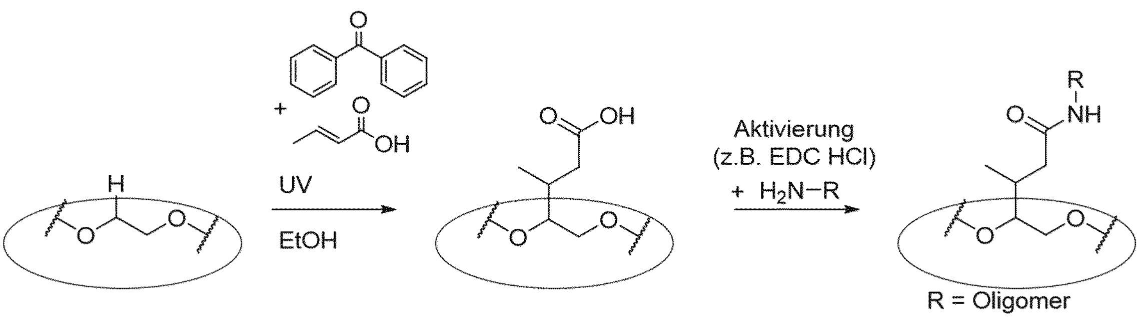

# Abbildung 3

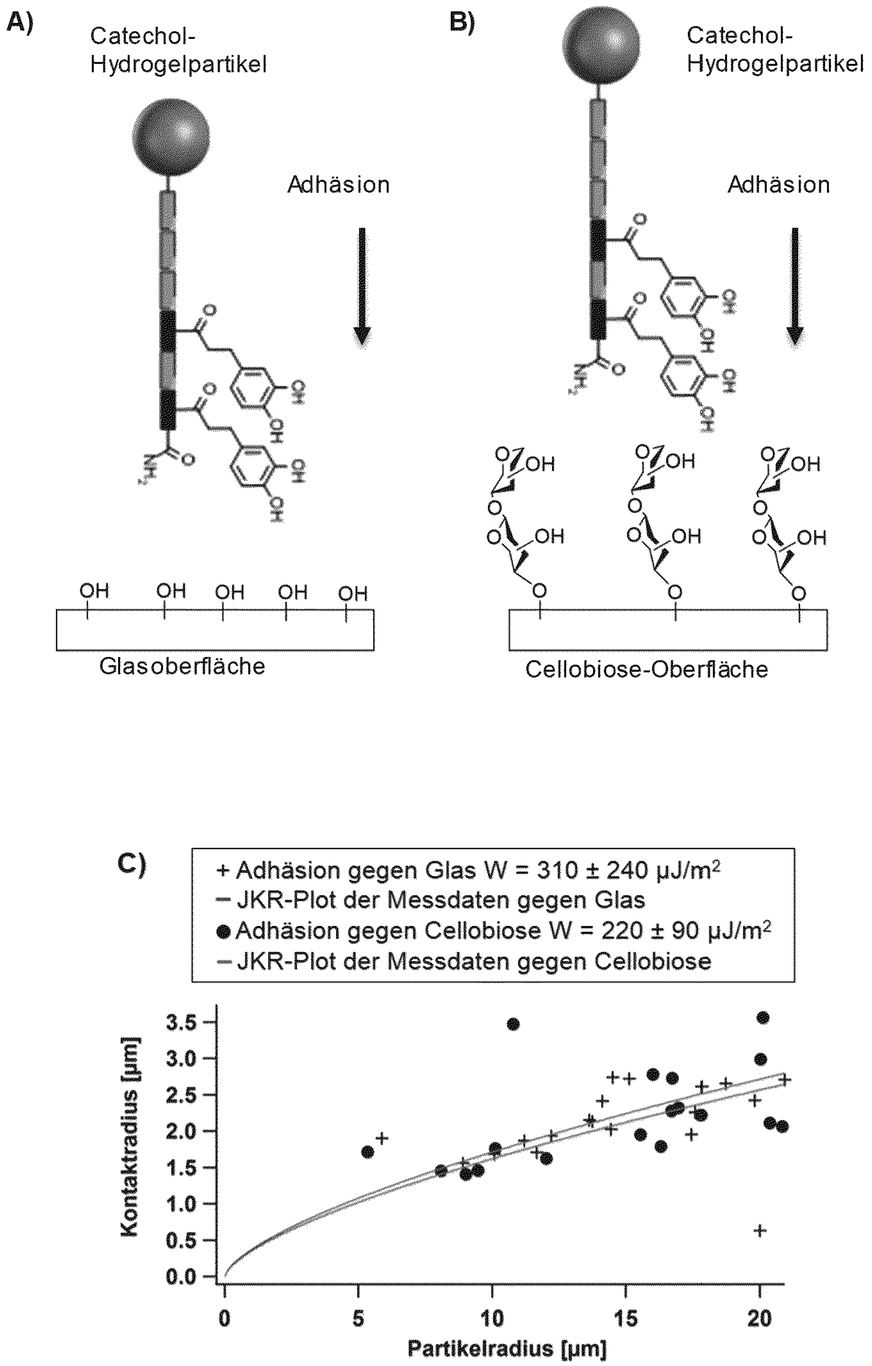
A)
Catechol-
Hydrogelpartikel
Adhäsion
Glasoberfläche
B)
Catechol-
Hydrogelpartikel
Adhäsion
Cellobiose-Oberfläche
C)
+ Adhäsion gegen Glas W = 310 ± 240 μJ/m2
JKR-Plot der Messdaten gegen Glas
● Adhäsion gegen Cellobiose W = 220 ± 90 μJ/m2
JKR-Plot der Messdaten gegen Cellobiose
Kontaktradius [μm]
3.5
3.0
2.5
2.0
1.5
1.0
0.5
0.0
0
5
10
15
20
Partikelradius [μm]

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2005070866 A2
- US 6605270 A
- EP 2885220 B1
- EP 2885221 B1


### In der Beschreibung aufgeführte Nicht-Patentliteratur


- *Dopa/Catechol-Tethered Polymers: Bioadhesives and Biomimetic Adhesive Materials in der Fachzeitschrift Polymer Reviews,* 05. Mai 2014, vol. 54 (3), 436-513
- **HANS-DIETER JAKUBKE ; HANS JESCHKEIT.** Aminosäuren, Peptide, Proteine. Verlag Chemie, 1982, 130-131
- **E. ATHERTON ; C. BURY ; R. C. SHEPPARD ; B. J. WILLIAMS.** *Tetrahedron Lett.,* 1979, 3041
- **KISO, YOSHIAKI et al.** Deprotection of O-methyltyrosine by a 'push-pull'mechanism using the thioanisole-trifluoromethanesulphonic acid system. Application to the convenient synthesis of a potent N-methylenkephalin derivative. *Journal of the Chemical Society, Chemical Communications,* 1979, vol. 21, 971-972
- **K. OGURA ; G.-I. TSUCHIHASHI.** *Tetrahedron Lett.,* 1971, 3151
- **EBBESEN, M. F. et al.** Biodegradable poly(amidoamine)s with uniform degradation fragments via sequence-controlled macromonomers. *Polymer Chemistry,* 2016, vol. 7 (46), 7086-7093
- Sequence-defined glycopolymer segments presenting mannose: synthesis and lectin binding affinity. *Biomacromolecules,* 2012, vol. 13 (6), 1845-1852
- **GERKE, CHRISTOPH et al.** Sequence-controlled glycopolymers via step-growth polymerization of precision glycomacromolecules for lectin receptor clustering. *Biomacromolecules,* 2017, vol. 18 (3), 787-796
- **NA LIN et al.** *Nucleic Acids Research,* 2007, vol. 35 (4), 1222-1229
- **PONADER, DANIELA et al.** Sequence-defined glycopolymer segments presenting mannose: synthesis and lectin binding affinity. *Biomacromolecules,* 2012, vol. 13 (6), 1845-1852
- **PALLADINO, PASQUALE ; DMITRY A. STETSENKO.** New TFA-free cleavage and final deprotection in Fmoc solid-phase peptide synthesis: dilute Hel in fluoro alcohol. *Organic letters,* 2012, vol. 14 (24), 6346-6349
- *Biomacromolecules,* 2012, vol. 13 (6), 1845-1852
- **R.S. HEBBAR ; A.M. ISLOOR ; A.F. ISMAIL.** Membrane Charaterization. Elsevier Verlag, 2017, 219-255
- *Biomed. Mater. Res.,* 2011, vol. 98B, 8-17